# EUROPÄISCHE PATENTSCHRIFT

(11) **EP 0 748 850 B1**
(45) Veröffentlichungstag und Bekanntmachung des Hinweises auf die Patenterteilung: **04.07.2001**
(21) Anmeldenummer: 96810366.3
(22) Anmeldetag: 05.06.1996
(51) Int. Cl.: C09B 62/04, C09B 62/44, C09B 67/22, C09B 1/46, C09B 19/02, C09B 43/16, C09B 47/04, C09B 50/00

(54) **Farbstoffe, Verfahren zu deren Herstellung und deren Verwendung**
Dyestuffs, process for their preparation and their use
Des colorants, leur procédé de préparation et leur utilisation

(30) Priorität: 14.06.1995 CH 176695
(43) Veröffentlichungstag der Anmeldung: 18.12.1996
(73) Patentinhaber: Ciba Specialty Chemicals Holding Inc., 4057 Basel (CH)
(72) Erfinder: Müller, Bernhard, Dr., 79588 Efringen-Kirchen (DE); Nowack, Patric, 79540 Lörrach (DE)

(56) Entgegenhaltungen:
- EP-A- 0 581 732
- EP-A- 0 693 538
- WO-A-93/18224

## Beschreibung

Die vorliegende Erfindung betrifft neue Farbstoffe, Verfahren zu deren Herstellung und deren Verwendung zum Färben oder Bedrucken von Fasermaterialien.

Die Praxis des Färbens mit Farbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Farbstoffen, welche verbesserte Eigenschaften, insbesondere in bezug auf die Applikation, aufweisen.

Für das Färben werden heute Farbstoffe gefordert, die eine ausreichende Löslichkeit und Substantivität haben und die im Falle von Reaktivfarbstoffen zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

In der WO-A-9 318 224 werden Farbstoffe offenbart, in denen zwei Farbstoffreste über Lineare Polyetherdiaminobrücken verknüpft sind.

Der vorliegenden Erfindung liegt daher die Aufgabe zugrunde, neue, verbesserte Farbstoffe für das Färben und Bedrucken von Fasermaterialien zu finden, welche die oben charakterisierten Qualitäten in hohem Masse besitzen. Im Falle von Reaktivfarbstoffen sollten sich die Farbstoffe vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Ferner sollten die Farbstoffe Färbungen mit guten Allgemeinechtheiten, beispielsweise Licht- und Nassechtheiten, ergeben.

Es hat sich gezeigt, dass mit den weiter unten definierten Farbstoffen die gestellte Aufgabe weitgehend gelöst wird.

Gegenstand der Erfindung sind daher Farbstoffe der Formel 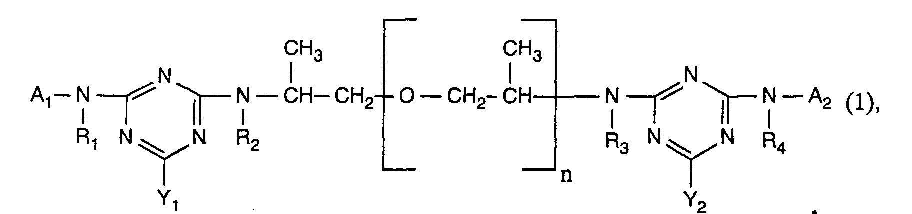 worin
A₁ und A₂ unabhängig voneinander der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes sind,
R₁, R₂, R₃ und R₄ unabhängig voneinander Wasserstoff oder gegebenenfalls substituiertes C₁-C₄-Alkyl sind,
Y₁ und Y₂ unabhängig voneinander Halogen, Carboxypyridinium, gegebenenfalls substituiertes Amino oder einen über ein Stickstoffatom gebundenen heterocyclischen Rest bedeuten, und
n eine Zahl von 1 bis 7 ist.

Die Reste R₁, R₂, R₃ und R₄ in den Farbstoffen der Formel (1) sind als Alkylreste geradkettig oder verzweigt; die Alkylreste können weitersubstituiert sein, z.B. durch Halogen, Hydroxy, Cyan, C₁-C₄-Alkoxy, C₁-C₄-Alkoxycarbonyl, Carboxy, Sulfamoyl, Sulfo oder Sulfato. Als Beispiele für R₁, R₂, R₃ und R₄ seien die folgenden Reste genannt:
Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise sind R₁, R₂, R₃ und R₄ unabhängig voneinander Wasserstoff, Methyl oder Aethyl, insbesondere Wasserstoff.

n ist bevorzugt eine Zahl von 2 bis 6, insbesondere die Zahl 2, 3, 4 oder 5 und vorzugsweise die Zahl 2 oder 3. Von Interesse sind ferner solche Farbstoffe, worin n die Zahl 1 ist.

Y₁ und Y₂ als gegebenenfalls substituiertes Amino können beispielsweise Amino, gegebenenfalls im Alkylteil substituiertes N-Mono- oder N,N-Di-C₁-C₄-Alkylamino, gegebenenfalls im Cycloalkylring substituiertes C₅-C₇-Cycloalkylamino oder gegebenenfalls im Phenylring substituiertes Phenylamino oder N-C₁-C₄-Alkyl-N-phenylamino bedeuten.

Als Beispiele für Substituenten des Alkylteils der genannten N-Mono- oder N,N-Di-C₁-C₄-Alkylaminoreste seien Hydroxy, Sulfo, Sulfato, Carboxy, C₁-C₄-Alkoxy, C₁-C₄-Hydroxyalkoxy oder Piperidin-1-yl genannt. Bevorzugt sind hierbei Hydroxy, Sulfo, C₁-C₄-Alkoxy, C₁-C₄-Hydroxyalkoxy und Piperidin-1-yl, insbesondere Hydroxy, Sulfo, C₁-C₄-Alkoxy und C₁-C₄-Hydroxyalkoxy, vorzugsweise Hydroxy und Sulfo.

Als Beispiel für Substituenten des Cycloalkylrings der genannten C₅-C₇-Cycloalkylaminoreste ist C₁-C₄-Alkyl, insbesondere Methyl, zu nennen. Als C₅-C₇-Cycloalkylaminoreste sind die entsprechenden Cyclohexylreste bevorzugt.

Als Beispiele für Substituenten des Phenylrings der genannten Phenylamino- und N-C₁-C₄-Alkyl-N-phenylaminoreste sind C₁-C₄-Alkyl, C₁-C₄-Alkoxy, Carboxy, Sulfo und Halogen zu nennen. Vorzugsweise sind diese Phenylamino- und N-C₁-C₄-Alkyl-N-phenylaminoreste unsubstituiert.

Y₁ und Y₂ als über ein Stickstoffatom gebundene heterocyclische Reste sind z.B. Morpholino oder Piperidin-1-yl, vorzugsweise Morpholino.

Die Reste Y₁ und Y₂ in den Farbstoffen der Formel (1) bedeuten unabhängig voneinander vorzugsweise Fluor, Chlor, Carboxypyridinium, Amino, unsubstituiertes oder im Alkylteil durch Hydroxy, Sulfo, Sulfato, Carboxy, C₁-C₄-Alkoxy, C₁-C₄-Hydroxyalkoxy oder Piperidin-1-yl substituiertes N-Mono- oder N,N-Di-C₁-C₄-Alkylamino, unsubstituiertes oder im Cycloalkylring durch C₁-C₄-Alkyl substituiertes C₅-C₇-Cycloalkylamino, unsubstituiertes oder im Phenylring durch C₁-C₄-Alkyl, C₁-C₄-Alkoxy, Carboxy, Sulfo oder Halogen substituiertes Phenylamino oder N-C₁-C₄-Alkyl-N-phenylamino, Morpholino oder Piperidin-1-yl.

Bevorzugt bedeuten Y₁ und Y₂ unabhängig voneinander Fluor, Chlor, Amino, unsubstituiertes oder im Alkylteil durch Hydroxy, Sulfo, C₁-C₄-Alkoxy, C₁-C₄-Hydroxyalkoxy oder Piperidin-1-yl substituiertes N-Mono- oder N,N-Di-C₁-C₄-Alkylamino, Phenylamino, N-C₁-C₄-Alkyl-N-phenylamino oder Morpholino.

Besonders bevorzugt bedeuten Y₁ und Y₂ unabhängig voneinander Fluor oder insbesondere Chlor.

Vorzugsweise haben Y₁ und Y₂ jeweils identische Bedeutungen.

Die Reste A₁ und A₂ in den Farbstoffen der Formel (1) können an ihrem Grundgerüst die bei organischen Farbstoffen üblichen Substituenten gebunden enthalten.

Bevorzugt haben die Reste A₁ und A₂ identische Bedeutungen.

Als Beispiele für Substituenten im Rest A₁ und A₂ seien genannt: Alkylgruppen mit 1 bis 4 Kohlenstoffatomen, wie Methyl, Aethyl, Propyl, Isopropyl oder Butyl, wobei die Alkylreste z.B. durch Hydroxyl, Sulfo oder Sulfato weitersubstituiert sein können; Alkoxygruppen mit 1 bis 4 Kohlenstoffatomen, wie Methoxy, Aethoxy, Propoxy, Isopropoxy oder Butoxy, wobei die Alkylreste z.B. durch Hydroxyl, Sulfo oder Sulfato weitersubstituiert sein können; gegebenenfalls durch C₁-C₄-Alkyl, C₁-C₄-Alkoxy, Halogen, Carboxy oder Sulfo substituiertes Phenyl; Acylaminogruppen mit 1 bis 8 Kohlenstoffatomen, insbesondere solche Alkanoylaminogruppen, wie z.B. Acetylamino oder Propionylamino; gegebenenfalls im Phenylring durch C₁-C₄-Alkyl, C₁-C₄-Alkoxy, Halogen oder Sulfo substituiertes Benzoylamino; gegebenenfalls im Phenylring durch C₁-C₄-Alkyl, C₁-C₄-Alkoxy, Halogen oder Sulfo substituiertes Phenylamino; N,N-Di-β-hydroxyäthylamino; N,N-Di-β-sulfatoäthylamino; Sulfobenzylamino; N,N-Disulfobenzylamino; Alkoxycarbonyl mit 1 bis 4 Kohlenstoffatomen im Alkoxyrest, wie Methoxycarbonyl oder Aethoxycarbonyl; Alkylsulfonyl mit 1 bis 4 Kohlenstoffatomen, wie Methylsulfonyl oder Aethylsulfonyl; Trifluormethyl; Nitro; Amino; Cyano; Halogen, wie Fluor, Chlor oder Brom; Carbamoyl; N-Alkylcarbamoyl mit 1 bis 4 Kohlenstoffatomen im Alkylrest, wie N-Methylcarbamoyl oder N-Aethylcarbamoyl; Sulfamoyl; N-Mono- oder N,N-Dialkylsulfamoyl mit jeweils 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, wobei die Alkylreste z.B. durch Hydroxy oder Sulfo weitersubstituiert sein können; N-(β-Hydroxyäthyl)-sulfamoyl; N,N-Di-(β-hydroxyäthyl)-sulfamoyl; gegebenenfalls durch C₁-C₄-Alkyl, C₁-C₄-Alkoxy, Halogen, Carboxy oder Sulfo substituiertes N-Phenylsulfamoyl; Ureido; Hydroxy; Carboxy; Sulfomethyl oder Sulfo sowie faserreaktive Reste.

Die Reste A₁ und A₂ enthalten bevorzugt jeweils mindestens eine Sulfogruppe, insbesondere 1 bis 4 Sulfogruppen und vorzugsweise 1 bis 3 Sulfogruppen.

Eine Reaktivgruppe im Rest A₁ oder A₂ in den Farbstoffen der Formel (1) ist beispielsweise ein durch ein abspaltbares Atom oder eine abspaltbare Gruppe substituierter Alkanoyl- oder Alkylsulfonylrest, ein gegebenenfalls durch ein abspaltbares Atom oder eine abspaltbare Gruppe substituierter Alkenoyl- oder Alkensulfonylrest oder ein eine Vinylgruppe enthaltender Alkenoyl- oder Alkensulfonylrest. Die genannten Alkanoyl-, Alkylsulfonyl- und Alkensulfonylreste enthalten in der Regel 2 bis 8 Kohlenstoffatome und die Alkenoylreste in der Regel 3 bis 8 Kohlenstoffatome. Des weiteren sind durch ein abspaltbares Atom oder eine abspaltbare Gruppe substituierte carbo- oder heterocyclische 4-, 5- oder 6-Ringe enthaltende Reste zu nennen. Als heterocyclische Reste kommen z.B. solche in Betracht, welche mindestens einen abspaltbaren Substituenten an einen heterocyclischen Rest gebunden enthalten; unter anderem solche, die mindestens einen reaktiven Substituenten an einen 5- oder 6-gliedrigen heterocyclischen Ring gebunden enthalten, wie an einen Monoazin-, Diazin-, Triazin- , Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Chinnolin-, Chinazolin-, Chinoxalin-, Acridin-, Phenazin- und Phenanthridin-Ring-System.

Abspaltbare Atome bzw. abspaltbare Gruppen sind neben weiteren beispielsweise Halogen, wie Fluor, Chlor oder Brom, Ammonium einschliesslich Hydrazinium, Sulfato, Thiosulfato, Phosphato, Acetoxy, Propionoxy, Azido, Carboxypyridinium oder Rhodanido.

Als Brückenglied zwischen dem Farbstoffrest und dem faserreaktiven Rest kommen neben der direkten Bindung die verschiedensten Reste in Betracht. Das Brückenglied ist z.B. ein aliphatischer, aromatischer oder heterocyclischer Rest; ferner kann das Brückenglied auch aus verschiedenen derartigen Resten zusammengesetzt sein. Das Brückenglied enthält in der Regel mindestens eine funktionelle Gruppe, z.B. die Carbonylgruppe oder die Aminogruppe, wobei die Aminogruppe durch gegebenenfalls durch Halogen, Hydroxy, Cyan, C₁-C₄-Akoxy, C₁-C₄-Alkoxycarbonyl, Carboxy, Sulfamoyl, Sulfo oder Sulfato substituiertes C₁-C₄-Alkyl weitersubstituiert sein kann. Als aliphatischer Rest kommt z.B. ein Alkylenrest mit 1 bis 7 Kohlenstoffatomen oder dessen verzweigte Isomere in Betracht. Die Kohlenstoffkette des Alkylenrestes kann durch ein Heteroatom, wie z.B. ein Sauerstoffatom, unterbrochen sein. Als aromatischer Rest kommt z.B. ein Phenylrest, der durch C₁-C₄-Alkyl, wie z.B. Methyl oder Aethyl, C₁-C₄-Alkoxy, wie z.B. Methoxy oder Aethoxy, Halogen, wie z.B. Fluor, Brom oder insbesondere Chlor, Carboxy oder Sulfo substituiert sein kann, und als heterocyclischer Rest z.B. ein Piperazinrest in Betracht.

Als Beispiele für Reaktivgruppen seien die folgenden genannt:
Vinylsulfonyl, β-Chloräthylsulfonyl, β-Sulfatoäthylsulfonyl, β-Acetoxy-äthylsulfonyl, Phosphatoäthylsulfonyl, β-Thiosulfatoäthylsulfonyl,
N-Methyl-N-(β-sulfoäthyl-sulfonyl)-amino, Acryloyl, Mono-, Di- oder Trichloracryloyl wie -CO-CCl=CH₂, -CO-CH=CH-Cl, -CO-CCl=CH-CH₃; Mono-, Di- oder Tribromacryloyl wie -CO-CBr=CH₂, -CO-CH=CH-Br, -CO-CBr=CH-CH₃; sowie
-CO-CCl=CH-COOH, -CO-CH=CCl-COOH, -CO-CBr=CH-COOH, -CO-CH=CBr-COOH, -CO-CCl=CCl-COOH, -CO-CBr=CBr-COOH; Vorstufen des Acryloylrestes und der Derivate des Acryloylrestes wie β-Chlor- oder β-Brompropionyl, 3-Phenylsulfonylpropionyl, 3-Methylsulfonylpropionyl, 2-Chlor-3-phenylsulfonylpropionyl, 2,3-Dichlorpropionyl, 2,3-Dibrompropionyl; sowie
2-Fluor-2-chlor-3,3-difluorcyclobutan-1-carbonyl, 2,2,3,3-Tetrafluorcyclobutancarbonyl-1- oder sulfonyl-1-, β-(2,2,3,3-Tetrafluorcyclobutyl-1)-acryloyl, α- oder β-Alkenyl- oder Arylsulfonylacryloylgruppen, wie α- oder β-Methylsulfonylacryloyl, Chloracetyl, Bromacetyl, 4-(β-Chloräthylsulfonyl)-butyryl, 4-Vinylsulfonyl-butyryl, 5-(β-Chloräthylsulfonyl)-caproyl, 6-Vinylsulfonylcaproyl; sowie 4-Fluor-3-nitro-benzoyl, 4-Fluor-3-nitrophenylsulfonyl, 4-Fluor-3-methylsulfonylbenzoyl, 4-Fluor-3-cyanbenzoyl, 2-Fluor-5-methylsulfonylbenzoyl.

Des weiteren sind beispielsweise folgende faserreaktiven Reste zu nennen:
Mono- oder Dihalogen-symmetrische-triazinylreste, z.B. 2,4-Dichlortriazinyl-6-, 2-Amino-4-chlortriazinyl-6-, 2-Alkyl-amino-4-chlortriazinyl-6-, wie 2-Methylamino-4-chlortriazinyl-6-, 2-Ethylamino- oder 3-Propylamino-4-chlortriazinyl-6-, 2-β-Oxethylamino-4-chlortriazinyl-6-, 2-Di-β-oxethylamino-4-chlortriazinyl-6- und die entsprechenden Schwefelsäurehalbester, 2-Diethylamino-4-chlortriazinyl-6-, 2-Morpholino- oder 2-Piperidino-4-chlor-triazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m- oder p-Carboxy- oder Sulfophenyl)-amino-4-chlortriazinyl-6-, 2-Alkoxy-4-chlortriazinyl-6-, wie 2-Methoxy- oder Ethoxy-4-chlortriazinyl-6-, 2-(Phenylsulfonylmethoxy)-4-chlortriazinyl-6-, 2-Aryloxy und substituieres Aryloxy-4-chlortriazinyl-6-, wie 2-Phenoxy-4-chlortriazinyl-6-, 2-(p-Sulfophenyl)-oxi-4-chlortriazinyl-6-, 2-(o-, m- oder p-Methyl- oder Methoxyphenyl)-oxi-4-chlortriazinyl-6-, 2-Alkylmercapto- oder 2-Arylmercapto- oder 2-(substituiertes Aryl)-mercapto-4-chlortriazinyl-6-, wie 2-β-Hydroxyethyl-mercapto-4-chlortriazinyl-6-, 2-Phenylmercapto-4-chlor-triazinyl-6-, 3-(4'-Methylphenyl)-mercapto-4-chlortriazinyl-6-, 2-(2',4'-Dinitro)-Phenylmercapto-4-chlortriazinyl-6-, 2-Methyl-4-chlortriazinyl-6-, 2-Phenyl-4-chlor-triazinyl-6-, 2,4-Difluor-triazinyl-6-, Monofluortriazinylreste, die durch Amino-, Alkylamino-, Aralkylamino- oder Acylaminogruppen substituiert sind, wobei Alkyl insbesondere gegebenenfalls substituiertes C₁-C₄-Alkyl, Aralkyl insbesondere gegebenenfalls substituiertes Phenyl-C₁-C₄-Alkyl und Aryl insbesondere gegebenenfalls durch Sulfo, C₁-C₄-Alkyl, C₁-C₄-Alkoxy, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6, 2-Methylamino-4-fluor-triazinyl-6, 2-Ethyl-amino-4-fluor-triazinyl-6, 2-iso-Propylamino-4-fluor-triazinyl-6, 2-Dimethylamino-4-fluor-triazinyl-6, 2-Diethylamino-4-fluor-triazinyl-6, 2-β-Methoxy-ethylamino-4-fluortriazinyl-6, 2-β-Hydroxyethylamino-4-fluor-triazinyl-6, 2-Di-(β-hydroxyethylamino)-4-fluortriazinyl-6-, 2-β-Sulfoethylamino-4-fluor-triazinyl-6, 2-β-Sulfoethyl-methylamino-4-fluor-triazinyl-6, 2-Carboxymethylamino-4-fluortriazinyl-6, 2-β-Cyanethyl-amino-4-fluor-triazinyl-6, 2-Benzolamino-4-fluor-triazinyl-6, 2-β-Phenylethylamino-4-fluor-triazinyl-6, 2-Benzyl-methylamino-4-fluor-triazinyl-6, 2-(2'-, 3'- oder 4'-Sulfobenzyl)-amino-4-fluor-triazinyl-6, 2-Cyclohexylamino-4-fluortriazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluortriazinyl-6, 2-(o-, m-, p-Chlorphenyl)-amino-4-fluor-triazinyl-6, 2-(o-, m-, p-Methoxyphenyl)-4-fluor-triazinyl-6, 2-(2'-Methyl-4'-sulfophenyl)-amino-4-fluortriazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4-sulfophenyl)-amino-4-fluor-triazinyl-6, 2-(2'-Carboxy-4-sulfophenyl)-amino-4-fluor-triazinyl-6, 2-(6'-Sulfonaphthyl-(2')-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-β-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-4-fluor-triazinyl-6, 2-(3',6',8'-Trisulfonaphthyl-(2'))-4-fluor-triazinyl-6, 2-(3',6'-Disulfonaphthyl-(1'))-4-fluor-triazinyl-6, Mono-, Di- oder Trihalogenpyrimidinylreste, wie 2,4-Dichlorpyrimidinyl-6, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carboalkoxy-pyrimidinyl-6, 2,6-Dichlorpyrimidin-4-carbonyl-, 2,4-Dichlorpyrimidin-5-carbonyl-,2-Chlor-4-methylpyrimidin-5-carbonyl-, 2-Methyl-4-chlorpyrimidin-5-carbonyl-, 2-Methyl-thio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Mono-chlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4',5'-Dichlorpyridazin-6'-yl-1')-phenylsulfonyl- oder -carbonyl-, β-(4',5'-Dichlorpyridazon-6'-yl-1')-ethyl-carbonyl, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)carbamyl, N-Methyl- oder N-Ethyl-N-(2,4-dichlortriazinyl-6)-amino-acetyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-,2-Fluor-5,6-dichlor-4-pyrimidinyl-,2,6-Difluor-5-methyl-4-pyrimidinyl-, 2,5-Difluor-6-methyl-4-pyrimidinyl-,2-Fluor-5-methyl-6-chlor-4-pyrimidinyl-, 2-Fluor-5-nitro-6-chlor-4-pyrimidinyl-,5-Brom-2-fluor-4-pyrimidinyl-,2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-,2,6-Difluor-5-brom-4-pyrimidinyl-, 2-Fluor-5-brom-6-methyl-4-pyrimidinyl-,2-Fluor-5-brom-6-chlormethyl-4-pyrimidinyl-, 2,6-Difluor-5-chlormethyl-4-pyrimidinyl-,2,6-Difluor-5-nitro-4-pyrimidinyl-,2-Fluor-6-methyl-4-pyrimidinyl-,2-Fluor-5-chlor-6-methyl-4-pyrimidinyl-,2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-,2-Fluor-6-carbomethoxy-4-pyrimidinyl, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl-, 6-Fluor-5-chlor-pyrimidinyl-4, 6-Fluor-5-trifluormethyl-pyrimidinyl-4, 6-Fluor-2-methylpyrimidinyl-4, 6-Fluor-5-chlor-2-methylpyrimidinyl-4, 5,6-Difluor-pyrimidinyl-4, 6-Fluor-5-chlor-2-trifluormethylpyrimidinyl-4, 6-Fluor-2-phenylpyrimidinyl-4, 6-Fluor-5-cyan-pyrimidinyl-4, 6-Fluor-5-nitropyrimidinyl-4, 6-Fluor-5-methyl-sulfonyl-pyrimidinyl-4, 6-Fluor-5-phenylsulfonylpyrimidinyl-4, sulfonylgruppenhaltige Triazinreste, wie 2,4-Bis-(phenylsulfonyl)-triazinyl-6, 2-(3'-Carboxyphenyl)-sulfonyl-4-chlortriazinyl-6, 2-(3'-Sulfophenyl)-sulfonyl-4-chlortriazinyl-6, 2,4-Bis-(3'-carboxyphenylsulfonyl)-triazinyl-6; sulfonylgruppenhaltige Pyrimidinringen, wie 2-Carboxymethylsulfonyl-pyrimidinyl-4-, 2-Methylsulfonyl-6-methylpyrimidinyl-4, 2-Methylsulfonyl-6-ethyl- pyrimidinyl-4-, 2-Phenylsulfonyl-5-chlor-6-methyl-pyrimidinyl-, 2,6-Bis-methylsulfonyl-pyrimidinyl-4-, 2,6-Bis-methyl-sulfonyl-5-chlor-pyrimidinyl-4-, 2,4-Bis-methylsulfonyl-pyrimidin-5-sulfonyl-, 2-Methylsulfonylpyrimidinyl-4, 2-Phenyl-sulfonyl-pyrimidinyl-4-, 2-Trichlor-methylsulfonyl-6-methyl-pyrimidinyl-4-, 2-methylsulfonyl-5-chlor-6-methylpyrimidinyl-4-, 2-Methylsulfonyl-5-brom-6-methyl-pyrimidinyl-4-, 2-Methyl-sulfonyl-5-chlor-6-ethyl-pyrimidinyl-4-, 2-Methyl-sulfonyl-5-chlor-6-chlormethyl-pyrimidinyl-4-, 2-Methyl-sulfonyl-4-chlor-6-methylpyrimidin-5-sulfonyl, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethylpyridinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carbonyl-pyrimidinyl-4-, 2-Methylsulfonyl-5-sulfopyrimidinyl-4-, 2-Methylsulfonyl-6-carbomethoxy-pyrimidinyl-4-, 2-Methylsulfonyl-5-carboxypyrimidinyl-4-, 2-Methylsulfonyl-5-cyan-6-methoxypyrimidinyl-4-, 2-Methylsulfonyl-5-chlorpyrimidinyl-4-, 2-Sulfoethylsulfonyl-6-methyl-pyrimidinyl-4-, 2-Methyl-sulfonyl-5-brom-pyrimidinyl-4-, 2-Phenyl-sulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl, 2,6-Bis(methyl-sulfonyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methyl-pyrimidin-5-sulfonyl- oder -carbonyl-, ammoniumgruppenhaltige Triazinringe, wie Trimethylammonium-4-phenylamino- oder -4-(o-, m- oder p-sulfophenyl)-aminotriazinyl-6-, 2-(1,1-Dimethylhydrazinium)-4-phenylamino- oder -4-(o-, m- oder p-sulfophenyl)-aminotriazinyl-6, 2-(2-Isopropyliden-1,1-dimethyl)hydrazinium-4-phenylamino- oder -4-(o-, m- oder p-sulfophenyl)-amino-triazinyl-6-, 2-N-Aminopyrrolidinium- oder 2-Amino-piperidinium-4-phenylamino- oder -4-(o-, m- oder p-sulfophenyl)-aminotriazinyl-6-, 2-N-Aminopyrrolidinium- oder 2-N-Aminopiperidinium-4-phenylamino-oder -4-(o-, m- oder p-Sulfophenyl)-aminotriazinyl-6-, ferner 4-Phenylamino- oder -4-(sulfophenylamino)-triazinyl-6-Reste, die in 2-Stellung über eine Stickstoffbindung das 1,4-Bis-azabicyclo-[2,2,2]-octan oder das 1,2-Bis-aza-bicyclo-[0,3,3]-octan quartär gebunden enthalten, 2-Pyridinium-4-phenylamino- oder 4-(o-, m- oder p-Sulfophenyl)-aminotriazinyl-6- sowie entsprechende 2-Oniumtriazinyl-6-Reste, die in 4-Stellung durch Alkylamino-, wie Methylamino-, Ethylamino- oder β-Hydroxyethylamino- oder Alkoxy-, wie Methoxy- oder Alkoxy-, oder Aroxy-, wie Phenoxy- oder Sulfophenoxy-Gruppen substituiert sind: 2-Chlorbenzthiazol-5- oder -6-carbonyl- oder -5-oder -6-sulfonyl-, 2-Arylsulfonyl- oder -Alkylsulfonylbenzthiazol-5- oder -6-carbonyl- oder -5- oder -6-sulfonyl-, wie 2-Methyl-sulfonyl- oder 2-Ethoxysulfonylbenzthiazol-5-oder 6-sulfonyl- oder -carbonyl-, 2-Phenylsulfonyl-benzthiazol-5- oder -6-sulfonyl- oder carbonyl- und die entsprechenden im ankondensierten Benzolring Sulfogruppen enthaltenden 2-Sulfonylbenzthiazol-5- oder 6-carbonyl- oder -sulfonyl-Derivate, 2-Chlorbenzoxazol-5- oder -6-carbonyl- oder -sulfonyl-, 2-Chlor-benzimidazol-5- oder -6-carbonyl- oder sulfonyl-, 2-Chlor-1-methylbenzimidazol-5- oder 6-carbonyl- oder sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl oder auch die Reste 5-Chlor-2,6-difluor-1,3-dicyanphenyl, 2,4-Difluor-1,3,5-tricyanphenyl, 2,4,5-Trifluor-1,3-dicyan-phenyl, 2,4-Dichlor-5-methylsulfonyl-pyrimidinyl-6, 2,4-Trichlor-5-ethylsulfonyl-pyrimidinyl-6, 2-Fluor-5-methylsulfonyl-6'-(2'-sulfophenylamino)-pyrimidinyl -4, 2,5-Dichlor-6-methylsulfonyl-pyrimidinyl-4.

Eine Gruppe von geeigneten Reaktivgruppen umfasst solche der Formeln

-SO₂-Z (2a),

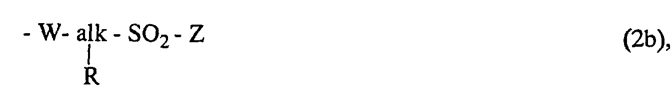

-W-alk-E-alk'-SO₂-Z (2c),

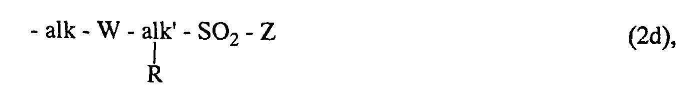

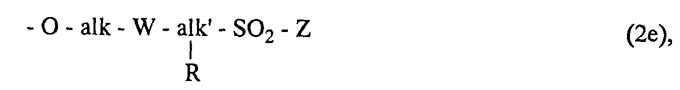

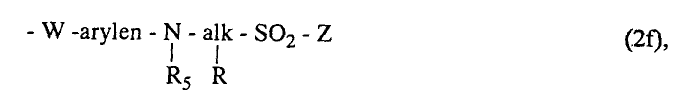

-NH-CO-C(Hal)=CH₂ (2g),

-NH-CO-CH(Hal)-CH₂-Hal (2h)

und 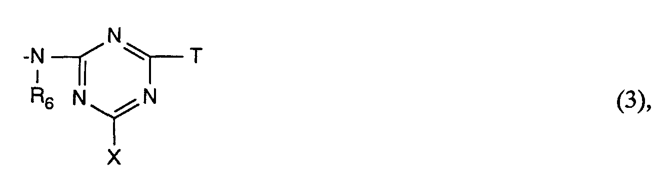 worin W eine Gruppe der Formel -SO₂-NR₅-, -CONR₅- oder -NR₅CO- ist, R₅ Wasserstoff, unsubstituiertes oder durch Hydroxy, Sulfo, Sulfato, Carboxy oder Cyano substituiertes C₁-C₄-Alkyl oder ein Rest der Formel 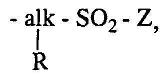 R Wasserstoff. Hydroxy, Sulfo, Sulfato, Carboxy, Cyano, Halogen, C₁-C₄-Alkoxycarbonyl, C₁-C₄-Alkanoyloxy, Carbamoyl oder die Gruppe -SO₂-Z ist, Z der Rest -CH=CH₂ oder -CH₂-CH₂-Y ist, Y eine Abgangsgruppe, E der Rest -O- oder -NR₇ ist, R₇ Wasserstoff oder C₁-C₄-Alkyl, alk und alk' unabhängig voneinander C₁-C₆-Alkylen, arylen einen unsubstituierten oder durch Sulfo, Carboxy, C₁-C₄-Alkyl, C₁-C₄-Alkoxy oder Halogen substituierten Phenylen- oder Naphthylenrest bedeutet, R₆ Wasserstoff oder unsubstituiertes oder durch Carboxy, Cyano, Hydroxy, Sulfo oder Sulfato substituiertes C₁-C₄-Alkyl, Hal Halogen und X eine als Anion abspaltbare Gruppe ist und T einen Rest der Formel 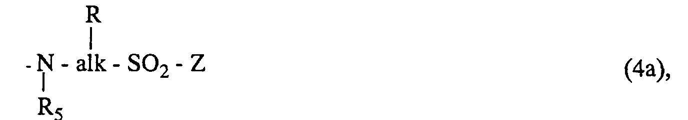 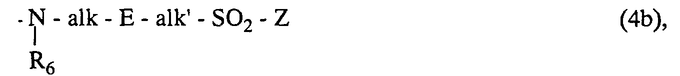 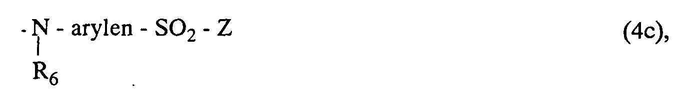 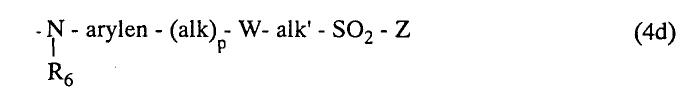 oder 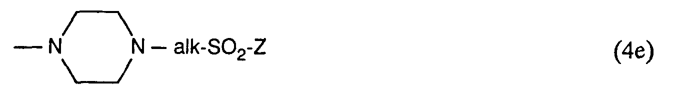 bedeutet, worin R, R₅, R₆, E, W, Z, alk, alk' und arylen die oben angegebenen Bedeutungen haben und p 0 oder 1 ist.

Geeignete Abgangsgruppen Y sind z.B. -Cl, -Br, -F, -OSO₃H, -SSO₃H, -OCO-CH₃, -OPO₃H₂, -OCO-CCl₃, -OCO-CHCl₂, -OCO-CH₂Cl, -OSO₂-C₁-C₄-Alkyl, -OSO₂-N(C₁-C₄-Alkyl)₂ oder -OCO-C₆H₅.

Bevorzugt ist Y eine Gruppe der Formel -Cl, -OSO₃H, -SSO₃H, -OCO-CH₃, -OCO-C₆H₅ oder -OPO₃H₂, insbesondere -OSO₃H.

Bei alk und alk' handelt es sich unabhängig voneinander z.B. um einen Methylen-, Äthylen-, 1,3-Propylen-, 1,4-Butylen-, 1,5-Pentylen- oder 1,6-Hexylenrest oder deren verzweigte Isomere.

Bevorzugt stehen alk und alk' für einen C₁-C₄-Alkylenrest und insbesondere bevorzugt für einen Äthylenrest.

R bedeutet bevorzugt Wasserstoff oder die Gruppe -SO₂-Z, worin Z die zuvor angegebenen Bedeutungen hat. Besonders bevorzugt steht R für Wasserstoff.

R₅ ist vorzugsweise Wasserstoff, C₁-C₄-Alkyl oder eine Gruppe -alk-SO₂-Z, worin alk und Z jeweils die zuvor angegebenen Bedeutungen haben. Besonders bevorzugt ist R₅ Wasserstoff oder C₁-C₄-Alkyl, insbesondere Wasserstoff.

R₆ ist vorzugsweise Wasserstoff oder ein C₁-C₄-Alkylrest und insbesondere bevorzugt Wasserstoff.

Arylen ist vorzugsweise ein 1,3- oder 1,4-Phenylenrest, der unsubstituiert oder z.B. durch Sulfo, Methyl, Methoxy oder Carboxy substituiert ist.

E steht vorzugsweise für -NH- und insbesondere bevorzugt für -O-.

W bedeutet bevorzugt eine Gruppe der Formel -CONH- oder insbesondere -NHCO-.

X steht z.B. für Fluor, Chlor, Brom, Sulfo, C₁-C₄-Alkylsulfonyl oder Phenylsulfonyl und bevorzugt für Fluor oder Chlor.

Hal bedeutet z.B. Chlor oder insbesondere Brom.

Weitere interessante Reaktivgruppen sind solche der Formel (3), worin T eine als Anion abspaltbare Gruppe ist oder einen nicht-reaktiven Substituenten bedeutet.

Bedeutet T eine als Anion abspaltbare Gruppe, so handelt es sich hierbei z.B. um Fluor, Chlor, Brom, Sulfo, C₁-C₄-Alkylsulfonyl oder Phenylsulfonyl und bevorzugt um Fluor oder insbesondere Chlor.

Steht T für einen nicht-reaktiven Substituenten, so kann dies z.B. ein Hydroxy-, C₁-C₄-Alkoxy-, C₁-C₄-Alkylthio-, Amino-, N-C₁-C₄-Alkylamino- oder N,N-Di-C₁-C₄-Alkylamino-, wobei das Alkyl gegebenenfalls z.B. durch Sulfo, Sulfato, Hydroxy, Carboxy oder Phenyl substituiert ist, Cyclohexylamino-, Morpholino-, oder N-C₁-C₄-Alkyl-N-phenylamino- oder Phenylamino- oder Naphthylaminorest, wobei das Phenyl oder Naphthyl gegebenenfalls z.B. durch C₁-C₄-Alkyl, C₁-C₄-Alkoxy, Carboxy, Sulfo oder Halogen substituiert ist, sein.

Beispiele für geeignete nicht-reaktive Substituenten T sind Amino, Methylamino, Äthylamino, β-Hydroxyäthylamino, N,N-Di-β-Hydroxyäthylamino, β-Sulfoäthylamino, Cyclohexylamino, Morpholino, o-, m- oder p-Chlorphenylamino, o-, m- oder p-Methylphenylamino, o-, m- oder p-Methoxyphenylamino, o-, m- oder p-Sulfophenylamino, Disulfophenylamino, o-Carboxyphenylamino, 1- oder 2-Naphthylamino, 1-Sulfo-2-naphthylamino, 4,8-Disulfo-2-naphthylamino, N-Äthyl-N-phenylamino, N-Methyl-N-phenylamino, Methoxy, Äthoxy, n- oder iso-Propoxy sowie Hydroxy.

Als nicht-reaktiver Substituent hat T vorzugsweise die Bedeutung Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Methyl oder Methoxy substituiert ist. Besonders bevorzugt sind die Bedeutungen als Phenylamino oder N-C₁-C₄-Alkyl-N-phenylamino, worin das Phenyl jeweils unsubstituiert oder durch Sulfo, Carboxy, Methyl oder Methoxy substituiert ist.

Weitere interessante Reaktivgruppen sind Pyrimidin- oder Chinoxalinreste, welche jeweils über mindestens eine als Anion abspaltbare Gruppe verfügen. Beispiele sind der 2,3-Dichlorchinoxalin-6-carbonylaminorest, 2,4-Dichlorpyrimidin-5-carbonylaminorest sowie der Rest der Formel 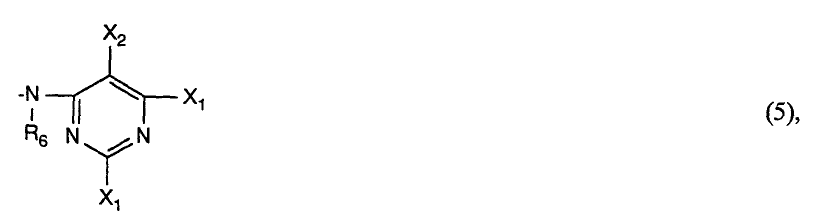 worin einer der Reste X₁ eine als Anion abspaltbare Gruppe ist und der andere Rest X₁ die für T als nicht-reaktiven Substituenten angegebenen Bedeutungen und Bevorzugungen hat oder ein Rest der Formeln (4a) bis (4e) oder eine als Anion abspaltbare Gruppe ist, X₂ ein negativer Substituent ist und R₆ unabhängig die unter Formel (3) angegebenen Bedeutungen hat.

Bei dem als Anion abspaltbaren Rest X₁ handelt es sich vorzugsweise um Fluor oder Chlor, Beispiele für geeignete Reste X₂ sind Nitro, Cyan, C₁-C₄-Alkylsulfonyl, Carboxy, Chlor, Hydroxy, C₁-C₄-Alkoxysulfonyl, C₁-C₄-Alkylsulfinyl, C₁-C₄-Alkoxycarbonyl oder C₂-C₄-Alkanoyl, wobei die Bedeutungen Chlor, Cyano und Methylsulfonyl für X₂ bevorzugt sind.

Besonders bevorzugte Reaktivgruppen sind solche der Formel (2a), (2b), (2g) und (2h). Für Z, W, alk, R und Hal gelten hierbei die oben angegebenen Bedeutungen und Bevorzugungen. Vorzugsweise ist Z ein Vinyl- oder β-Sulfatoäthylrest. Der Rest W ist bevorzugt ein Rest der Formel -NH-CO-, R ist bevorzugt Wasserstoff und für alk ist die Bedeutung als Äthylen bevorzugt. Hal ist bevorzugt Chlor oder insbesondere Brom. Von besonderem Interesse sind Reaktivgruppen der Formel (2a).

Interessante Reaktivgruppen sind ferner solche der Formel (3), worin für T, X und R₆ die oben angegebenen Bedeutungen und Bevorzugungen gelten. Besonders bevorzugt ist T hierbei ein nicht-reaktiver Rest, insbesondere Phenylamino oder N-C₁-C₄-Alkyl-N-phenylamino, worin das Phenyl jeweils unsubstituiert oder durch Sulfo, Carboxy, Methyl oder Methoxy substituiert ist. X ist hierbei besonders bevorzugt Fluor oder Chlor. R₆ ist hierbei besonders bevorzugt Wasserstoff, Methyl oder Äthyl, insbesondere Wasserstoff.

Besonders bevorzugt enthalten die Reste A₁ und A₂ keine Reaktivgruppe.

Bevorzugt sind A₁ und A₂ unabhängig voneinander der Rest eines Monoazo-, Disazo-, Anthrachinon-, Dioxazin-, Phthalocyanin- oder Formazanfarbstoffes.

Als Reste eines Monoazo- oder Disazofarbstoffes kommen insbesondere die folgenden in Betracht:

Farbstoffreste eines Mono- oder Disazofarbstoffes, der Formel

D₁-N=N-(M-N=N)ᵤ-K- (6)

oder

-D₁-N=N-(M-N=N)ᵤ-K (7).

Hierin ist D₁ ist der Rest einer Diazokomponente der Benzol- oder Naphthalinreihe, M der Rest einer Mittelkomponente der Benzol- oder Naphthalinreihe, K der Rest einer Kupplungskomponente der Benzol-, Naphthalin-, Pyrazolon-, 6-Hydroxypyridon-(2)- oder Acetessigsäurearylamid-Reihe und u die Zahl 0 oder 1, wobei D₁, M und K bei Azofarbstoffen übliche Substituenten, wie z.B. die oben angegebenen, tragen können. Insbesondere kommen als solche Substituenten gegebenenfalls durch Hydroxyl, Sulfo oder Sulfato weitersubstituiertes C₁-C₄-Alkyl oder C₁-C₄-Alkoxy, Halogen, Carboxy, Sulfo, Nitro, Cyan, Trifluormethyl, Sulfamoyl, Carbamoyl, Amino, Ureido, Hydroxy, Carboxy, Sulfomethyl, C₂-C₄-Alkanoylamino, gegebenenfalls im Phenylring durch C₁-C₄-Alkyl, C₁-C₄-Alkoxy, Halogen oder Sulfo substituiertes Benzoylamino, gegebenenfalls durch C₁-C₄-Alkyl, C₁-C₄-Alkoxy, Halogen, Carboxy oder Sulfo substituiertes Phenyl, sowie faserreaktive Reste in Betracht, wobei für die faserreaktiven Reste die oben angegebenen Bedeutungen und Bevorzugungen gelten. Ferner kommen noch die von den Farbstoffresten der Formeln (6) und (7) abgeleiteten Metallkomplexe in Betracht, wobei es sich insbesondere um Farbstoffreste eines 1:1-Kupferkomplexazofarbstoffes der Benzol- oder Naphthalinreihe handelt, worin das Kupferatom an je eine metallisierbare Gruppe beidseitig in ortho-Stellung zur Azobrücke gebunden ist.

Besonders bevorzugte Reste eines Monoazo- oder Disazofarbstoffes sind die folgenden: 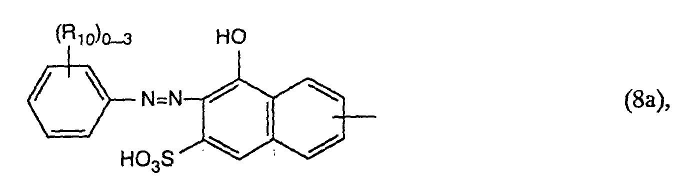 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 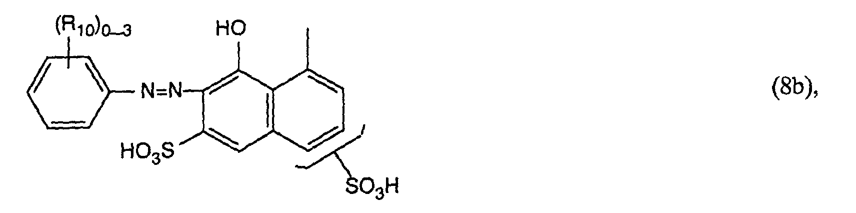 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 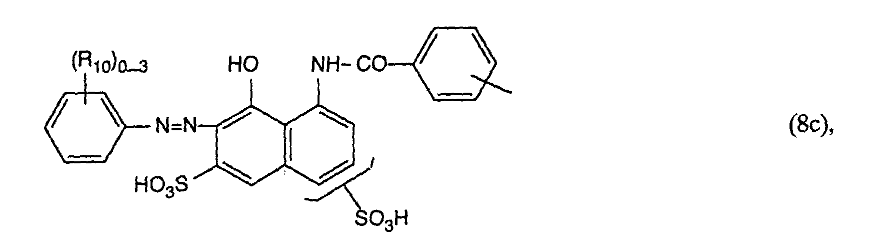 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 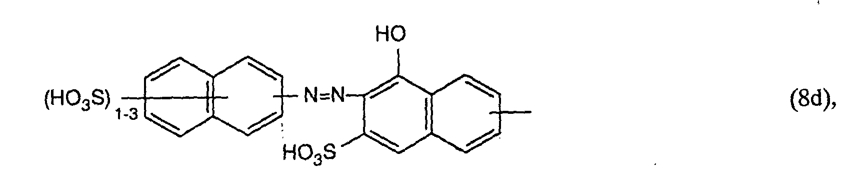 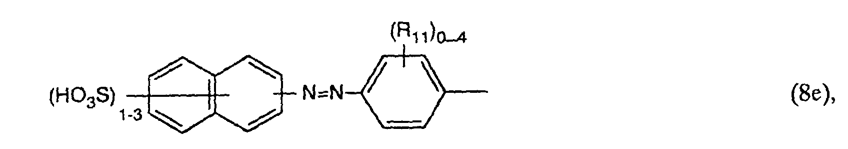 worin R₁₁ für 0 bis 4 gleiche oder verschiedene Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo steht, 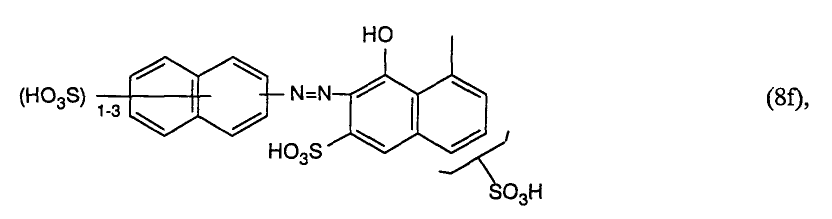 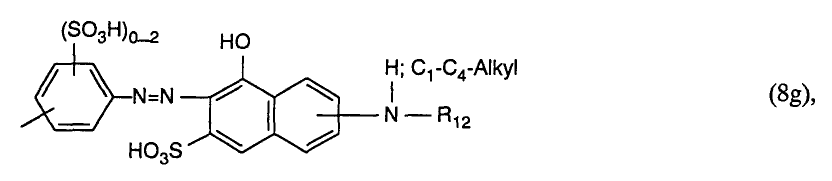 worin R₁₂ C₁-C₄-Alkanoyl, Benzoyl oder ein gegebenenfalls weitersubstituierter Halogentriazinylrest ist, 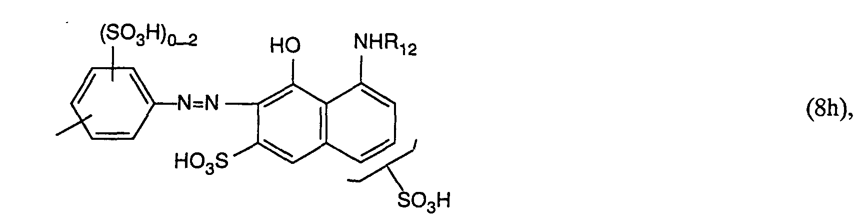 worin R₁₂ C₁-C₄-Alkanoyl, Benzoyl oder ein gegebenenfalls weitersubstituierter Halogentriazinylrest ist, 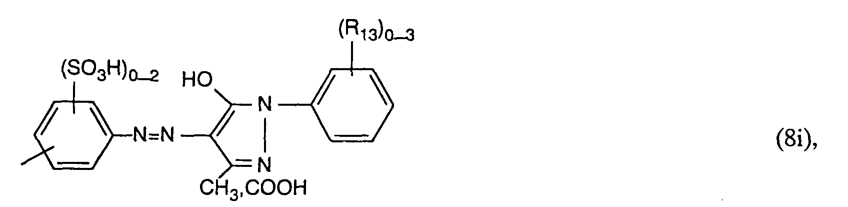 worin R₁₃ für 0 bis 3 gleiche oder verschiedene Substituenten aus der Gruppe C₁-C₄-Alkyl, C₁-C₄-Alkoxy, Halogen, Carboxy und Sulfo steht, 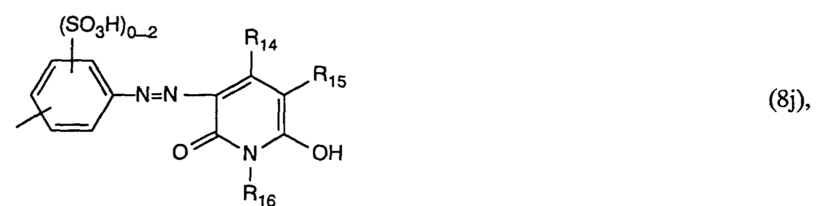 worin R₁₄ und R₁₆ unabhängig voneinander Wasserstoff, C₁-C₄-Alkyl oder Phenyl, und R₁₅ Wasserstoff, Cyano, Carbamoyl oder Sulfomethyl ist, 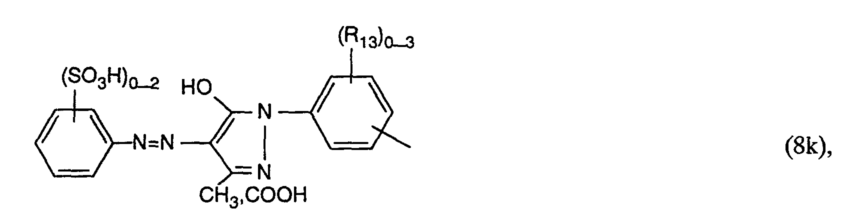 worin R₁₃ für 0 bis 3 gleiche oder verschiedene Substituenten aus der Gruppe C₁-C₄-Alkyl, C₁-C₄-Alkoxy, Halogen, Carboxy und Sulfo steht, 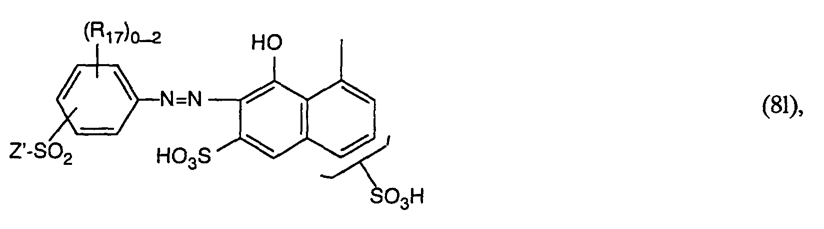 worin R₁₇ für 0 bis 2 gleiche oder verschiedene Substituenten aus der Gruppe C₁-C₄-Alkyl, C₁-C₄-Alkoxy, Halogen, Carboxy und Sulfo steht; und Z' β-Sulfatoäthyl, β-Thiosulfatoäthyl, β-Phosphatoäthyl, β-Acyloxyäthyl, β-Halogenäthyl oder Vinyl ist, 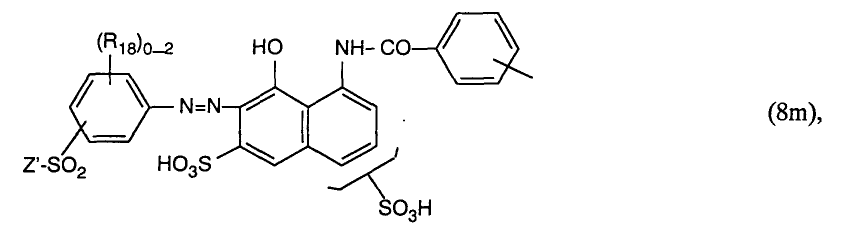 worin R₁₈ für 0 bis 2 gleiche oder verschiedene Substituenten aus der Gruppe C₁-C₄-Alkyl, C₁-C₄-Alkoxy, Halogen, Carboxy und Sulfo steht; und Z' β-Sulfatoäthyl, β-Thiosulfatoäthyl, β-Phosphatoäthyl, β-Acyloxyäthyl, β-Halogenäthyl oder Vinyl ist, 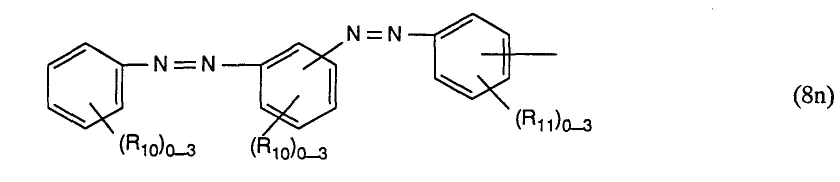 oder 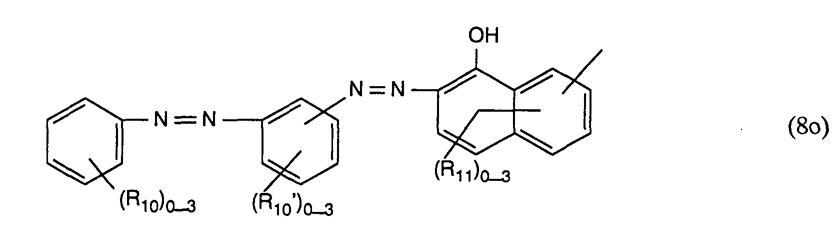 oder 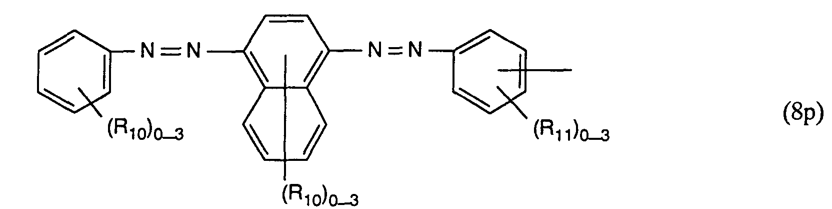 oder 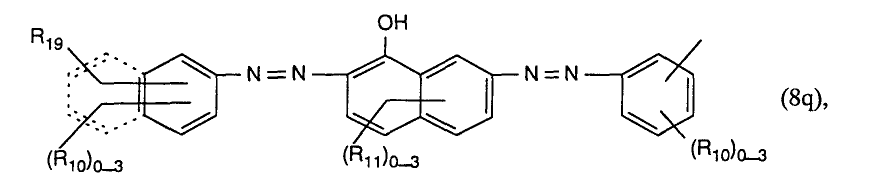 worin R₁₀ für 0 bis 3 gleiche oder verschiedene Substituenten aus der Gruppe C₁-C₄-Alkyl, C₁-C₄-Alkoxy, Halogen, Carboxy und Sulfo, R₁₀' die für R₁₀ angegebenen Bedeutungen hat und zusätzlich C₁-C₄-Hydroxyalkoxy oder C₁-C₄-Sulfatoalkoxy bedeuten kann, R₁₁ für 0 bis 3 gleiche oder verschiedene Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo steht und R₁₉ Wasserstoff oder einen Rest der Formel -SO₂Z', -NH-CO-(CH₂)₂₋₃-SO₂Z', -NH-CO-C(Hal)=CH₂ oder -NH-CO-CH(Hal)-CH₂-Hal bedeutet, wobei Z' β-Sulfatoäthyl, β-Thiosulfatoäthyl, β-Phosphatoäthyl, β-Acyloxyäthyl, β-Halogenäthyl oder Vinyl und Hal Halogen ist.

Die Reste der Formeln (8a) bis (8q) können in den Phenyl- oder Napthylringen noch als weiteren Substutuenten einen Rest der Formel -SO₂Z' enthalten, worin Z' β-Sulfatoäthyl, β-Thiosulfatoäthyl, β-Phosphatoäthyl, β-Acyloxyäthyl, β-Halogenäthyl oder Vinyl ist. Z' ist bevorzugt β-Sulfatoäthyl oder Vinyl, insbesondere Vinyl.

Bei dem Rest eines Formazanfarbstoffes handelt es sich bevorzugt um einen Farbstoffrest der Formel 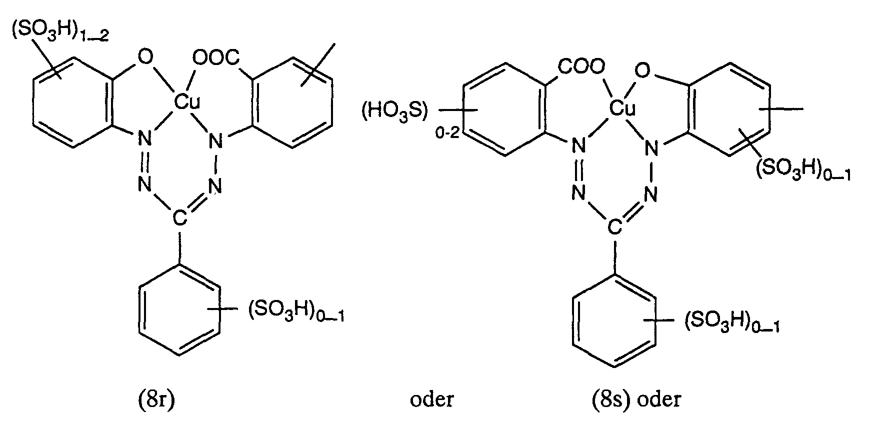 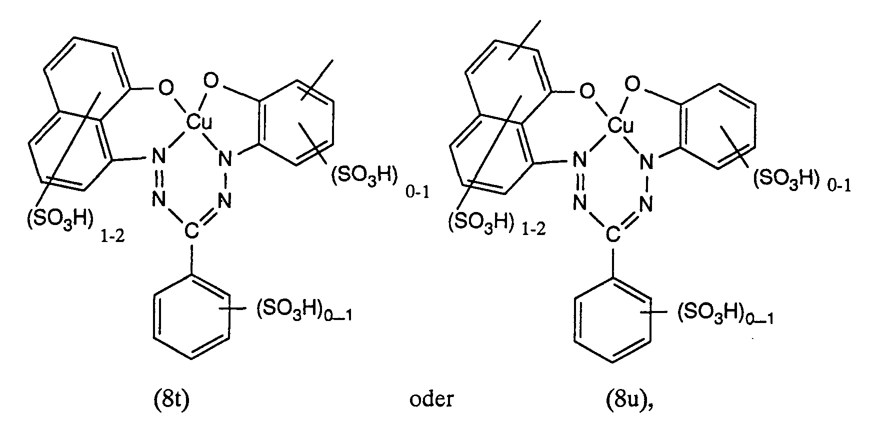 worin die Benzolkerne keine weiteren Substituenten enthalten oder durch C₁-C₄-Alkyl, C₁-C₄-Alkoxy, C₁-C₄-Alkylsulfonyl, Halogen oder Carboxy weitersubstituiert sind.

Bei dem Rest eines Phthalocyaninfarbstoffes handelt es sich bevorzugt um einen Rest der Formel 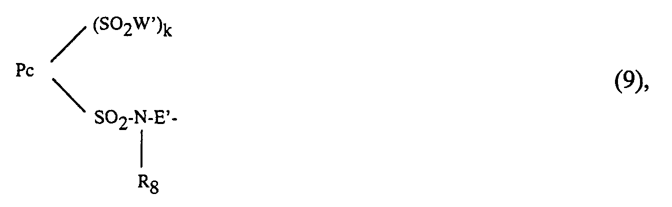 worin Pc der Rest eines Metallphthalocyanins, insbesondere der Rest eines Kupfer- oder Nickelphthalocyanins, ist; W' -OH und/oder -NR₉R₉'; R₉ und R₉' unabhängig voneinander Wasserstoff oder gegebenenfalls durch Hydroxy oder Sulfo substituiertes C₁-C₄-Alkyl; R₈ Wasserstoff oder C₁-C₄-Alkyl; E' ein gegebenenfalls durch C₁-C₄-Alkyl, Halogen, Carboxy oder Sulfo substituierter Phenylenrest oder ein C₂-C₆-Alkylenrest; und k 1 bis 3 ist. R₉ und R₉' sind vorzugsweise Wasserstoff. E' ist bevorzugt ein gegebenenfalls durch C₁-C₄-Alkyl, Halogen, Carboxy oder Sulfo substituierter Phenylenrest. Pc ist bevorzugt der Rest eines Kupferphthalocyanins.

Bei dem Rest eines Dioxazinfarbstoffes handelt es sich bevorzugt um einen Rest der Formel 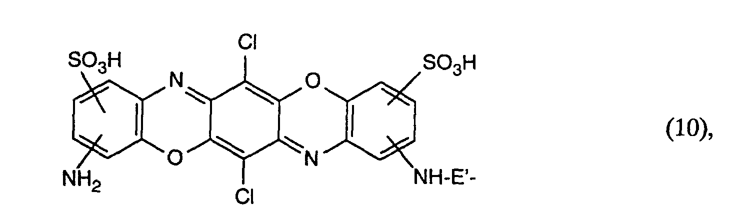 worin E' ein gegebenenfalls durch C₁-C₄-Alkyl, Halogen, Carboxy oder Sulfo substituierter Phenylenrest oder ein C₂-C₆-Alkylenrest ist und die äusseren Benzolringe in der Formel (10) keine weiteren Substituenten enthalten oder durch C₁-C₄-Alkyl, C₁-C₄-Alkoxy, Acetylamino, Nitro, Halogen, Carboxy, Sulfo oder -SO₂-Z' weitersubstituiert sind, wobei Z' β-Sulfatoethyl, β-Thiosulfatoethyl, β-Phosphatoethyl, β-Acyloxyethyl, β-Halogenethyl oder Vinyl ist.

Bei dem Rest eines Anthrachinonfarbstoffes handelt es sich bevorzugt um einen Rest der Formel 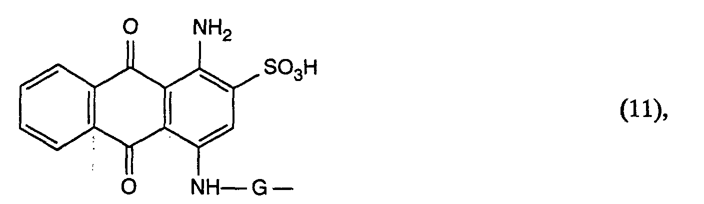 worin G ein Phenylen-, Cyclohexylen-, Phenylenmethylen- oder C₂-C₆-Alkylenrest ist, wobei der Anthrachinonkern durch eine weitere Sulfogruppe, und G als Phenylrest durch C₁-C₄-Alkyl, C₁-C₄-Alkoxy, Halogen, Carboxy oder Sulfo substituiert sein kann, und der Farbstoff vorzugsweise mindestens 2 Sulfogruppen enthält. Vorzugsweise ist G ein gegebenenfalls durch C₁-C₄-Alkyl, C₁-C₄-Alkoxy, Halogen, Carboxy oder Sulfo substituierter Phenylrest.

Ganz besonders bevorzugt sind A₁ und A₂ Reste der Formeln (8a) bis (8u), (9), (10) oder (11). Für die Reste Y₁, Y₂, R₁, R₂, R₃ und R₄ sowie für die Zahl n der Farbstoffe der Formel (1) gelten hierbei die oben angegebenen Bedeutungen und Bevorzugungen.

Als Farbstoffe der Formel (1) kommen insbesondere solche in Betracht, worin Y₁ und Y₂ unabhängig voneinander Fluor oder vorzugsweise Chlor bedeuten, R₁, R₂, R₃ und R₄ unabhängig voneinander Wasserstoff, Methyl oder Aethyl, insbesondere Wasserstoff, sind, und A₁ und A₂ Reste der Formeln (8a) bis (8u), (9), (10) oder (11) sind. Für die Zahl n gelten hierbei die oben angegebenen Bedeutungen und Bevorzugungen.

Gegenstand der vorliegenden Erfindung sind ferner Farbstoffmischungen, welche dadurch gekennzeichnet sind, dass sie mindestens zwei Farbstoffe der obigen Formel (1) enthalten. Für die Farbstoffe der Formel (1) und für die Reste A₁, A₂, Y₁, Y₂, R₁, R₂, R₃ und R₄ sowie für die Zahl n gelten hierbei die oben angegebenen Bedeutungen und Bevorzugungen.

Vorzugsweise enthalten die erfindungsgemässen Farbstoffmischungen mindestens zwei Farbstoffe der Formel (1), welche sich voneinander hinsichtlich des die beiden Triazinringe verbindenden Brückenglieds unterscheiden. Vorzugssweise unterscheiden sich die Farbstoffe hinsichtlich der Zahl n. Für die Zahl n gelten hierbei die oben angegebenen Bedeutungen und Bevorzugungen. Besonders bevorzugt sind hierbei die Bedeutungen der weiteren Substituenten der zwei genannten Farbstoffe der Formel (1) identisch.

Von ganz besonderem Interesse sind Farbstoffmischungen, welche mindestens zwei Farbstoffe der Formel (1) enthalten, wobei das Verhältnis dieser zwei Farbstoffe der Formel (1) bevorzugt 5:95 bis 95:5, insbesondere 10:90 bis 90:10 und vorzugsweise 40:60 bis 60:40 ist.

Gegenstand der vorliegenden Erfindung ist weiterhin ein Verfahren zur Herstellung von Farbstoffen der Formel (1), welches dadurch gekennzeichnet ist, dass man mindestens einen Rest der Formeln

A₁-N(R₁)H (12a) und A₂-N(R₄)H (12b)

oder entsprechende Farbstoffvorprodukte, mindestens eine Halogentriazinverbindung und mindestens ein Diamin der Formel 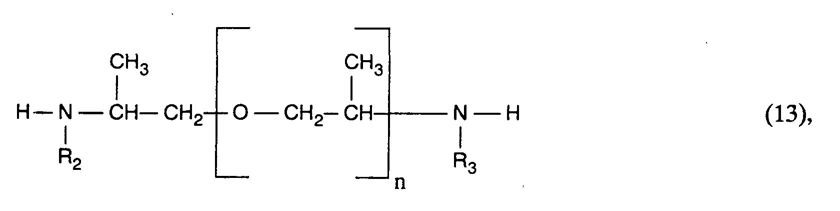 sowie gegebenenfalls mindestens eine Verbindung der Formeln

Y₁-H (14a) und Y₂-H (14b)

in beliebiger Reihenfolge miteinander umsetzt, wobei A₁, A₂, R₁, R₂, R₃, R₄ und n die unter der obigen Formel (1) angegebenen Bedeutungen haben und Y₁ und Y₂ unabhängig voneinander Carboxypyridinium, gegebenenfalls substituiertes Amino oder einen über ein Stickstoffatom gebundenen heterocyclischen Rest bedeuten, wobei man gegebenenfalls eine weitere Umwandlungsreaktion anschliesst und, im Falle der Verwendung von Farbstoffvorprodukten, die erhaltenen Zwischenprodukte in die gewünschten Farbstoffe überführt.

Bei der Herstellung der Endfarbstoffe aus Vorprodukten handelt es sich vor allem um Kupplungen, die zu Azofarbstoffen führen. Die Kupplungsreaktionen werden gemäss an sich bekannter Verfahren ausgeführt, wie z.B. in wässrigem Medium bei sauren, neutralen bis schwach alkalischen pH-Werten, insbesondere bei einem pH-Wert von 2 bis 8, und bei Temperaturen von z.B. 0 bis 50°C.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Eine Verfahrensvariante besteht darin, dass man einen der Reste der Formeln (12a) und (12b) mit einer Halogentriazinverbindung kondensiert, das erhaltene Prokukt mit einem Diamin der Formel (13) kondensiert und das erhaltene Reaktionsprodukt mit dem anderen Rest der Formeln (12b) und (12a), welcher zuvor mit einer Halogentriazinverbindung kondensiert wurde, umsetzt. Gegebenenfalls wird eine Kondensation mit mindestens einer der Verbindungen der Formeln (14a) und (14b) angeschlossen.

Gegenstand der vorliegenden Erfindung ist ferner ein Verfahren zur Herstellung der erfindungsgemässen Farbstoffmischungen. Dies kann zum einen durch Mischen der Einzelkomponenten erfolgen, oder wie oben für die Herstellung der Farbstoffe der Formel (1) angegeben, wobei man mindestens zwei voneinander verschiedene Reste der Formeln (12a) und (12b), oder mindestens zwei voneinander verschiedene Reste der Formeln (14a) und (14b), oder mindestens zwei voneinander verschiedene Reste der Formel (13), oder mindestens zwei voneinander verschiedene Halogentrazinverbindungen verwendet. Bevorzugt verwendet man verschiedene Diamine der Formel (13).

Haben die Reste der Formeln (12a) und (12b) z.B. identische Bedeutungen, so werden vorzugsweise diese Reste mit einer Halogentriazinverbindung kondensiert und das erhaltene Prokukt mit mindestens zwei Diaminen der Formel (13) kondensiert.

Verwendet man nur ein Diamin der Formel (13), so wird z.B. eine Mischung aus voneinander verschiedenen Verbindungen der Formeln (12a) und (12b) zunächst mit einer Halogentriazinverbindung kondensiert und das erhaltene Reaktionsgemisch dann mit einem Diamin der Formel (13) umgesetzt.

Als Halogentriazinverbindungen verwendet man vorzugsweise Cyanurhalogenide, wie z.B. Cyanurchlorid oder Cyanurfluorid. Die Einführung einer Carboxypyridiniumverbindung oder einer Verbindung der Formel (14a) oder (14b) erfolgt in der Regel im Anschluss an eine Kondensationsreaktion der entsprechenden Cyanurhalogenide und erfolgt gemäss hierzu bekannter Verfahren.

Die Verbindungen der Formeln (12a), (12b), (13), (14a), (14b) sowie die Halogentriazinverbindungen sind bekannt oder können in Analogie zu bekannten Verbindungen erhalten werden.

Die einzelnen Kondensationsreaktionen erfolgen z.B. gemäss an sich bekannter Verfahren, in der Regel in wässriger Lösung, bei einer Temperatur von beispielsweise 0 bis 50°C und einem pH-Wert von z.B. 4 bis 10.

Gemische von Einzelfarbstoffen können in der Regel durch geeignete Trennmethoden, wie z.B. durch chromatographische Trennmethoden, getrennt werden.

Die Farbstoffe der Formel (1) welche eine Sulfo- oder Sulfatogruppe enthalten liegen entweder in der Form ihrer freien Säure oder vorzugsweise als deren Salze vor. Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Farbstoffmischungen und die erfindungsgemässen Farbstoffe eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasern und Polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose. Die erfindungsgemässen Farbstoffmischungen und die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die erfindungsgemässen Farbstoffmischungen und die erfindungsgemässen Farbstoffe zum Färben oder Bedrucken von cellulosehaltigen Fasermaterialien. Weiterhin können sie zum Färben oder Bedrucken von natürlichen oder synthetischen Polyamidfasermaterialien verwendet werden.

Die erfindungsgemässen Farbstoffmischungen und die erfindungsgemässen Farbstoffe lassen sich auf verschiedene Weise auf das Fasermaterial applizieren und gegebenenfalls auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Besonders geeignet sind sie als Reaktivfarbstoffe für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Farbstoffe und die erfindungsgemässen Farbstoffmischungen zeichnen sich durch hohe Reaktivität, gutes Fixiervermögen, ein sehr gutes Aufbauvermögen und gute Löslichkeit aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade der Reaktivfarbstoffe sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe und insbesondere die erfindungsgemässen Farbstoffmischungen eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen und die mit den erfindungsgemässen Farbstoffmischungen hergestellten Reaktiv-Färbungen und -Drucke besitzen eine hohe Farbstärke und eine hohe Faser-Farbstoff-Bindungsstabilität, sowohl in saurem als auch in alkalischem Bereich. Die mit den erfindungsgemässen Farbstoffen und die mit den erfindungsgemässen Farbstoffmischungen hergestellten Färbungen und Drucke besitzen weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: In 50 Teilen Wasser werden unter Zugabe eines Netzmittels und 5 Teilen Dinatriumhydrogenphosphat bei einer Temperatur von 0°C 19 Teile Cyanurchlorid kräftig verrührt. Dazu tropft man eine neutrale Lösung von 27 Teilen 4,6-Diaminobenzol-1,3-disulfonsäure in 200 Teilen Wasser; dabei wird der pH durch Zugabe von Natronlauge bei einem Wert von 4,5 gehalten. Nach beendeter Reaktion werden 25 Teile 32%-iger Salzsäure und 7 Teile Natriumnitrit zugegeben und 30 Minuten gerührt, der Nitritüberschuss wird mit Sulfaminsäure zerstört. Die Suspension tropft man in eine neutrale Lösung von 20 Teilen 1-Ethyl-6-hydroxy-4-methyl-2-pyridoncarbonylamid in 50 Teilen Wasser und hält dabei den pH durch Zugabe einer wässrigen Natriumhydroxidlösung bei einem Wert von 7 konstant. Anschliessend wird eine Lösung von 9,5 Teilen eines Diamins der Formel 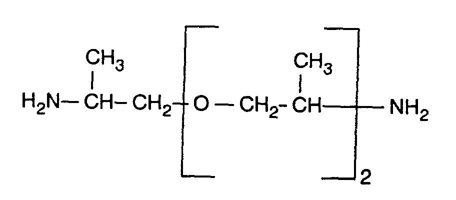 in 30 Teilen Wasser derart zugetropft, dass der pH einen Wert von 9 nicht übersteigt. Gegen Ende der Reaktion wird dann auf eine Temperatur von 40°C erhitzt. Nach beendeter Kondensation wird das erhaltene Produkt durch Zugabe von Natriumchlorid gefällt, abgesaugt und getrocknet. Man erhält einen Farbstoff, welcher in Form der freien Säure der Verbindung der Formel 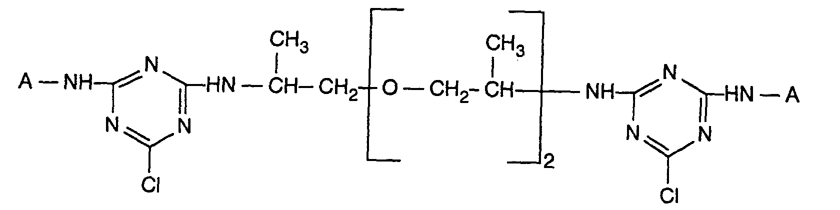 entspricht, worin
A jeweils ein Rest der Formel 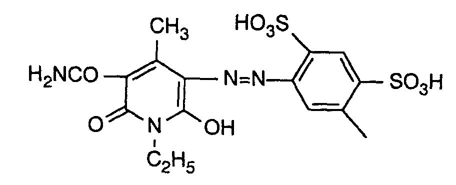 ist. Der erhaltene Farbstoff färbt Baumwolle in brillanten gelben Farbtönen.

Beispiel 2: Zu einer neutralen Lösung von 50 Teilen 7-Amino-4-hydroxy-3-(2,5-disulfophenylazo)-naphthalin-2-sulfonsäure und 5 Teilen Dinatriumhydrogenphosphat in 500 Teilen Wasser werden bei einer Temperatur unterhalb von 2°C 14 Teile Cyanurfluorid zugetropft; dabei wird der pH-Wert durch Zugabe von wässriger Natriumhydroxidlösung konstant gehalten. Nach beendeter Reaktion tropft man eine Lösung von 18,5 Teilen eines Diamins der Formel 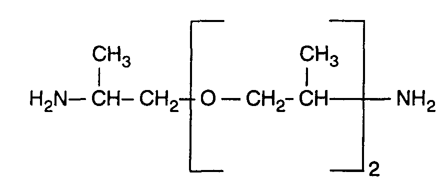 in 90 Teilen Wasser derart zu, dass der pH einen Wert von 6 nicht übersteigt und hält den pH bei einem Wert von 6. Man erhält die Lösung 1.

Zu einer neutralen Lösung von 45 Teilen 7-Amino-4-hydroxy-3-(4-methoxy-2-sulfo-phenylazo)-naphthalin-2-sulfonsäure und 5 Teilen Dinatriumhydrogenphosphat in 500 Teilen Wasser werden bei einer Temperatur unterhalb von 2°C 14 Teile Cyanurfluorid zugetropft; dabei wird der pH-Wert durch Zugabe von wässriger Natriumhydroxidlösung konstant gehalten. Man erhält die Lösung 2.

Zu Lösung 1 wird Lösung 2 gegeben, der pH auf einen Wert von 8,5 erhöht und gehalten. Man lässt auf Raumtemperatur erwärmen, befreit die Lösung dialytisch von Salz und dampft das erhaltene Produkt ein. Man erhält eine Mischung der in Form der freien Säuren angegebenen Farbstoffe der Formeln 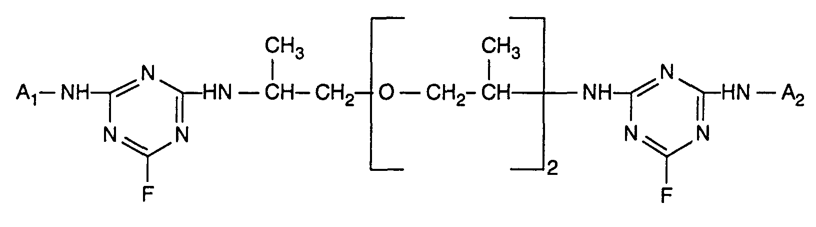 und 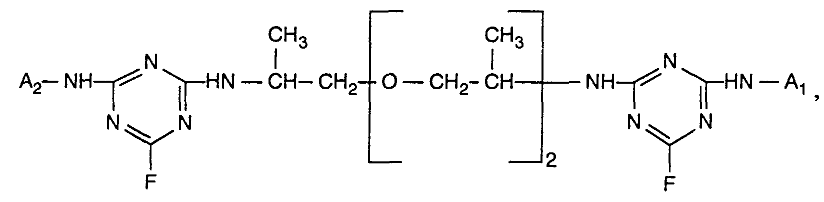 worin A₁ ein Rest der Formel 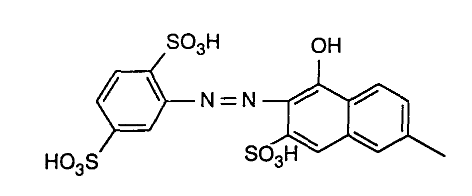 und A₂ ein Rest der Formel 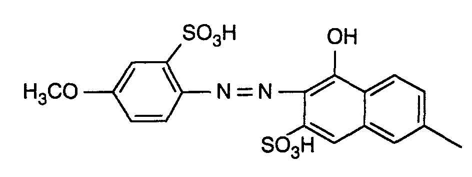 ist. Die erhaltene Farbstoffmischung färbt Baumwolle in brillanten orangen Farbtönen.

Beispiele 3 bis 106: In analoger Weise zu den Angaben in Beispiel 1 oder 2 können Farbstoffe der Formel 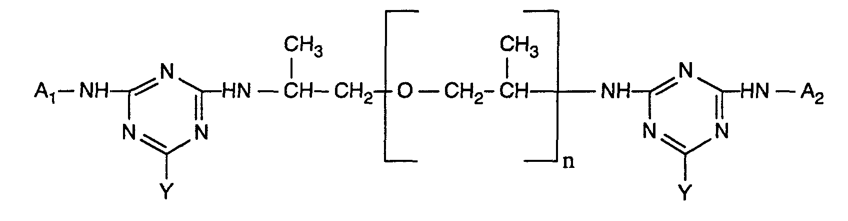 erhalten werden, worin A₁, A₂, n und Y die in der folgenden Tabelle 1 in den Spalten 2 bis 5 angegebenen Bedeutungen haben. Die Farbstoffe färben Baumwolle in den in Tabelle 1 in Spalte 6 angegebenen Farbtönen. Die Reste A₁ und A₂ sind mit den Buchstaben A bis Z6 bezeichnet, welche folgende Bedeutungen haben:

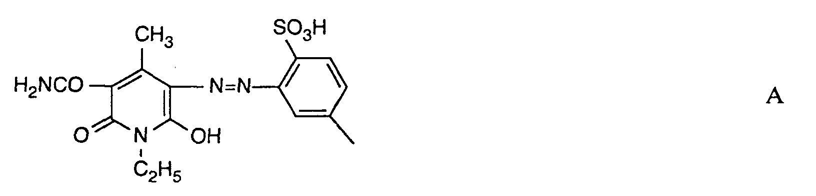

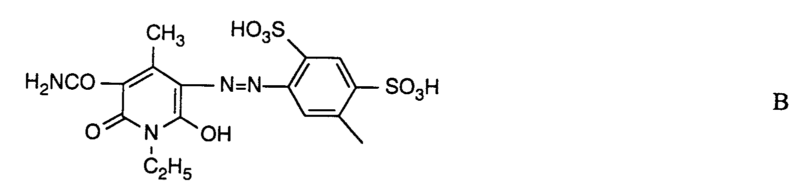

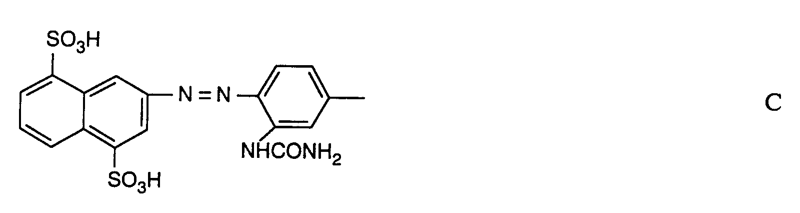

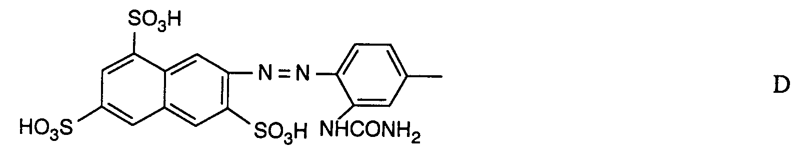

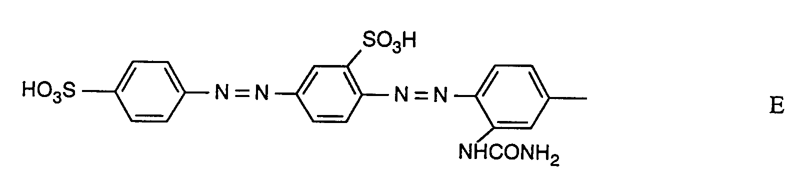

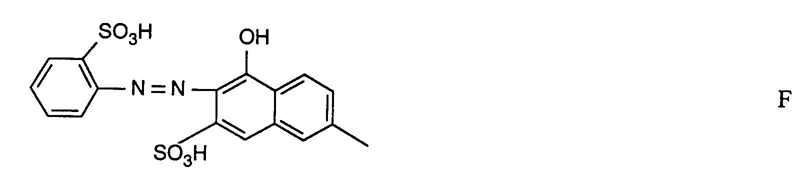

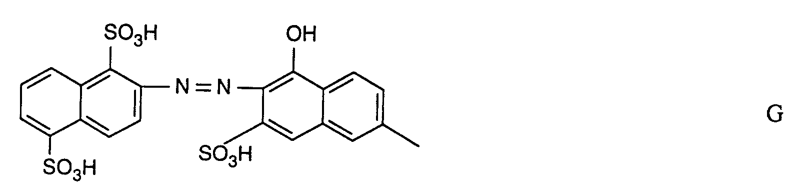

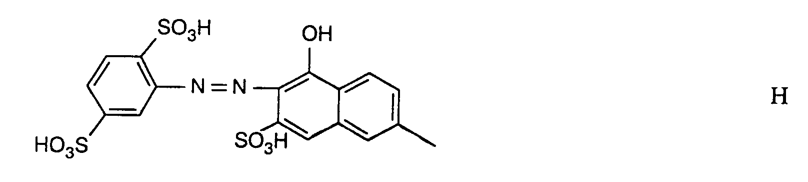

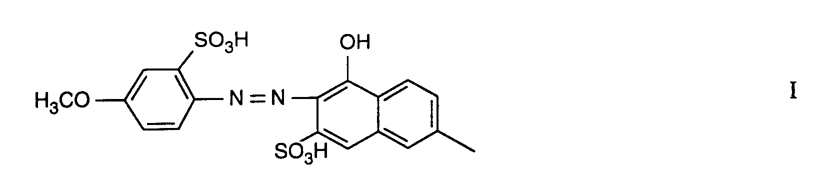

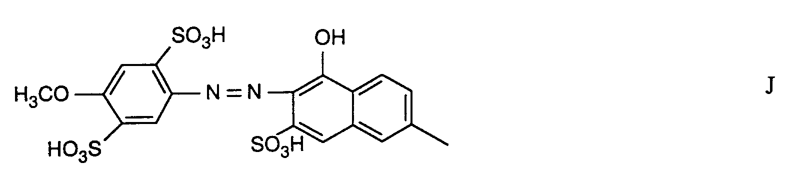

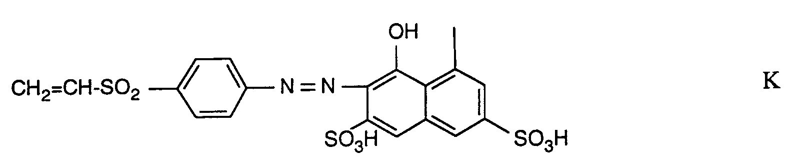

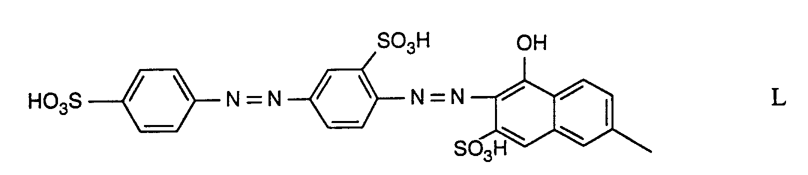

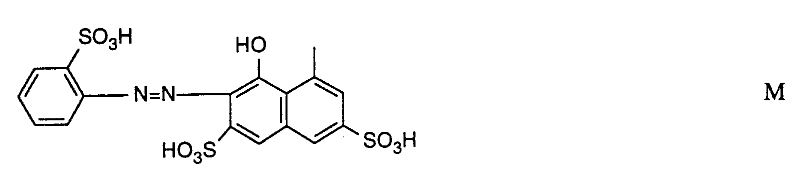

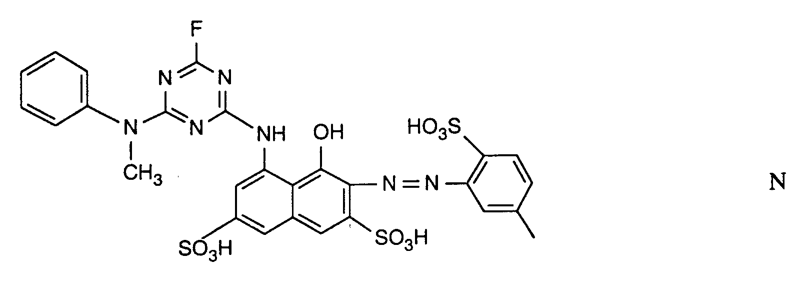

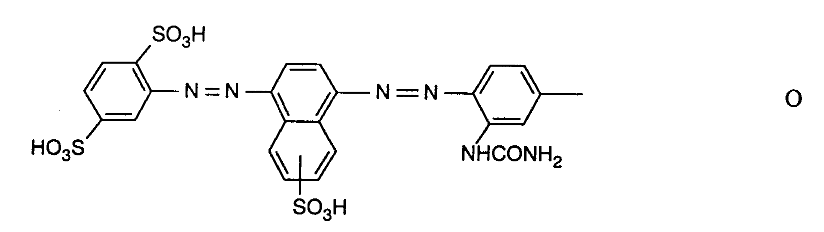

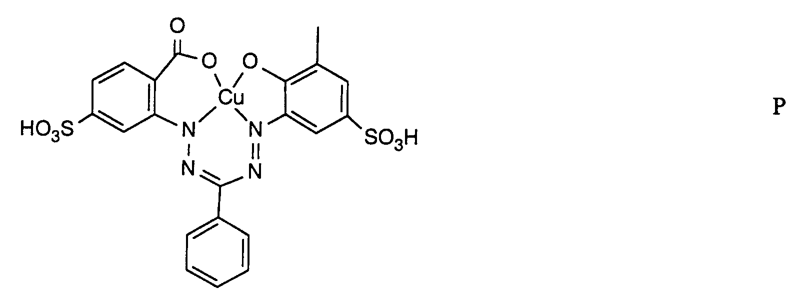

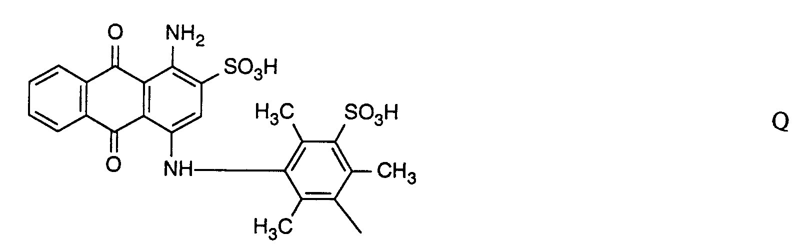

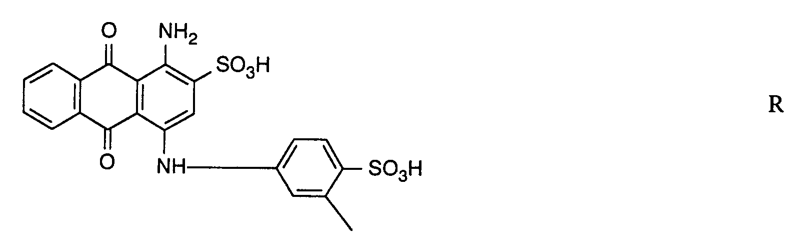

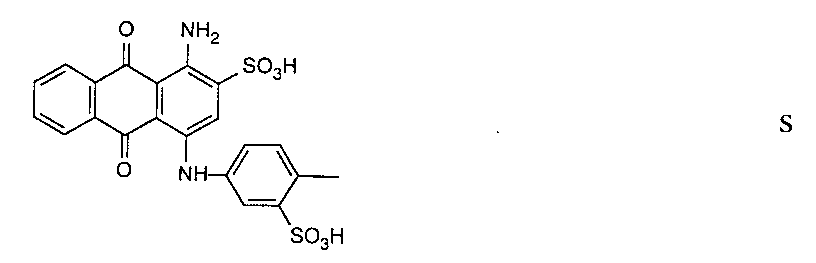

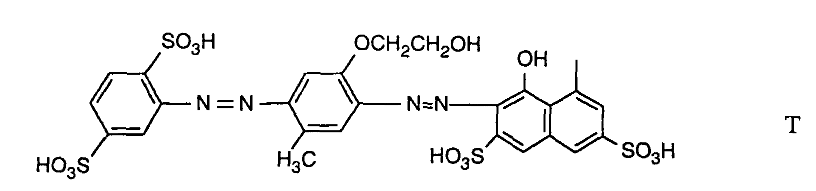

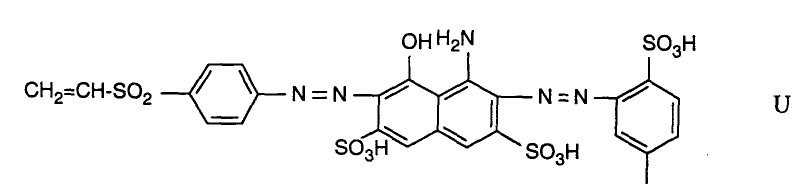

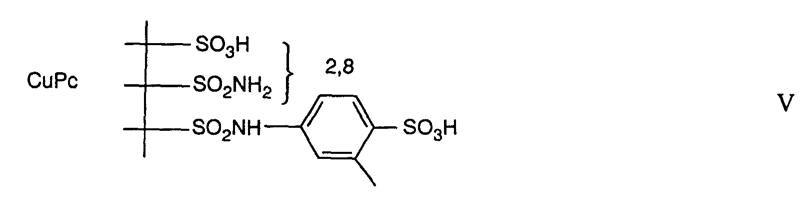

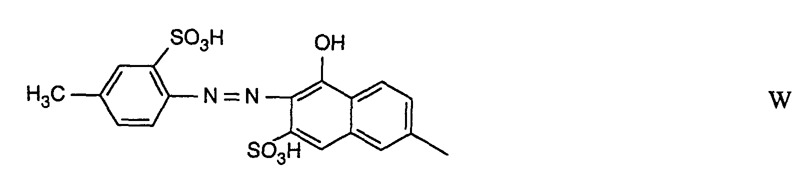

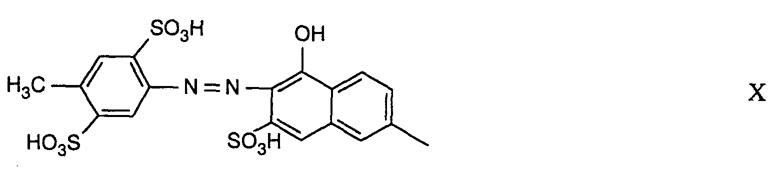

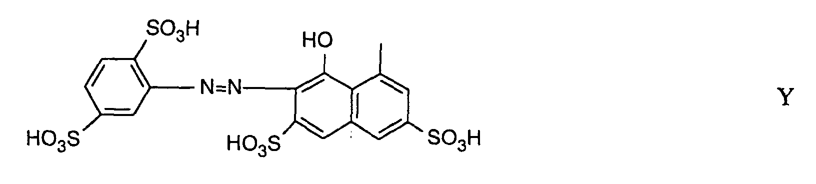

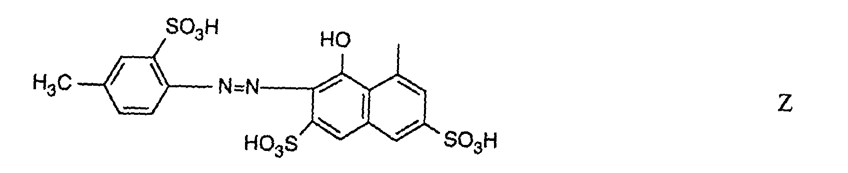

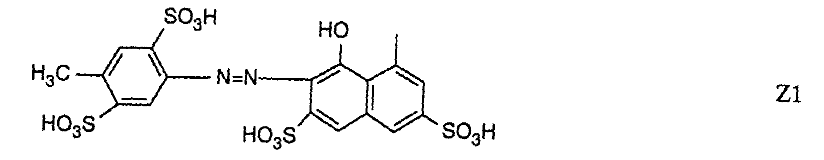

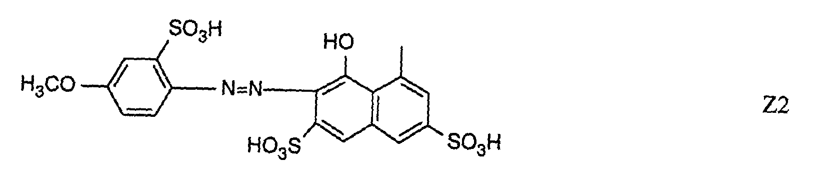

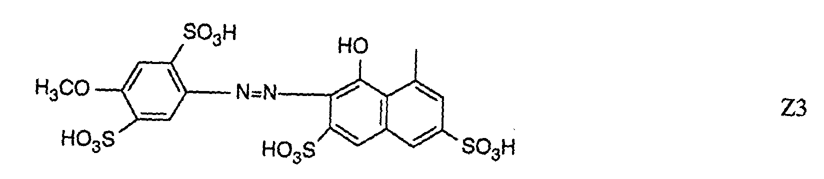

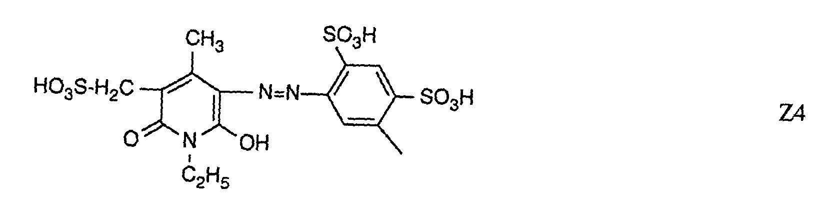

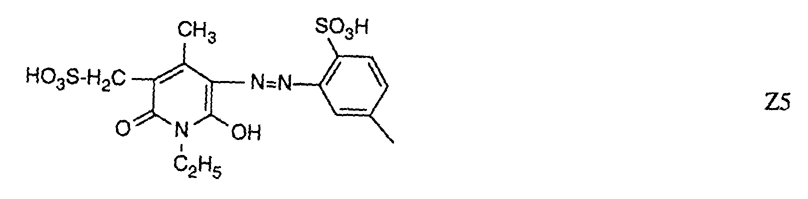

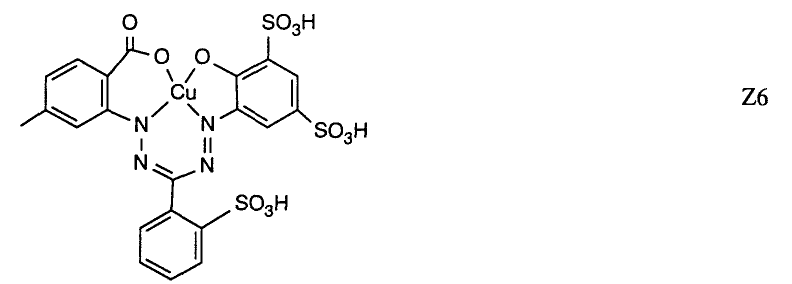

**Tabelle 1**

| Bsp. | A₁ | A₂ | n | Y | Farbton auf Baumwolle |
|---|---|---|---|---|---|
| 3 | A | A | 2 | Chlor | gelb |
| 4 | B | B | 2 | Chlor | gelb |
| 5 | C | C | 2 | Chlor | goldgelb |
| 6 | D | D | 3 | Chlor | goldgelb |
| 7 | E | E | 3 | Chlor | orange |
| 8 | F | F | 2 | Chlor | orange |
| 9 | G | G | 3 | Chlor | orange |
| 10 | H | H | 2 | Chlor | orange |
| 11 | I | I | 2 | Chlor | scharlach |
| 12 | J | J | 2 | Chlor | scharlach |
| 13 | K | K | 3 | Chlor | rot |
| 14 | L | L | 3 | Chlor | rot |
| 15 | M | M | 2 | Chlor | rot |
| 16 | N | N | 2 | Chlor | rot |
| 17 | O | O | 2 | Chlor | braun |
| 18 | P | P | 3 | Chlor | blau |
| 19 | Q | Q | 3 | Chlor | blau |
| 20 | R | R | 3 | Chlor | blau |
| 21 | S | S | 3 | Chlor | blau |
| 22 | T | T | 3 | Chlor | blau |
| 23 | U | U | 2 | Chlor | marineblau |
| 24 | V | V | 3 | Chlor | türkisblau |
| 25 | W | W | 2 | Chlor | scharlach |
| 26 | X | X | 2 | Chlor | scharlach |
| 27 | Y | Y | 3 | Chlor | rot |
| 28 | Z | Z | 2 | Chlor | rot |
| 29 | Z1 | Z1 | 2 | Chlor | rot |
| 30 | Z2 | Z2 | 2 | Chlor | blaustichig rot |
| 31 | Z3 | Z3 | 2 | Chlor | blaustichig rot |
| 32 | Z4 | Z4 | 3 | Chlor | gelb |
| 33 | Z5 | Z5 | 3 | Chlor | gelb |
| 34 | A | A | 2 | Fluor | gelb |
| 35 | B | B | 2 | Fluor | gelb |
| 36 | C | C | 2 | Fluor | goldgelb |
| 37 | D | D | 3 | Fluor | goldgelb |
| 38 | E | E | 3 | Fluor | orange |
| 39 | F | F | 2 | Fluor | orange |
| 40 | G | G | 3 | Fluor | orange |
| 41 | H | H | 2 | Fluor | orange |
| 42 | I | I | 2 | Fluor | scharlach |
| 43 | J | J | 2 | Fluor | scharlach |
| 44 | K | K | 3 | Fluor | rot |
| 45 | L | L | 3 | Fluor | rot |
| 46 | M | M | 2 | Fluor | rot |
| 47 | N | N | 2 | Fluor | rot |
| 48 | O | O | 2 | Fluor | braun |
| 49 | P | P | 3 | Fluor | blau |
| 50 | Q | Q | 3 | Fluor | blau |
| 51 | R | R | 3 | Fluor | blau |
| 52 | S | S | 3 | Fluor | blau |
| 53 | T | T | 3 | Fluor | blau |
| 54 | U | U | 2 | Fluor | marineblau |
| 55 | V | V | 6 | Fluor | türkisblau |
| 56 | W | W | 2 | Fluor | scharlach |
| 57 | X | X | 2 | Fluor | scharlach |
| 58 | Y | Y | 3 | Fluor | rot |
| 59 | Z | Z | 2 | Fluor | rot |
| 60 | Z1 | Z1 | 2 | Fluor | rot |
| 61 | Z2 | Z2 | 5 | Fluor | blaustichig rot |
| 62 | Z3 | Z3 | 2 | Fluor | blaustichig rot |
| 63 | Z4 | Z4 | 3 | Fluor | gelb |
| 64 | Z5 | Z5 | 4 | Fluor | gelb |
| 65 | Z6 | Z6 | 2 | Fluor | blau |
| 66 | A | Q | 2 | Chlor | grün |
| 67 | A | R | 1 | Chlor | grün |
| 68 | B | D | 3 | Chlor | rotstichig gelb |
| 69 | C | D | 2 | Fluor | goldgelb |
| 70 | C | L | 4 | Chlor | rotstichig orange |
| 71 | D | R | 2 | Chlor | oliv |
| 72 | D | S | 4 | Chlor | oliv |
| 73 | E | L | 3 | Chlor | scharlach |
| 74 | E | O | 6 | Fluor | braun |
| 75 | F | H | 7 | Chlor | orange |
| 76 | F | I | 2 | Fluor | rotstichig orange |
| 77 | G | H | 3 | Chlor | scharlach |
| 78 | G | I | 5 | Chlor | rotorange |
| 79 | H | Z2 | 2 | Chlor | rot |
| 80 | H | Z3 | 2 | Chlor | rot |
| 81 | I | M | 4 | Chlor | rot |
| 82 | I | N | 3 | Chlor | rot |
| 83 | J | Z2 | 2 | Chlor | rot |
| 84 | J | Z3 | 3 | Chlor | rot |
| 85 | K | L | 3 | Fluor | rot |
| 86 | K | M | 2 | Chlor | rot |
| 87 | L | S | 2 | Chlor | violett |
| 88 | L | U | 2 | Chlor | violett |
| 89 | Z6 | Z6 | 2 | Chlor | blau |
| 90 | M | V | 2 | Chlor | violett |
| 91 | N | P | 2 | Chlor | violett |
| 92 | N | S | 3 | Chlor | violett |
| 93 | P | T | 3 | Chlor | blau |
| 94 | P | U | 3 | Chlor | blau |
| 95 | Q | R | 3 | Fluor | blau |
| 96 | Q | S | 5 | Chlor | blau |
| 97 | R | T | 2 | Chlor | blau |
| 98 | R | U | 2 | Chlor | blau |
| 99 | S | T | 2 | Chlor | blau |
| 100 | T | U | 4 | Chlor | marineblau |
| 101 | Y | N | 3 | Chlor | rot |
| 102 | Z | N | 3 | Chlor | rot |
| 103 | Z1 | W | 3 | Chlor | gelbstichig rot |
| 104 | Z3 | N | 2 | Fluor | blaustichig rot |
| 105 | Z4 | V | 2 | Chlor | grün |
| 106 | Z5 | B | 3 | Chlor | grünstichig gelb |

Beispiel 107: In 50 Teilen Wasser werden unter Zugabe eines Netzmittels und 5 Teilen Dinatriumhydrogenphosphat bei einer Temperatur von 0°C 19 Teile Cyanurchlorid kräftig verrührt. Dazu tropft man eine neutrale Lösung von 27 Teilen 4,6-Diaminobenzol-1,3-disulfonsäure in 200 Teilen Wasser; dabei wird der pH durch Zugabe von Natronlauge bei einem Wert von 4,5 gehalten. Nach beendeter Reaktion werden 25 Teile 32%-iger Salzsäure und 7 Teile Natriumnitrit zugegeben und 30 Minuten gerührt, der Nitritüberschuss wird mit Sulfaminsäure zerstört. Die Suspension tropft man in eine neutrale Lösung von 20 Teilen 1-Ethyl-6-hydroxy-4-methyl-2-pyridoncarbonylamid in 50 Teilen Wasser und hält dabei den pH durch Zugabe einer wässrigen Natriumhydroxidlösung bei einem Wert von 7 konstant. Anschliessend wird eine Lösung von 4 Teilen eines Diamins der Formel 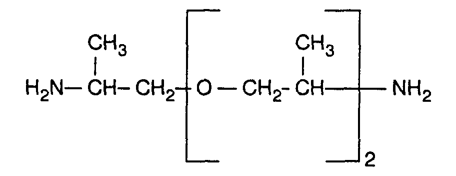 und 5,3 Teilen eines Diamins der Formel 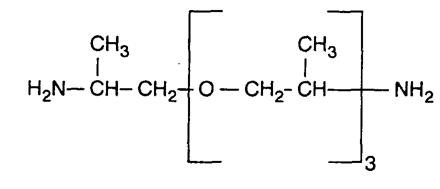 in 30 Teilen Wasser derart zugetropft, dass der pH einen Wert von 9 nicht übersteigt.

Gegen Ende der Reaktion wird dann auf eine Temperatur von 40°C erhitzt. Nach beendeter Kondensation wird das erhaltene Produkt durch Zugabe von Natriumchlorid gefällt, abgesaugt und getrocknet. Man erhält eine Farbstoffmischung, welche die in Form der freien Säure angegebenen Farstoffe der Formeln 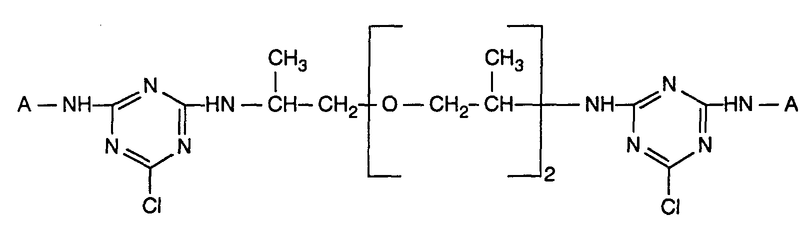 und 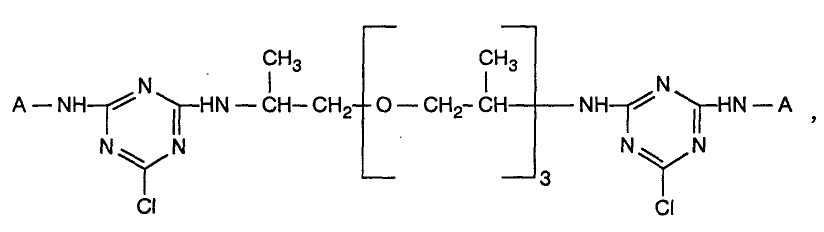 worin A jeweils ein Rest der Formel 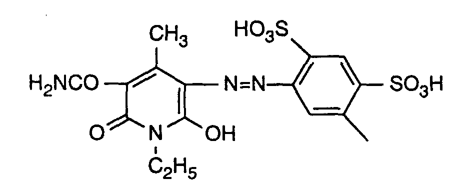 ist, enthält. Die erhaltene Farbstoffmischung färbt Baumwolle in brillanten gelben Farbtönen.

Beispiel 108: Zu einer neutralen Lösung von 42 Teilen 7-Amino-4-hydroxy-3-(2-sulfophenylazo)-naphthalin-2-sulfonsäure und 5 Teilen Dinatriumhydrogenphosphat in 500 Teilen Wasser werden bei einer Temperatur unterhalb von 2°C 14 Teile Cyanurfluorid zugetropft; dabei wird der pH-Wert durch Zugabe von wässriger Natriumhydroxidlösung konstant gehalten. Nach beendeter Reaktion tropft man eine Lösung von 4 Teilen eines Diamins der Formel 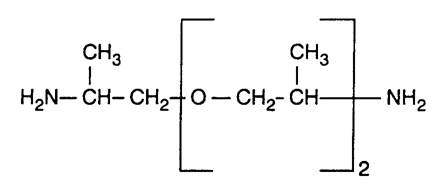 und 5,3 Teilen eines Diamins der Formel 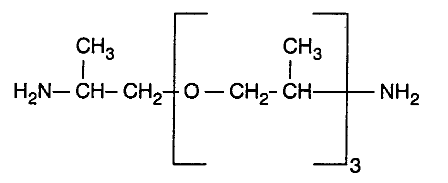 in 30 Teilen Wasser derart zu, dass der pH einen Wert von 9,5 nicht übersteigt und hält den pH bei einem Wert von 9,5 durch Zugabe von Natronlauge konstant. Man lässt auf Raumtemperatur erwärmen, befreit die Lösung dialytisch von Salz und dampft das erhaltene Produkt ein. Man erhält eine Farbstoffmischung, welche die in Form der freien Säure angegebenen Farbstoffe der Formeln 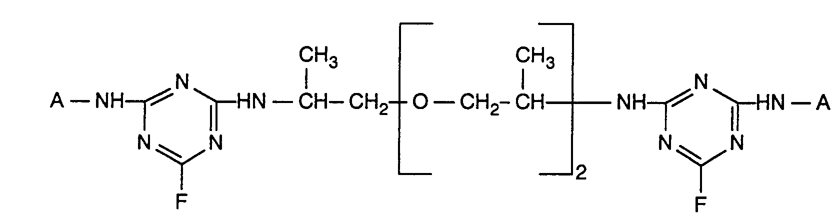 und 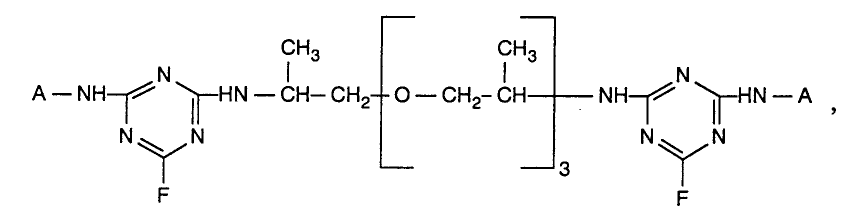 worin A jeweils ein Rest der Formel 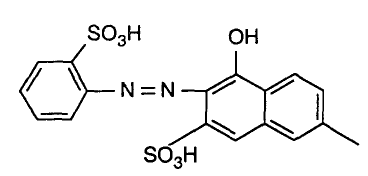 ist, enthält. Die erhaltene Farbstoffmischung färbt Baumwolle in brillanten orangen Farbtönen.

Beispiele 109 bis 212: In analoger Weise zu den Angaben in Beispiel 107 oder 108 können Farbstoffmischungen erhalten werden, welche als Hauptkomponenten die Farbstoffe der Formeln 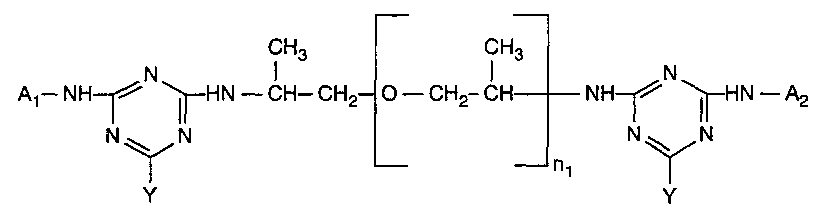 und 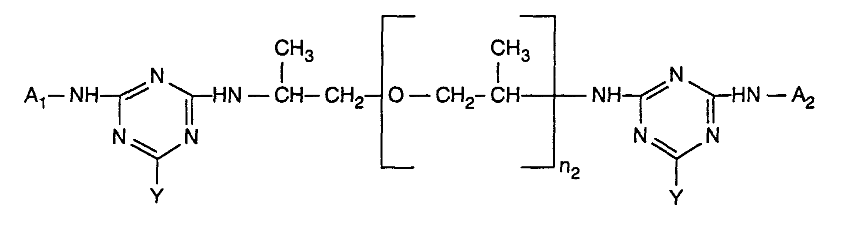 enthalten, wobei A₁, A₂, Y, n₁ und n₂ die in der folgenden Tabelle 2 in den Spalten 2 bis 6 angegebenen Bedeutungen haben. Die Farbstoffmischungen färben Baumwolle in den in Tabelle 2 in Spalte 7 angegebenen Farbtönen. Die Reste A₁ und A₂ sind mit den Buchstaben A bis Z6 bezeichnet, welche die oben angegebenen Bedeutungen haben.

**Tabelle 2**

| Bsp. | A₁ | A₂ | n₁ | n₂ | Y | Farbton auf Baumwolle |
|---|---|---|---|---|---|---|
| 109 | A | A | 3 | 2 | Chlor | gelb |
| 110 | B | B | 3 | 2 | Chlor | gelb |
| 111 | C | C | 3 | 2 | Chlor | goldgelb |
| 112 | D | D | 2 | 3 | Chlor | goldgelb |
| 113 | E | E | 2 | 3 | Chlor | orange |
| 114 | F | F | 3 | 2 | Chlor | orange |
| 115 | G | G | 2 | 3 | Chlor | orange |
| 116 | H | H | 3 | 2 | Chlor | orange |
| 117 | I | I | 3 | 2 | Chlor | scharlach |
| 118 | J | J | 3 | 2 | Chlor | scharlach |
| 119 | K | K | 2 | 3 | Chlor | rot |
| 120 | L | L | 2 | 3 | Chlor | rot |
| 121 | M | M | 3 | 2 | Chlor | rot |
| 122 | N | N | 3 | 2 | Chlor | rot |
| 123 | O | O | 3 | 2 | Chlor | braun |
| 124 | P | P | 2 | 3 | Chlor | blau |
| 125 | Q | Q | 2 | 3 | Chlor | blau |
| 126 | R | R | 2 | 3 | Chlor | blau |
| 127 | S | S | 2 | 3 | Chlor | blau |
| 128 | T | T | 2 | 3 | Chlor | blau |
| 129 | U | U | 3 | 2 | Chlor | marineblau |
| 130 | V | V | 2 | 3 | Chlor | türkisblau |
| 131 | W | W | 3 | 2 | Chlor | scharlach |
| 132 | X | X | 3 | 2 | Chlor | scharlach |
| 133 | Y | Y | 2 | 3 | Chlor | rot |
| 134 | Z | Z | 3 | 2 | Chlor | rot |
| 135 | Z1 | Z1 | 3 | 2 | Chlor | rot |
| 136 | Z2 | Z2 | 3 | 2 | Chlor | blaustichig rot |
| 137 | Z3 | Z3 | 3 | 2 | Chlor | blaustichig rot |
| 138 | Z4 | Z4 | 2 | 3 | Chlor | gelb |
| 139 | Z5 | Z5 | 2 | 3 | Chlor | gelb |
| 140 | A | A | 1 | 2 | Fluor | gelb |
| 141 | B | B | 4 | 2 | Fluor | gelb |
| 142 | C | C | 5 | 2 | Fluor | goldgelb |
| 143 | D | D | 6 | 3 | Fluor | goldgelb |
| 144 | E | E | 2 | 3 | Fluor | orange |
| 145 | F | F | 3 | 2 | Fluor | orange |
| 146 | G | G | 2 | 3 | Fluor | orange |
| 147 | H | H | 1 | 2 | Fluor | orange |
| 148 | I | I | 3 | 2 | Fluor | scharlach |
| 149 | J | J | 4 | 2 | Fluor | scharlach |
| 150 | K | K | 5 | 3 | Fluor | rot |
| 151 | L | L | 2 | 3 | Fluor | rot |
| 152 | M | M | 3 | 2 | Fluor | rot |
| 153 | N | N | 4 | 2 | Fluor | rot |
| 154 | O | O | 3 | 2 | Fluor | braun |
| 155 | P | P | 1 | 3 | Fluor | blau |
| 156 | Q | Q | 2 | 3 | Fluor | blau |
| 157 | R | R | 2 | 3 | Fluor | blau |
| 158 | S | S | 2 | 3 | Fluor | blau |
| 159 | T | T | 2 | 3 | Fluor | blau |
| 160 | U | U | 6 | 2 | Fluor | marineblau |
| 161 | V | V | 1 | 6 | Fluor | türkisblau |
| 162 | W | W | 3 | 2 | Fluor | scharlach |
| 163 | X | X | 3 | 2 | Fluor | scharlach |
| 164 | Y | Y | 2 | 3 | Fluor | rot |
| 165 | Z | Z | 4 | 2 | Fluor | rot |
| 166 | Z1 | Z1 | 3 | 2 | Fluor | rot |
| 167 | Z2 | Z2 | 2 | 5 | Fluor | blaustichig rot |
| 168 | Z3 | Z3 | 3 | 2 | Fluor | blaustichig rot |
| 169 | Z4 | Z4 | 2 | 3 | Fluor | gelb |
| 170 | Z5 | Z5 | 2 | 4 | Fluor | gelb |
| 171 | Z6 | Z6 | 2 | 3 | Chlor | blau |
| 172 | A | R | 2 | 3 | Chlor | grün |
| 173 | B | D | 2 | 3 | Chlor | rotstichig gelb |
| 174 | C | D | 2 | 3 | Fluor | goldgelb |
| 175 | C | L | 2 | 3 | Chlor | rotstichig orange |
| 176 | D | R | 2 | 3 | Chlor | oliv |
| 177 | D | S | 2 | 3 | Chlor | oliv |
| 178 | E | L | 2 | 3 | Chlor | scharlach |
| 179 | E | O | 2 | 3 | Fluor | braun |
| 180 | F | H | 2 | 3 | Chlor | orange |
| 181 | F | I | 2 | 3 | Fluor | rotstichig orange |
| 182 | G | H | 3 | 1 | Chlor | scharlach |
| 183 | G | I | 3 | 4 | Chlor | rotorange |
| 184 | H | Z2 | 3 | 2 | Chlor | rot |
| 185 | H | Z3 | 3 | 5 | Chlor | rot |
| 186 | I | M | 3 | 6 | Chlor | rot |
| 187 | I | N | 3 | 2 | Chlor | rot |
| 188 | J | Z2 | 3 | 2 | Chlor | rot |
| 189 | J | Z3 | 3 | 2 | Chlor | rot |
| 190 | K | L | 3 | 2 | Fluor | rot |
| 191 | K | M | 3 | 2 | Chlor | rot |
| 192 | L | S | 3 | 2 | Chlor | violett |
| 193 | L | U | 3 | 1 | Chlor | violett |
| 194 | M | U | 3 | 2 | Chlor | violett |
| 195 | M | V | 2 | 3 | Chlor | violett |
| 196 | N | P | 2 | 3 | Chlor | violett |
| 197 | N | S | 2 | 3 | Chlor | violett |
| 198 | P | T | 2 | 3 | Chlor | blau |
| 199 | P | U | 2 | 3 | Chlor | blau |
| 200 | Q | R | 2 | 3 | Fluor | blau |
| 201 | Q | S | 2 | 3 | Chlor | blau |
| 202 | R | T | 2 | 3 | Chlor | blau |
| 203 | R | U | 2 | 3 | Chlor | blau |
| 204 | S | T | 2 | 3 | Chlor | blau |
| 205 | T | U | 2 | 3 | Chlor | marineblau |
| 206 | Y | N | 3 | 1 | Chlor | rot |
| 207 | Z | N | 3 | 2 | Chlor | rot |
| 208 | Z1 | W | 3 | 2 | Chlor | gelbstichig rot |
| 209 | Z3 | N | 3 | 2 | Fluor | blaustichig rot |
| 210 | Z4 | V | 3 | 2 | Chlor | grün |
| 211 | Z5 | B | 3 | 2 | Chlor | grünstichig gelb |
| 212 | Z6 | Z6 | 3 | 2 | Fluor | blau |

Haben in der obigen Tabelle 2 die Reste A₁ und A₂ voneinander abweichende Bedeutungen, so werden die hierzu benötigten Ausgangsverbindungen als äquimolares Gemisch eingesetzt.

Die in Tabelle 2 angegebenen Farbstoffmischungen können auch durch Mischung der Einzelfarbstoffe hergestellt werden, wobei die Einzelfarbstoffe analog dem Beispiel 1 oder 2 erhalten werden können.

Beispiel 213:
a) In 50 Teilen Wasser werden unter Zugabe eines Netzmittels und 5 Teilen Dinatriumhydrogenphosphat bei einer Temperatur von 0°C 19 Teile Cyanurchlorid kräftig verrührt. Dazu tropft man eine neutrale Lösung von 27 Teilen 4,6-Diaminobenzol-1,3-disulfonsäure in 200 Teilen Wasser, wobei der pH durch Zugabe einer wässrigen Natriumhydroxidlösung bei einem Wert von 4,5 gehalten wird.
b) Zu der wie unter a) angegeben erhaltenen Lösung werden bei einer Temperatur von 0°C 9,5 Teile eines Diamins der Formel 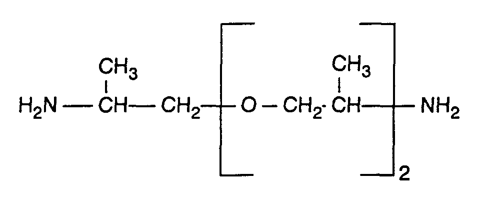 in 30 Teilen Wasser derart zugetropft, dass der pH einen Wert von 9 nicht übersteigt. Anschliessend wird der pH mit einer wässrigen Natriumhydroxidlösung bei einem Wert von 9,5 gehalten. Gegen Ende der Reaktion wird auf eine Temperatur von 40°C erwärmt.
c) Zwecks Herstellung einer separaten Lösung werden 56 Teile 4-(2-Sulfatoethylsulfonyl)-phenylamin in 560 Teilen Wasser angeschlämmt. Es werden 50 Teile 32%-iger Salzsäure und 14 Teile Natriumnitrit zugegeben und es wird 30 Minuten gerührt. Der Nitritüberschuss wird durch Zugabe von wenig Sulfaminsäure zerstört. Dann wird eine neutrale Lösung 64 Teilen 3,6-Disulfo-8-hydroxy-naphthylamin in 640 Teilen Wasser zugegeben und der pH-Wert wird durch Zugabe von Natriumcarbonat langsam bis zur einsetzenden Kupplung erhöht. Nach beendeter Kupplung wird mit wässriger Natriumhydroxidlösung neutralisiert.
d) Zu der gemäss b) erhaltenen Lösung werden 25 Teile 32%-iger Salzsäure und 7 Teile Natriumnitrit gegeben und es wird 30 Minuten gerührt. Der Nitritüberschuss wird durch Zugabe von wenig Sulfaminsäure zerstört. Die erhaltene Diazoverbindung wird in die gemäss c) erhaltene Lösung getropft, wobei der pH durch Zugabe einer wässrigen Natriumhydroxidlösung bei einem Wert zwischen 6 und 7 gehalten wird. Nach beendeter Reaktion wird die Lösung in üblicher Weise entsalzen und eingedampft. Man erhält einen Farbstoff, welcher in Form der freien Säure der Verbindung der Formel 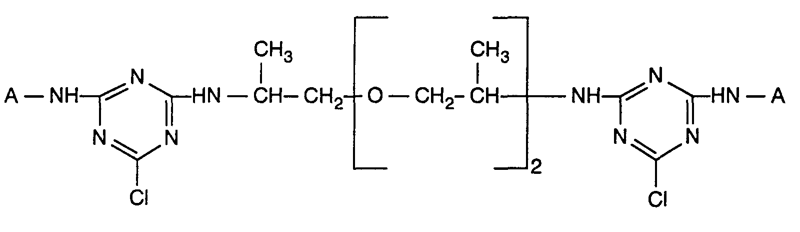 entspricht, wobei A jeweils ein Rest der Formel 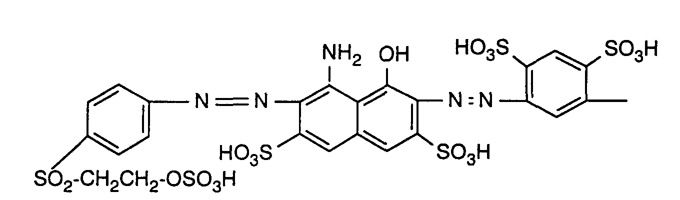 ist. Der erhaltene Farbstoff färbt Baumwolle in blauen Farbtönen.

Beispiel 214:
a) Zu einer neutralen Lösung von 27 Teilen 4,6-Diaminobenzol-1,3-disulfonsäure in 200 Teilen Wasser werden bei einer Temperatur von 0°C 14 Teile Cyanurfluorid getropft. Durch Zugabe einer wässrigen Natriumhydroxidlösung wird der pH bei einem Wert von 7 gehalten.
b) Zu der wie unter a) angegeben erhaltenen Lösung werden bei einer Temperatur von 0°C 9,5 Teile eines Diamins der Formel 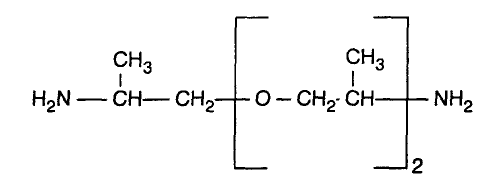 in 30 Teilen Wasser derart zugetropft, dass der pH einen Wert von 9 nicht übersteigt. Anschliessend wird der pH mit einer wässrigen Natriumhydroxidlösung bei einem Wert von 9,5 gehalten. Gegen Ende der Reaktion wird auf eine Temperatur von 40°C erwärmt.
c) Zwecks Herstellung einer separaten Lösung werden 56 Teile 4-(2-Sulfatoethylsulfonyl)-phenylamin in 560 Teilen Wasser angeschlämmt. Es werden 50 Teile 32%-iger Salzsäure und 14 Teile Natriumnitrit zugegeben und es wird 30 Minuten gerührt. Der Nitritüberschuss wird durch Zugabe von wenig Sulfaminsäure zerstört. Dann wird eine neutrale Lösung 64 Teilen 3,6-Disulfo-8-hydroxy-naphthylamin in 640 Teilen Wasser zugegeben und der pH-Wert wird durch Zugabe von Natriumcarbonat langsam bis zur einsetzenden Kupplung erhöht. Nach beendeter Kupplung wird mit wässriger Natriumhydroxidlösung neutralisiert.
d) Zu der gemäss b) erhaltenen Lösung werden 25 Teile 32%-iger Salzsäure und 7 Teile Natriumnitrit gegeben und es wird 30 Minuten gerührt. Der Nitritüberschuss wird durch Zugabe von wenig Sulfaminsäure zerstört. Die erhaltene Diazoverbindung wird in die gemäss c) erhaltene Lösung getropft, wobei der pH durch Zugabe einer wässrigen Natriumhydroxidlösung bei einem Wert zwischen 6 und 7 gehalten wird. Nach beendeter Reaktion wird die Lösung in üblicher Weise entsalzen und eingedampft. Man erhält einen Farbstoff, welcher in Form der freien Säure der Verbindung der Formel 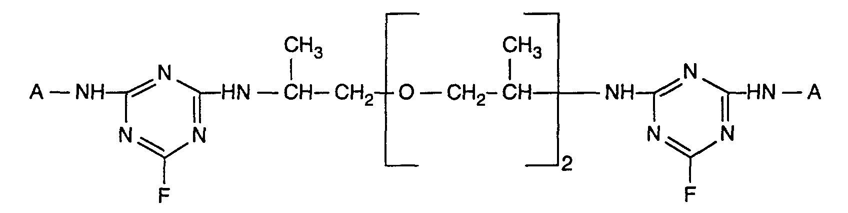 entspricht, wobei A jeweils ein Rest der Formel 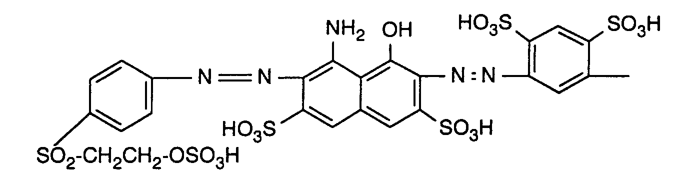 ist. Der erhaltene Farbstoff färbt Baumwolle in blauen Farbtönen.

Beispiel 215:
a) In 50 Teilen Wasser werden unter Zugabe eines Netzmittels und 5 Teilen Dinatriumhydrogenphosphat bei einer Temperatur von 0°C 19 Teile Cyanurchlorid kräftig verrührt. Dazu tropft man eine neutrale Lösung von 27 Teilen 4,6-Diaminobenzol-1,3-disulfonsäure in 200 Teilen Wasser, wobei der pH durch Zugabe einer wässrigen Natriumhydroxidlösung bei einem Wert von 4,5 gehalten wird.
b) Zu der wie unter a) angegeben erhaltenen Lösung werden bei einer Temperatur von 0°C 9,5 Teile eines Diamins der Formel 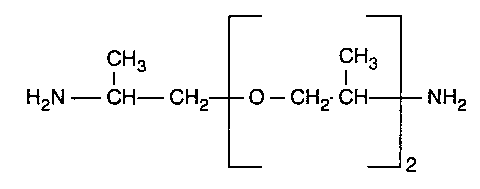 in 30 Teilen Wasser derart zugetropft, dass der pH einen Wert von 9 nicht übersteigt. Anschliessend wird der pH mit einer wässrigen Natriumhydroxidlösung bei einem Wert von 9,5 gehalten. Gegen Ende der Reaktion wird auf eine Temperatur von 40°C erwärmt.
c) In die 40°C warme, gemäss b) erhaltene Lösung werden 3,1 Teile Methylamin getropft. Die Temperatur wird auf 60°C erhöht und der pH wird mit wässriger Natriumhydroxidlösung bei einem Wert von 9,5 gehalten.
d) Zwecks Herstellung einer separaten Lösung werden 56 Teile 4-(2-Sulfatoethylsulfonyl)-phenylamin in 560 Teilen Wasser angeschlämmt. Es werden 50 Teile 32%-iger Salzsäure und 14 Teile Natriumnitrit zugegeben und es wird 30 Minuten gerührt. Der Nitritüberschuss wird durch Zugabe von wenig Sulfaminsäure zerstört. Dann wird eine neutrale Lösung 64 Teilen 3,6-Disulfo-8-hydroxy-naphthylamin in 640 Teilen Wasser zugegeben und der pH-Wert wird durch Zugabe von Natriumcarbonat langsam bis zur einsetzenden Kupplung erhöht. Nach beendeter Kupplung wird mit wässriger Natriumhydroxidlösung neutralisiert.
e) Zu der gemäss c) erhaltenen Lösung werden 25 Teile 32%-iger Salzsäure und 7 Teile Natriumnitrit gegeben und es wird 30 Minuten gerührt. Der Nitritüberschuss wird durch Zugabe von wenig Sulfaminsäure zerstört. Die erhaltene Diazoverbindung wird in die gemäss d) erhaltene Lösung getropft, wobei der pH durch Zugabe einer wässrigen Natriumhydroxidlösung bei einem Wert zwischen 6 und 7 gehalten wird. Nach beendeter Reaktion wird die Lösung in üblicher Weise entsalzen und eingedampft. Man erhält einen Farbstoff, welcher in Form der freien Säure der Verbindung der Formel 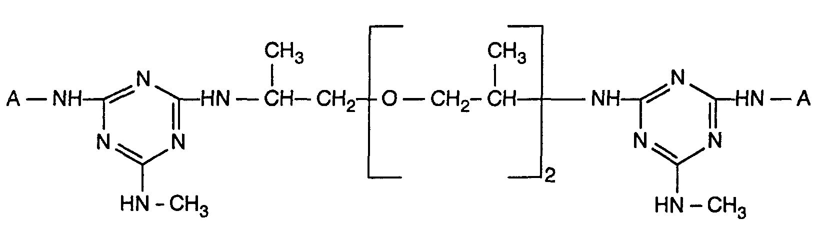 entspricht, wobei A jeweils ein Rest der Formel 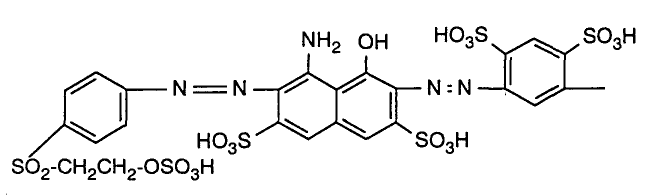 ist. Der erhaltene Farbstoff färbt Baumwolle in blauen Farbtönen.

Beispiele 216 bis 510: In analoger Weise zu den Angaben in den Beispielen 213 bis 215 können Farbstoffe der Formel 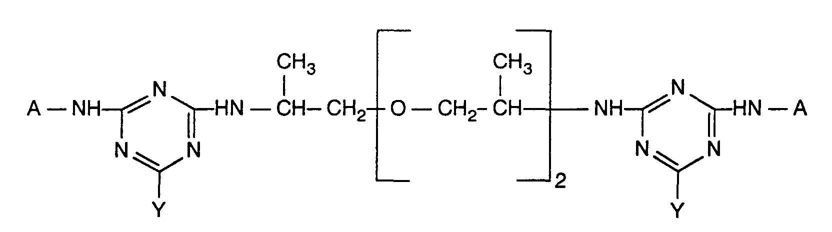 erhalten werden, worin A und Y die in der folgenden Tabelle 3 in den Spalten 2 und 3 angegebenen Bedeutungen haben. Die Farbstoffe färben Baumwolle in blauen Farbtönen.

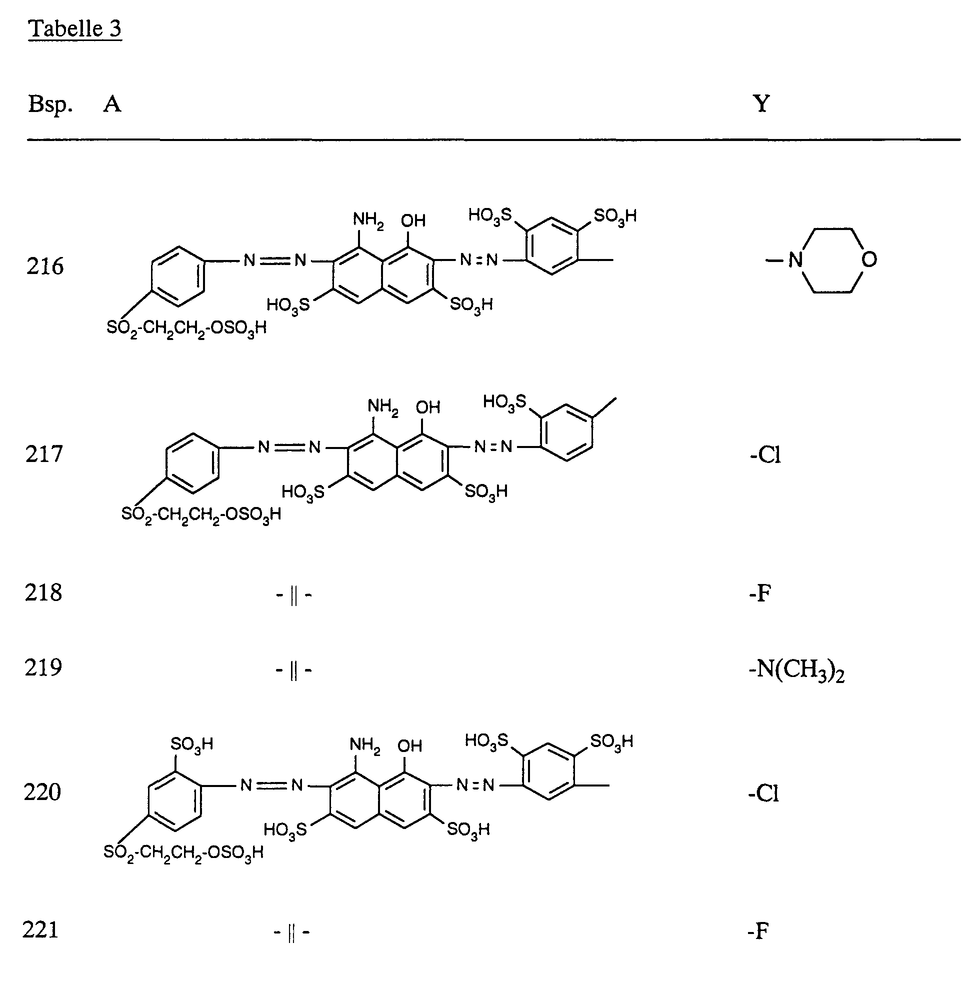

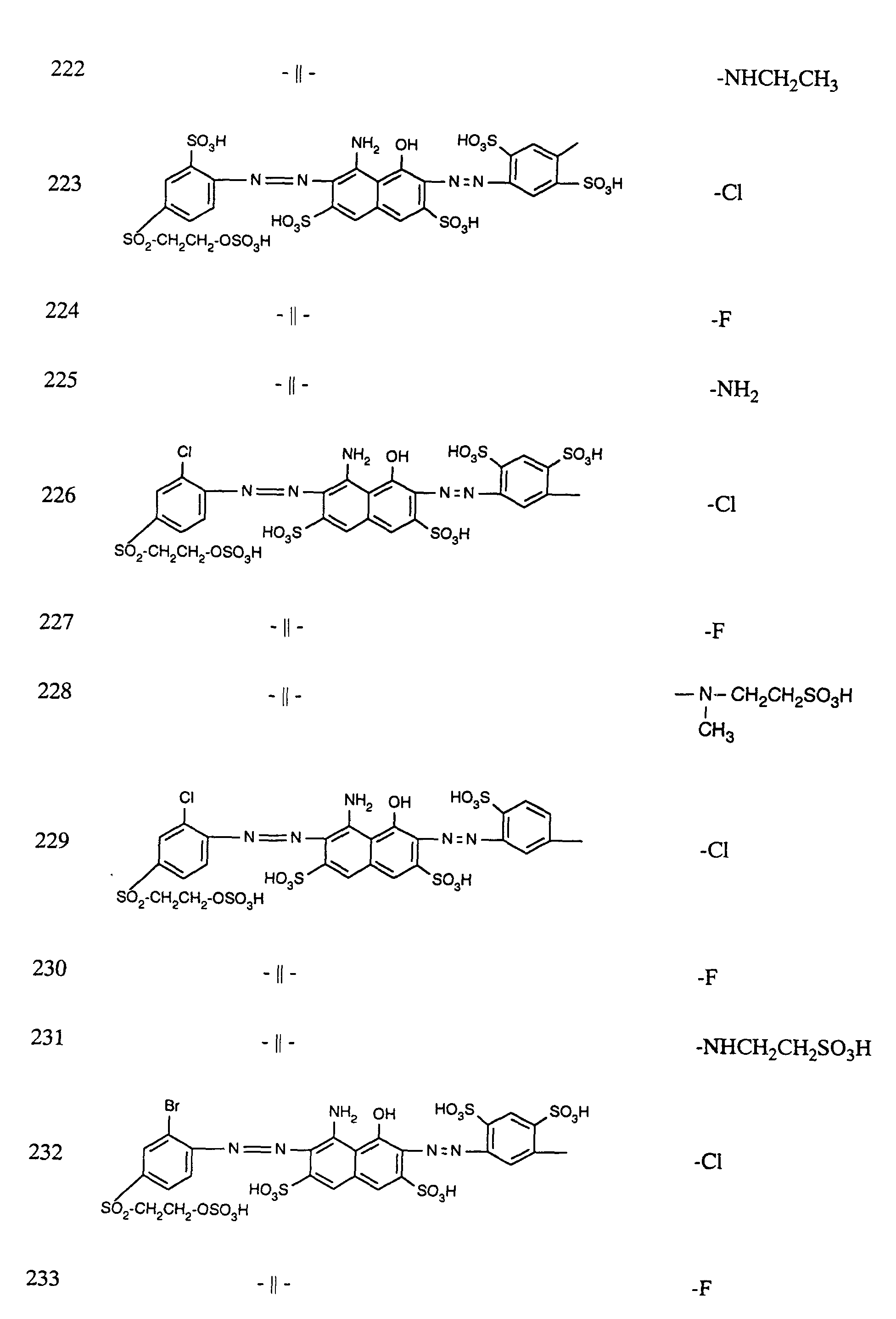

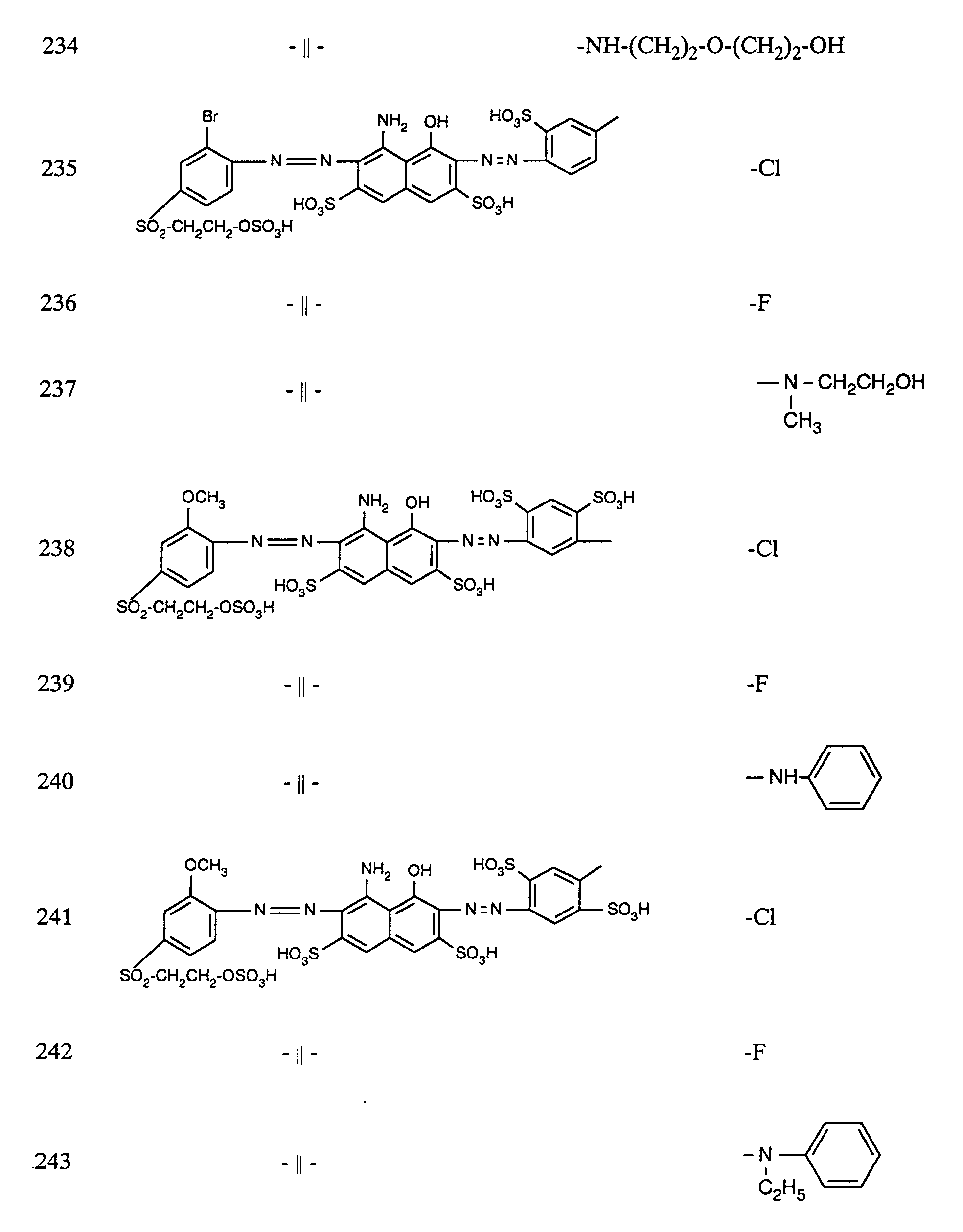

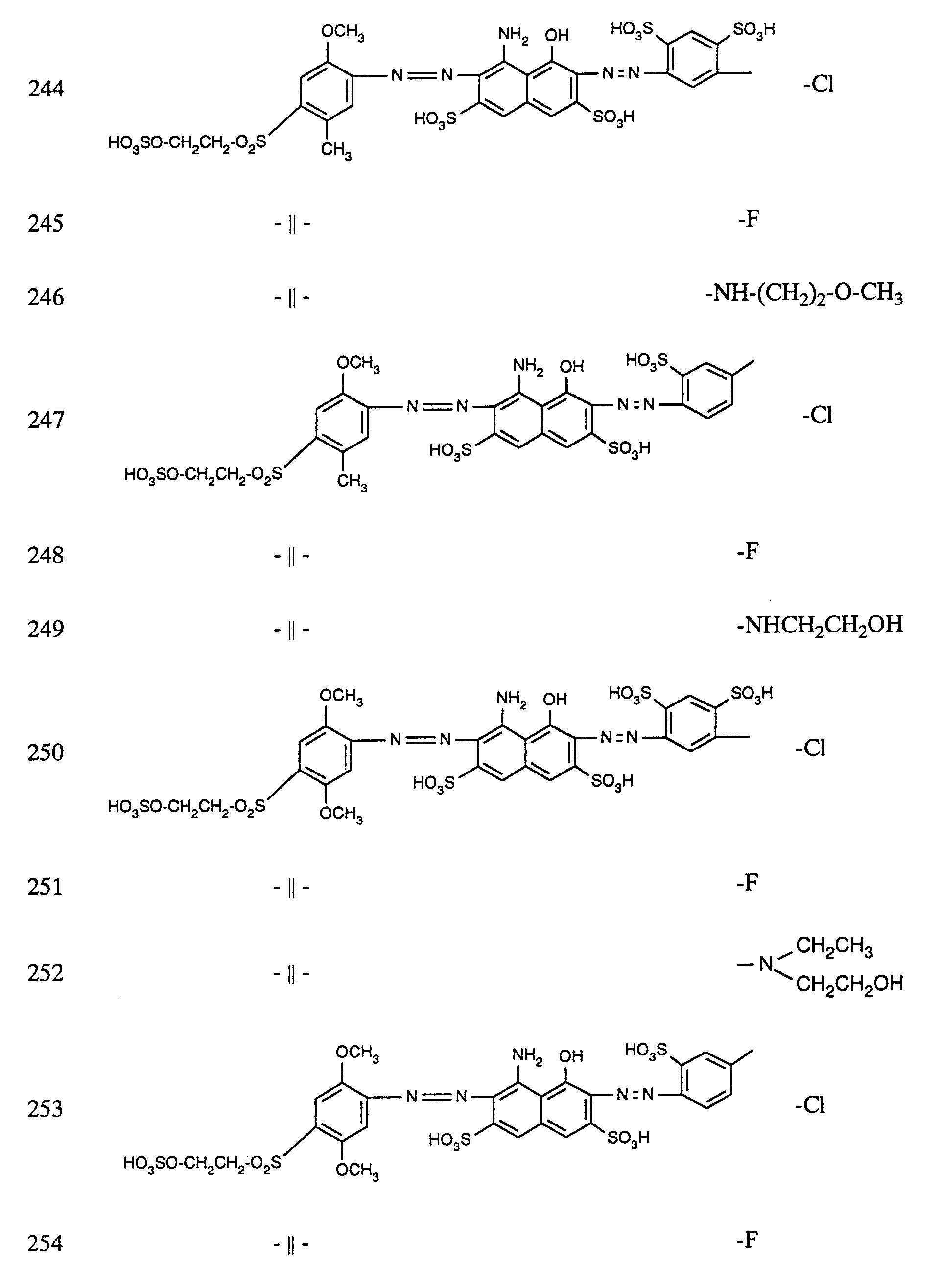

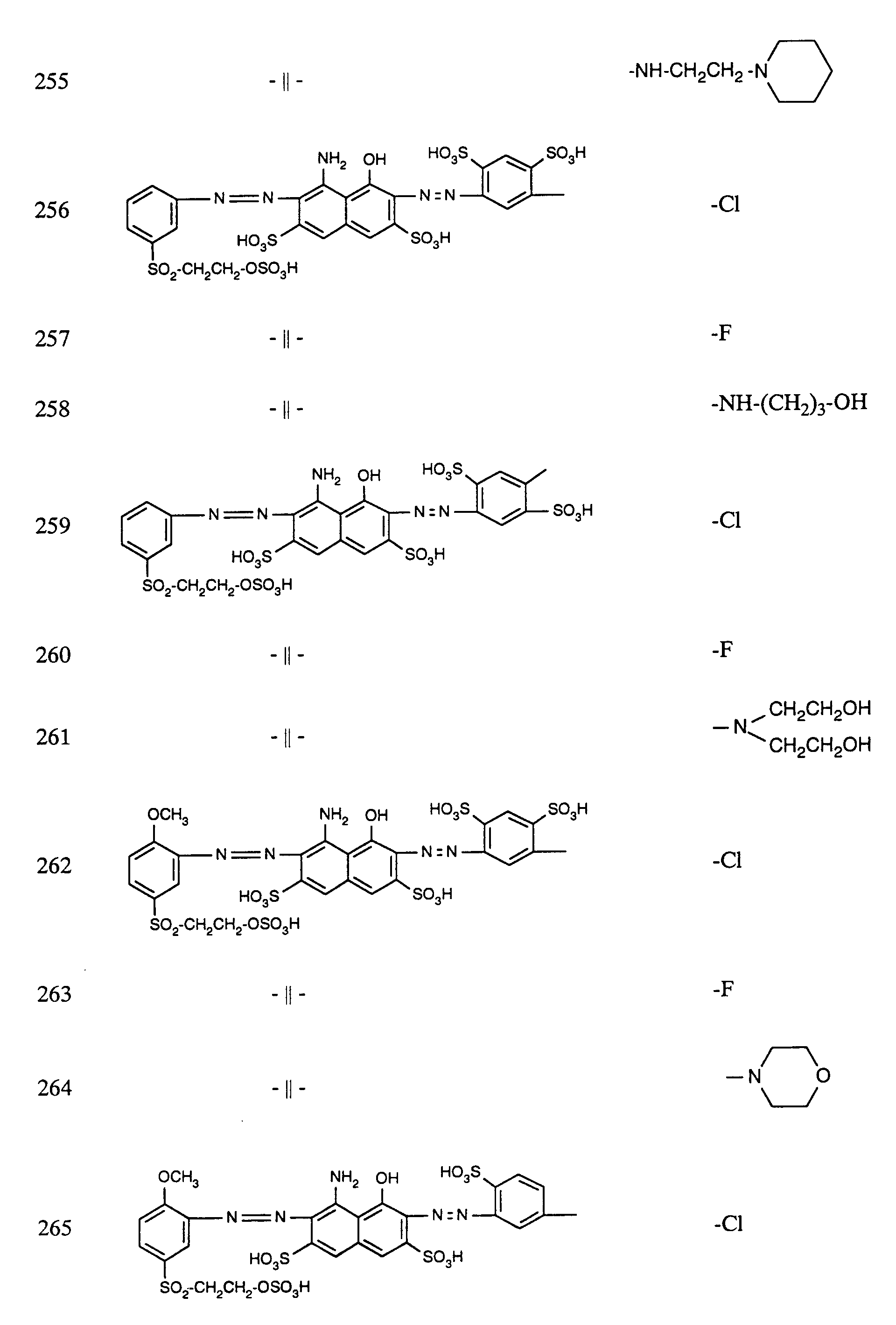

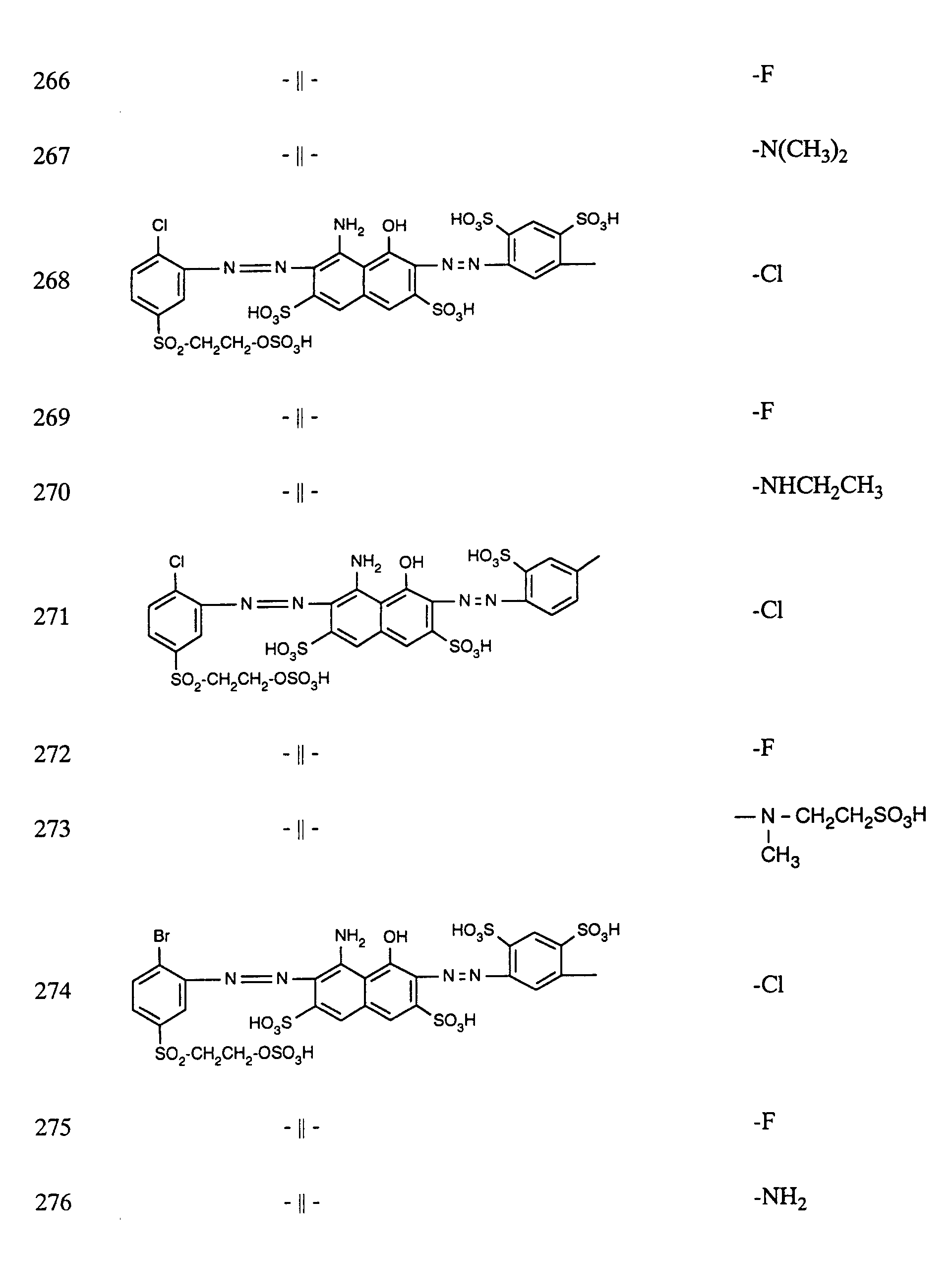

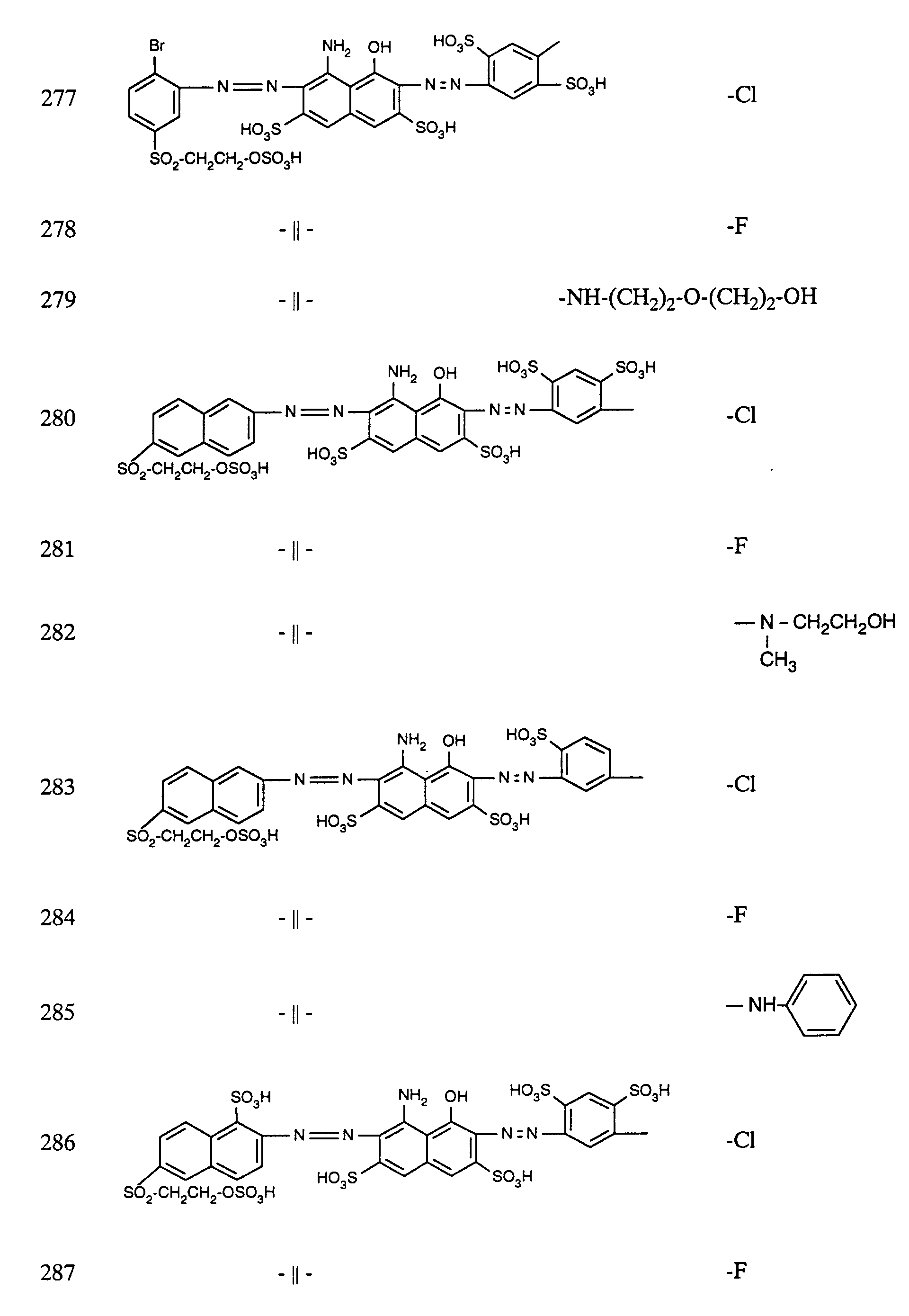

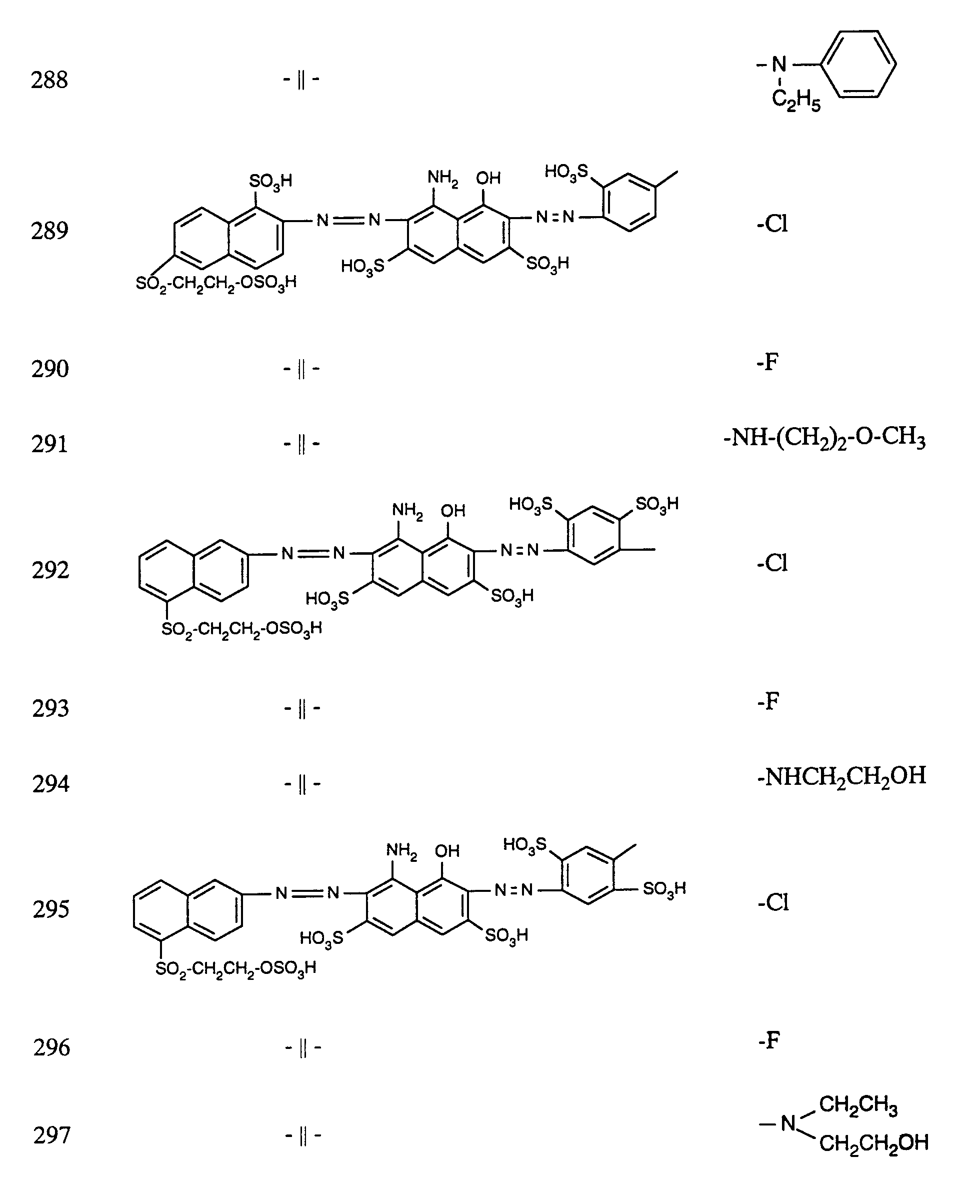

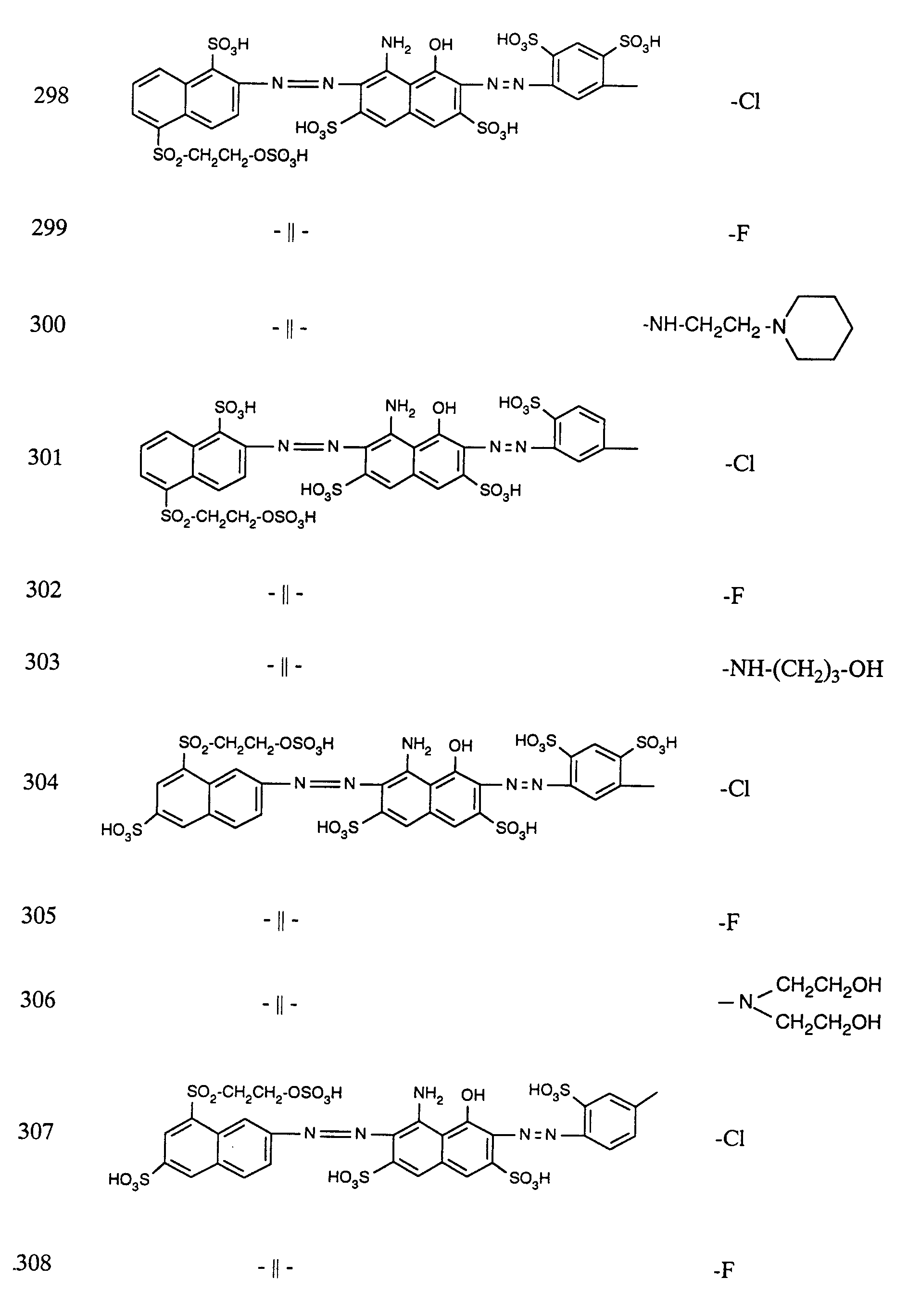

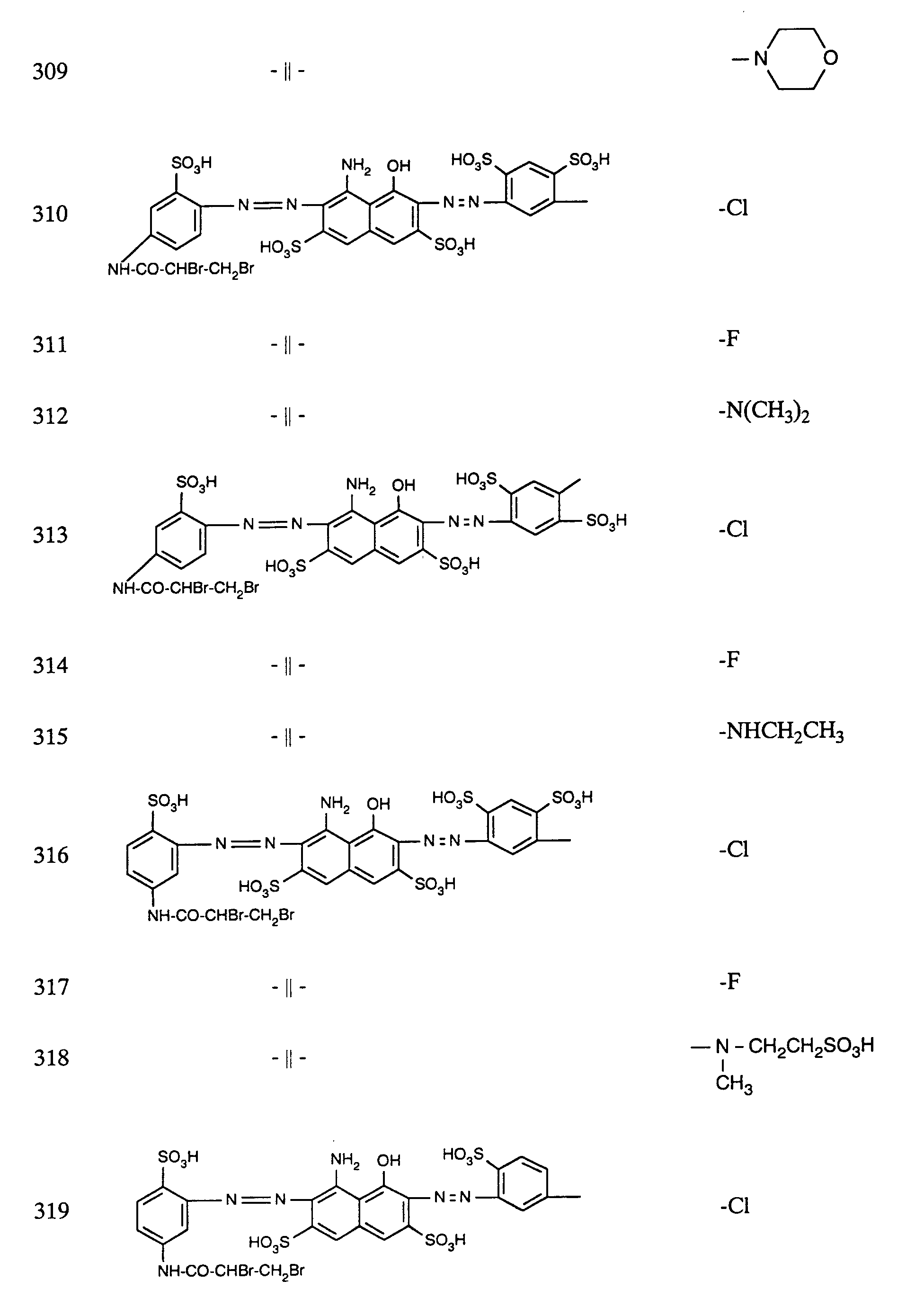

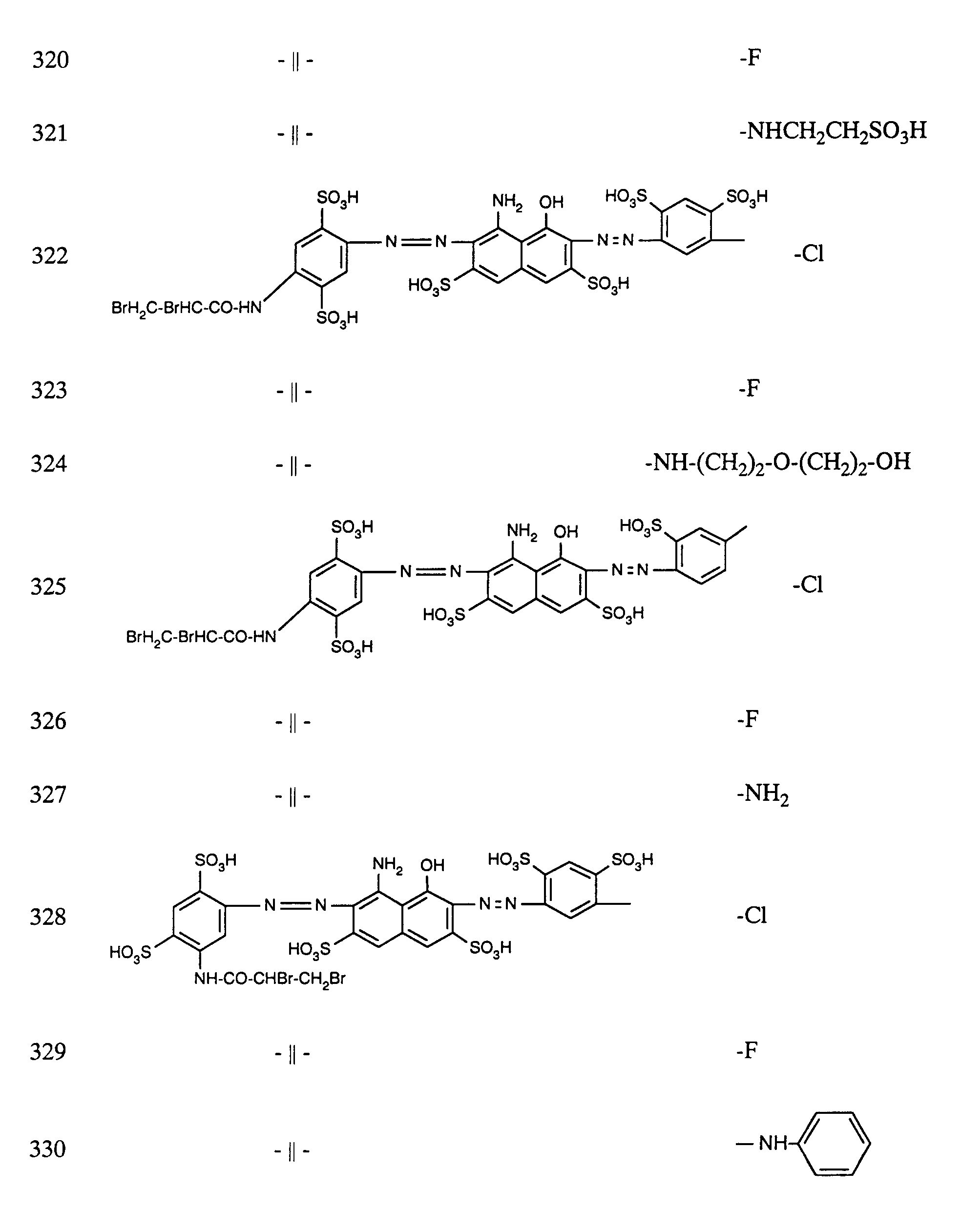

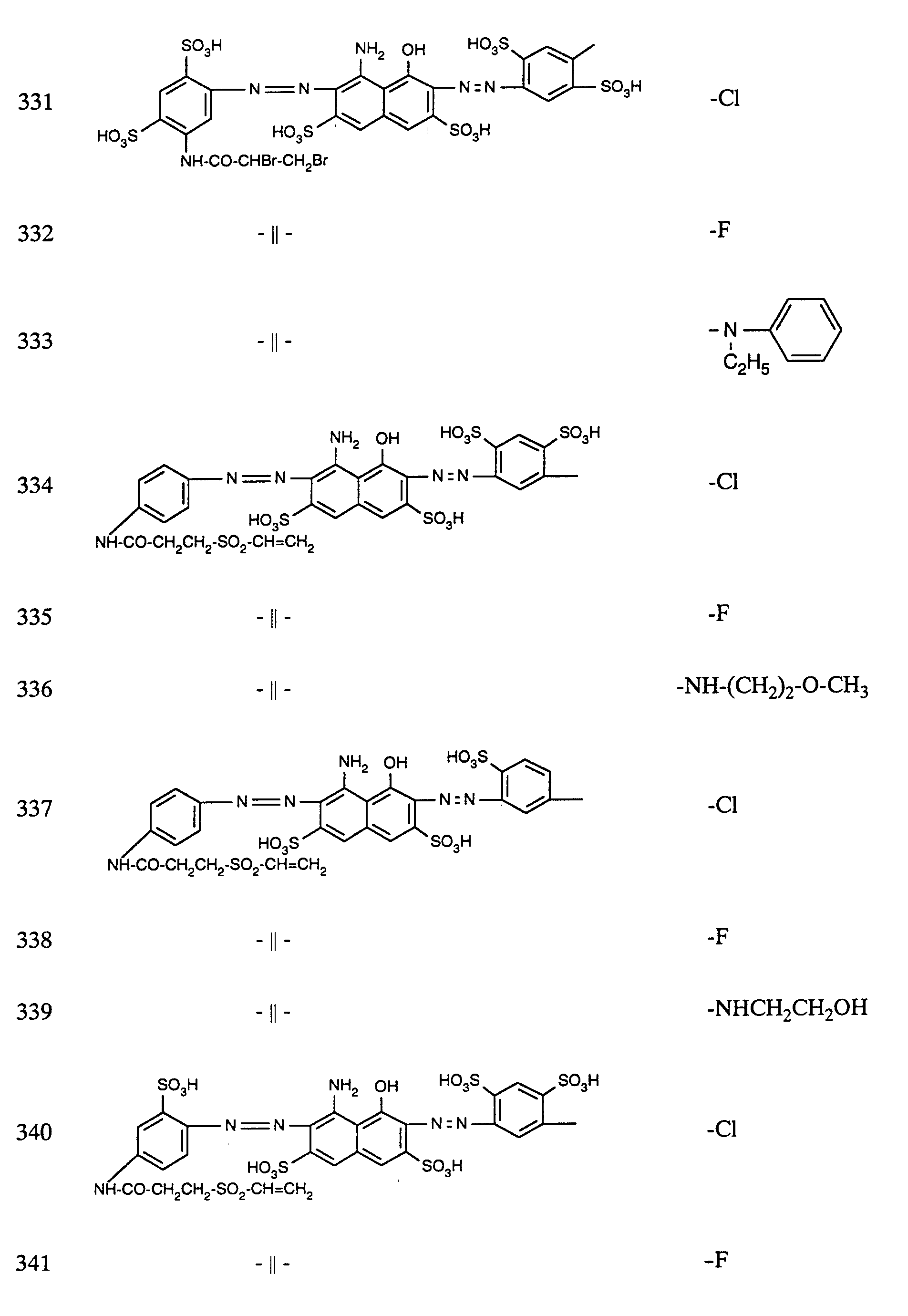

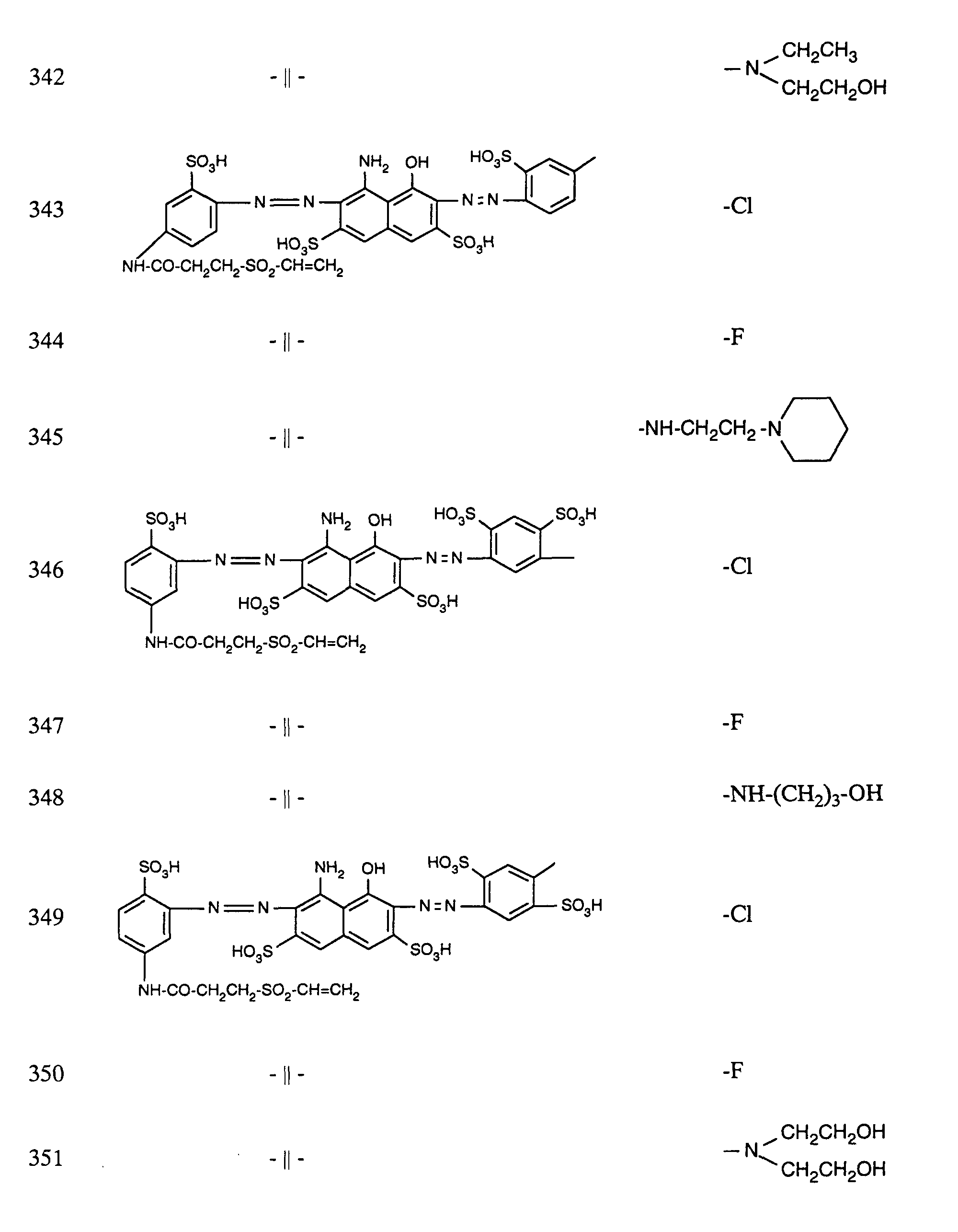

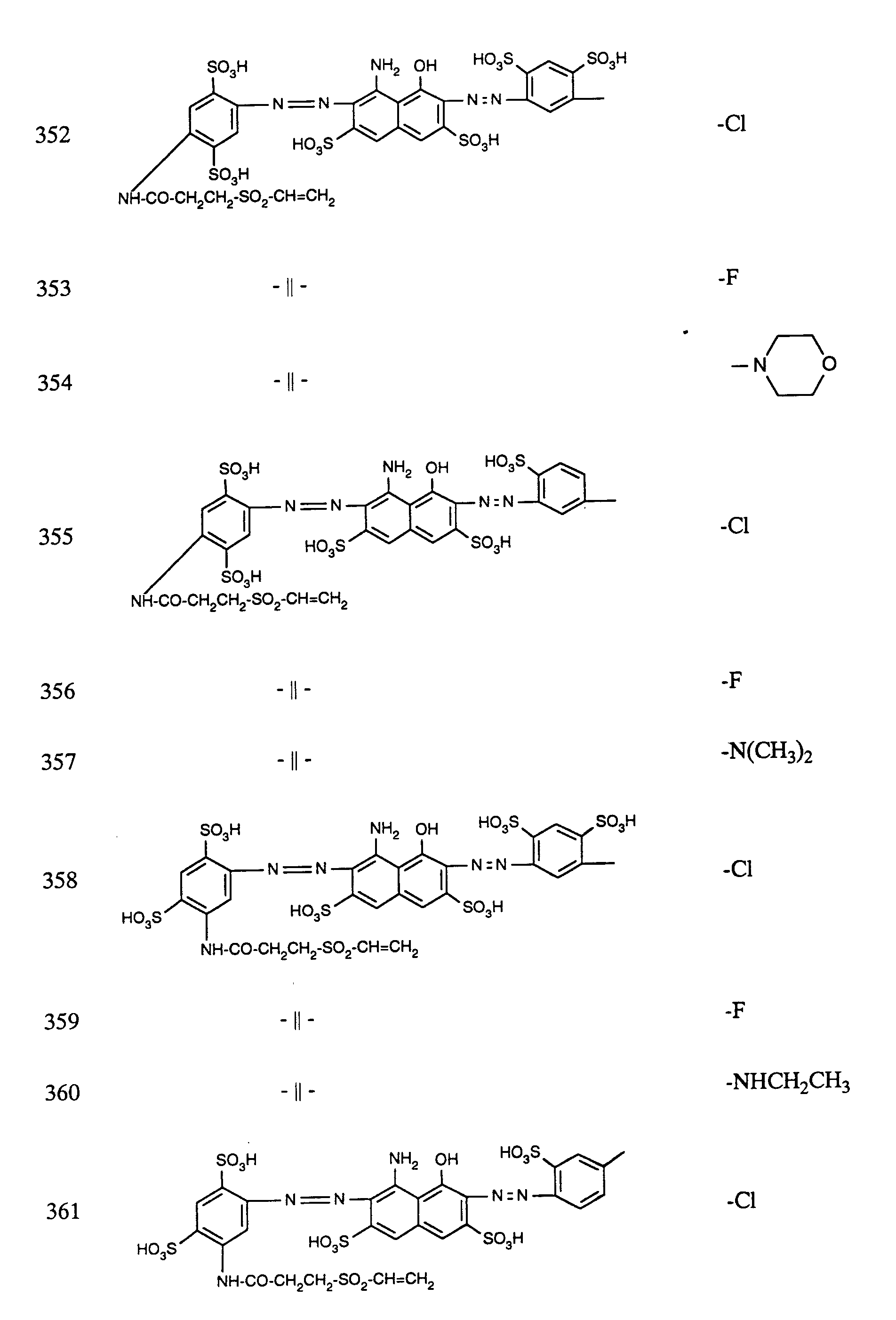

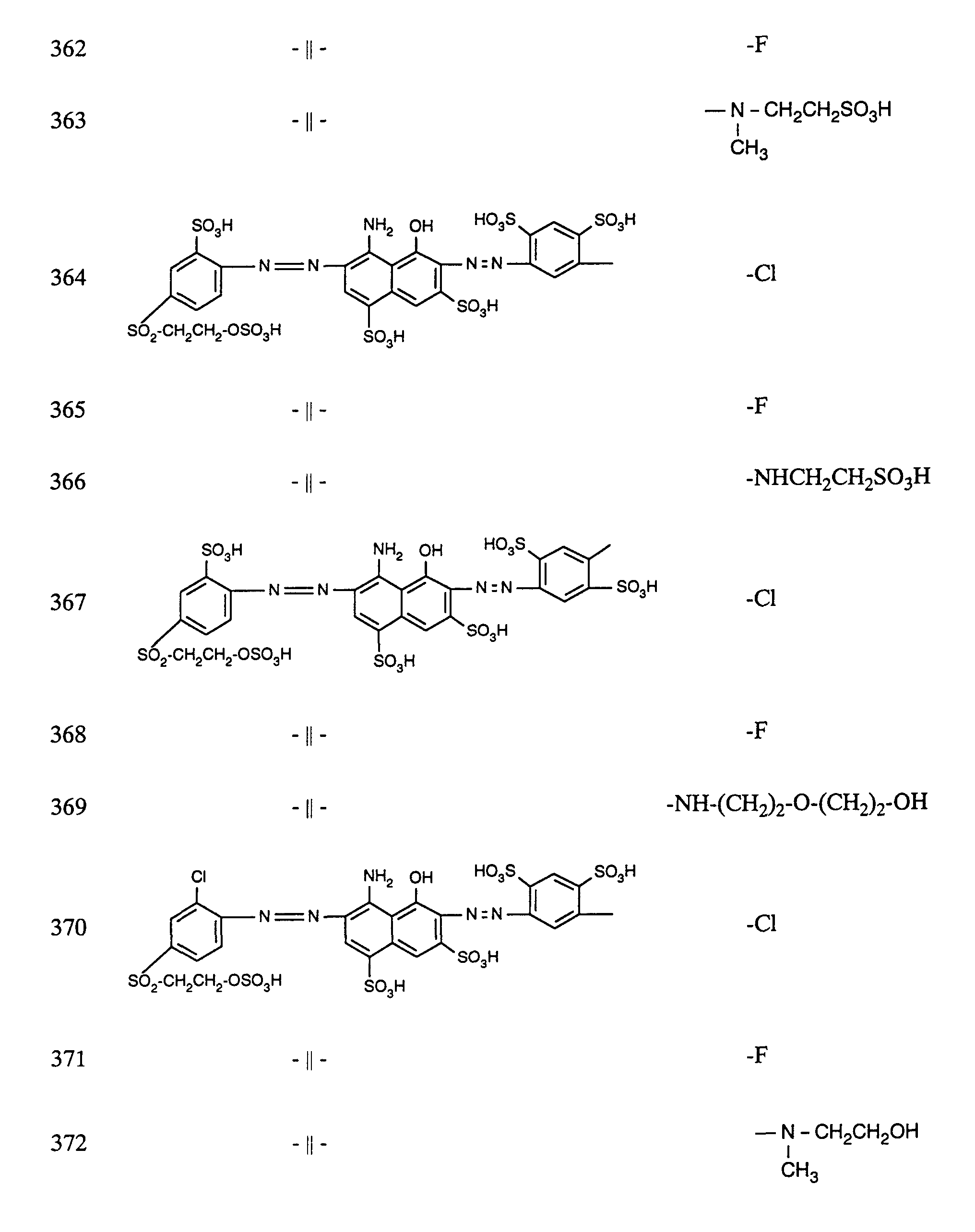

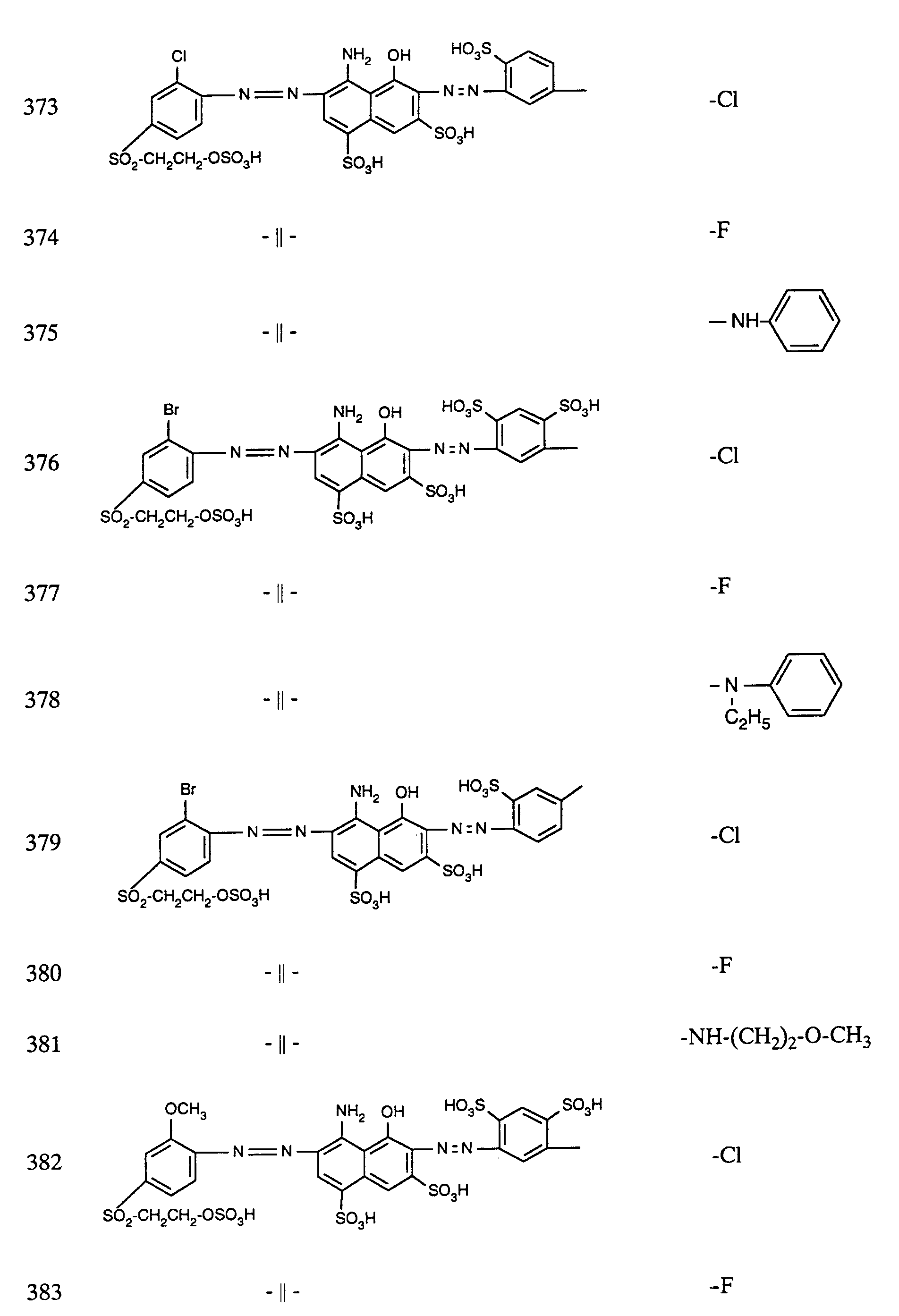

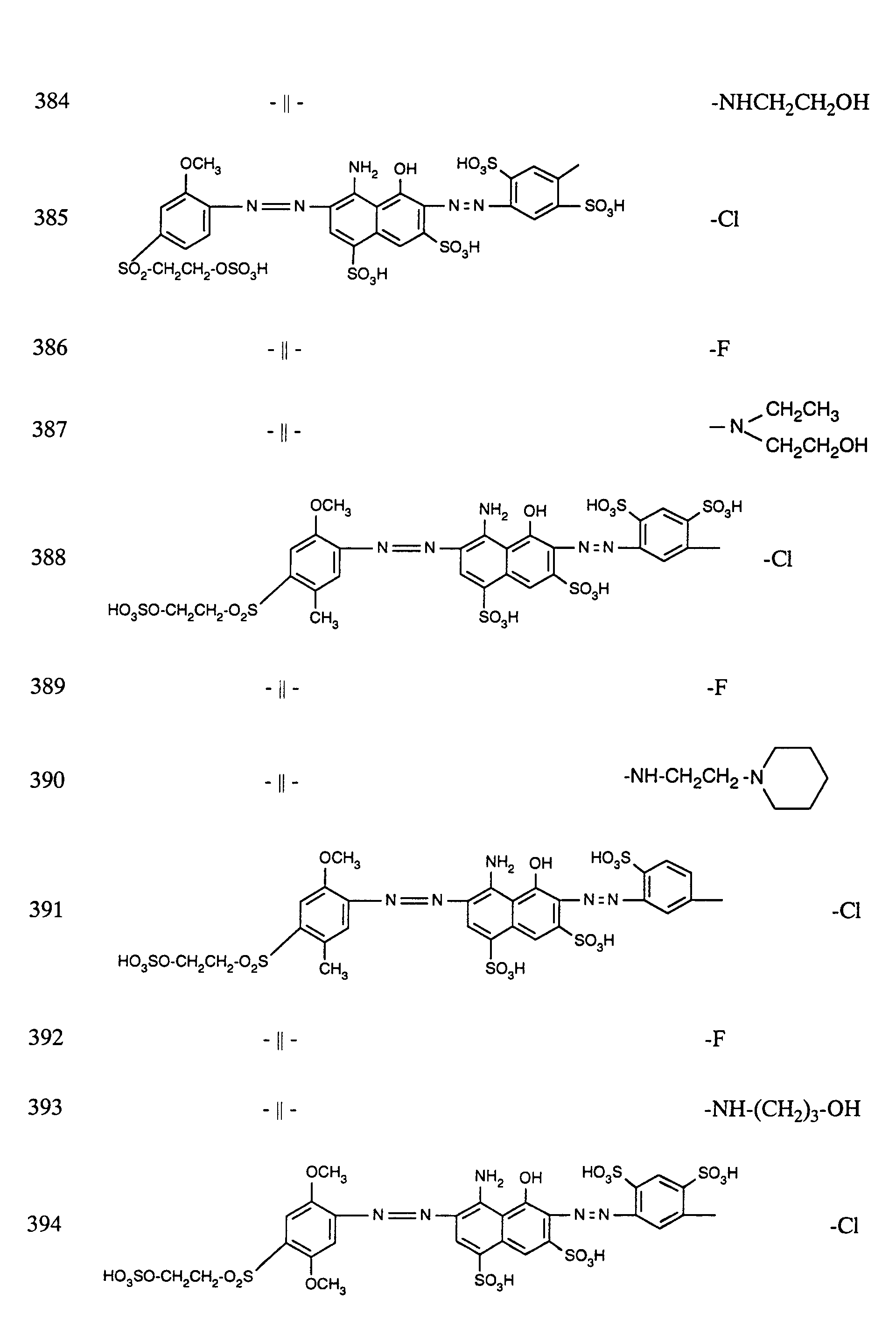

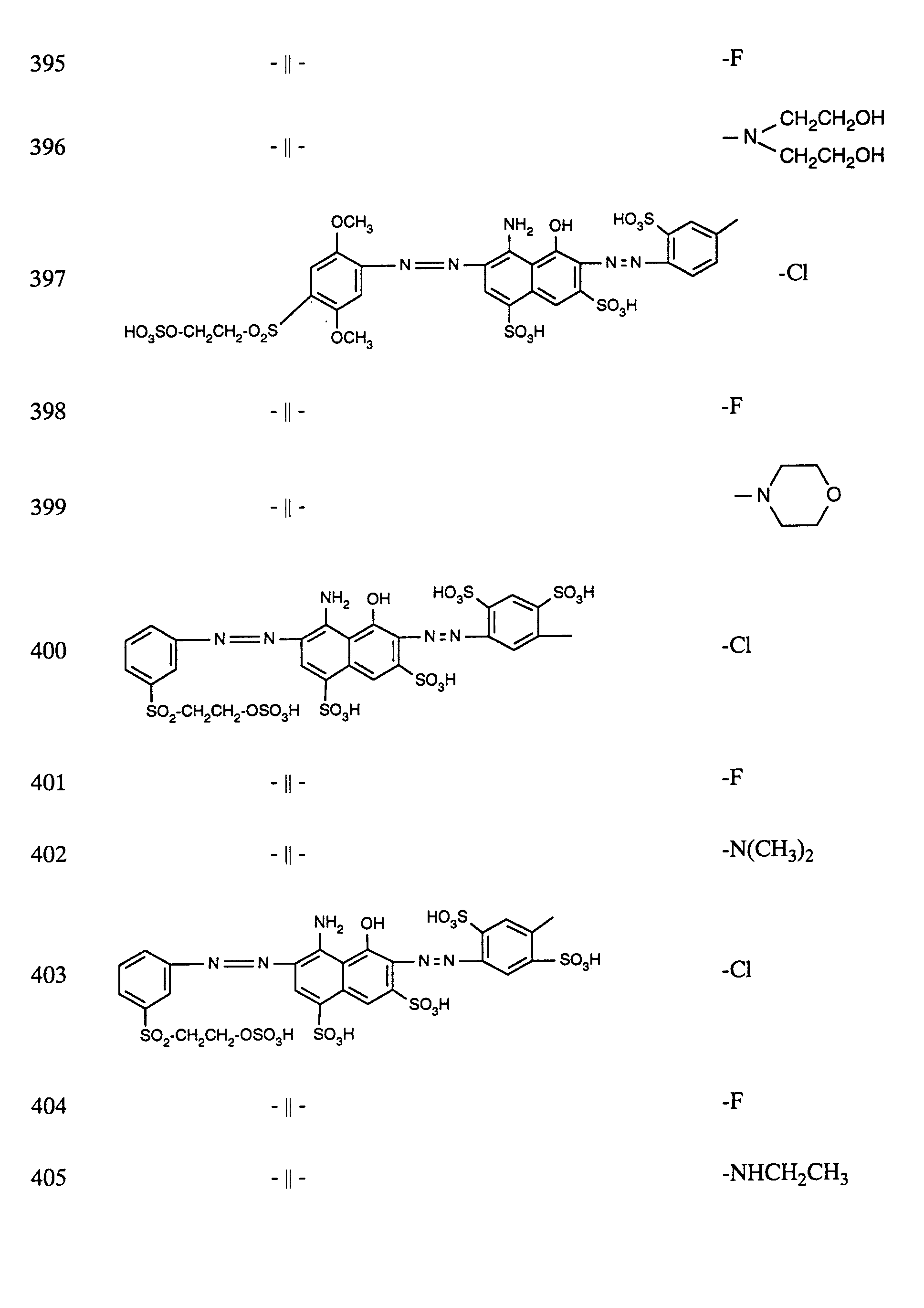

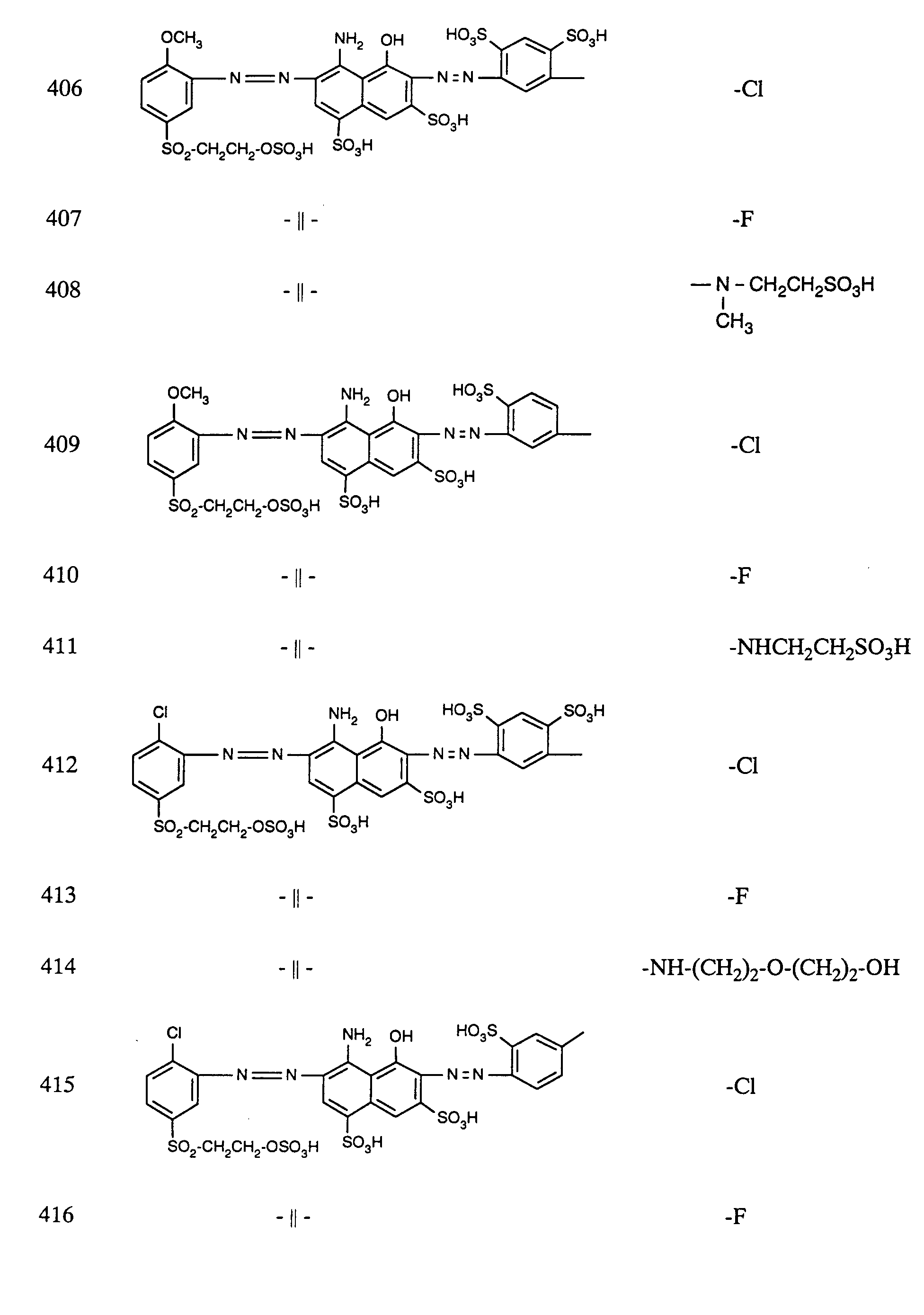

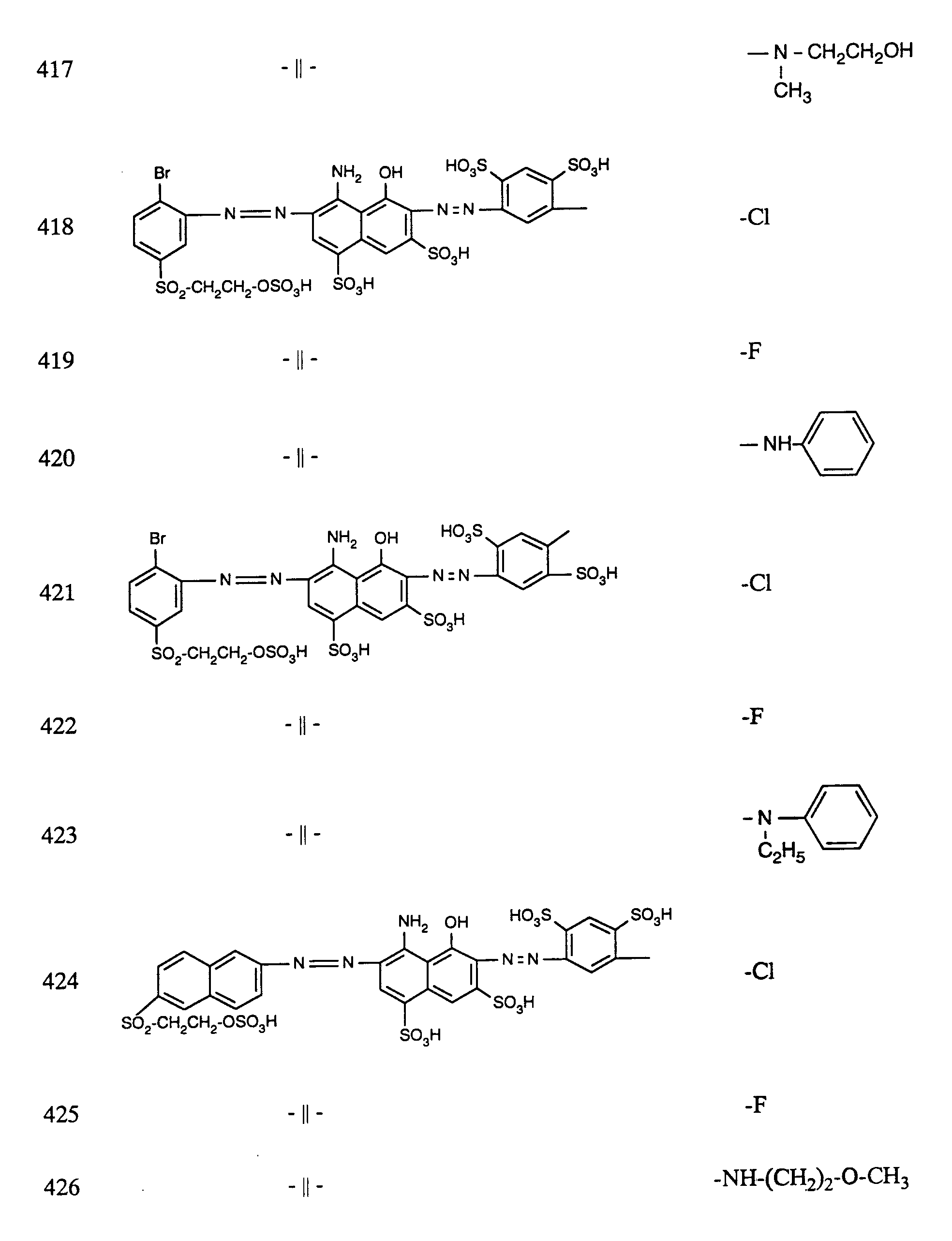

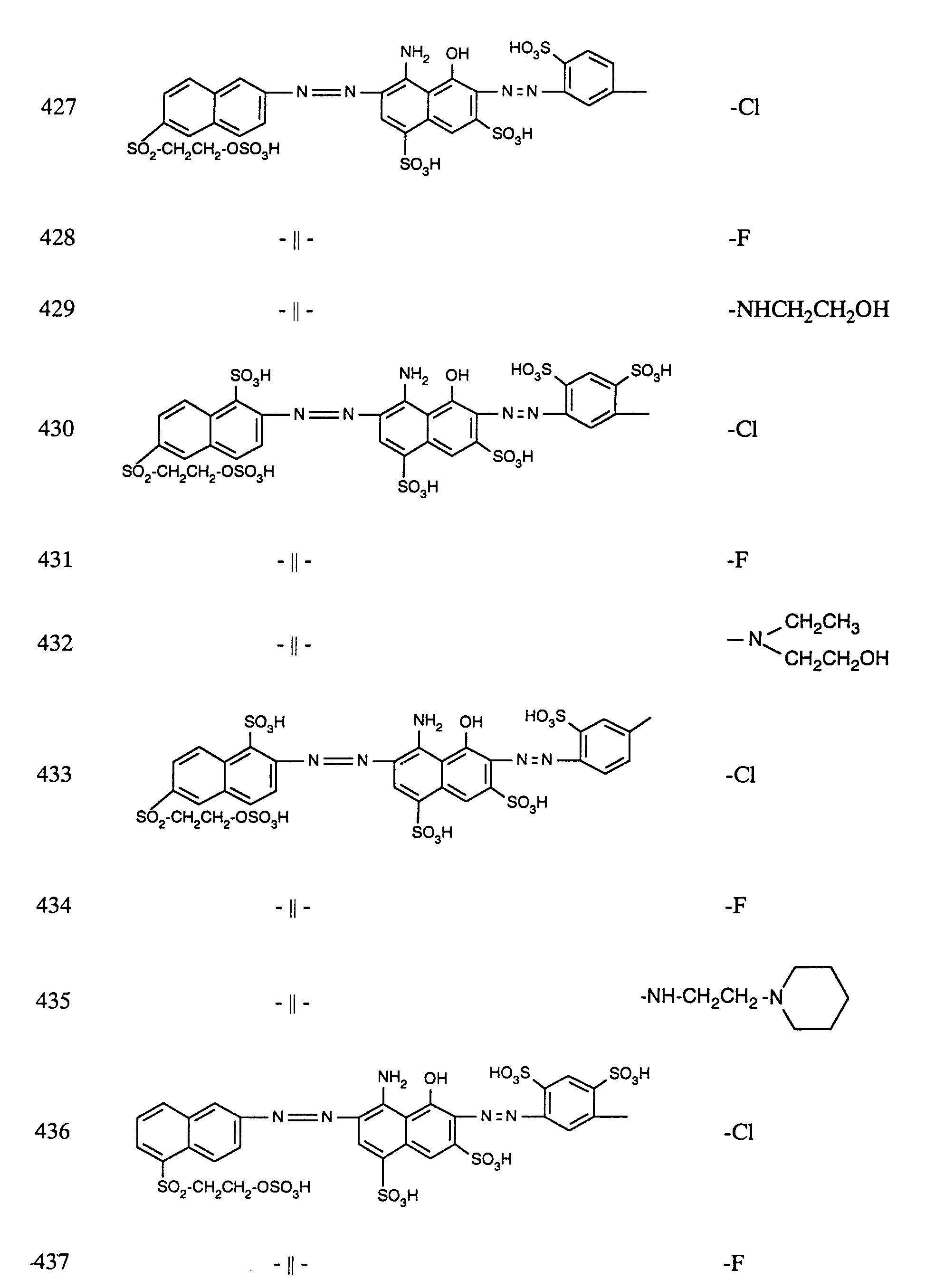

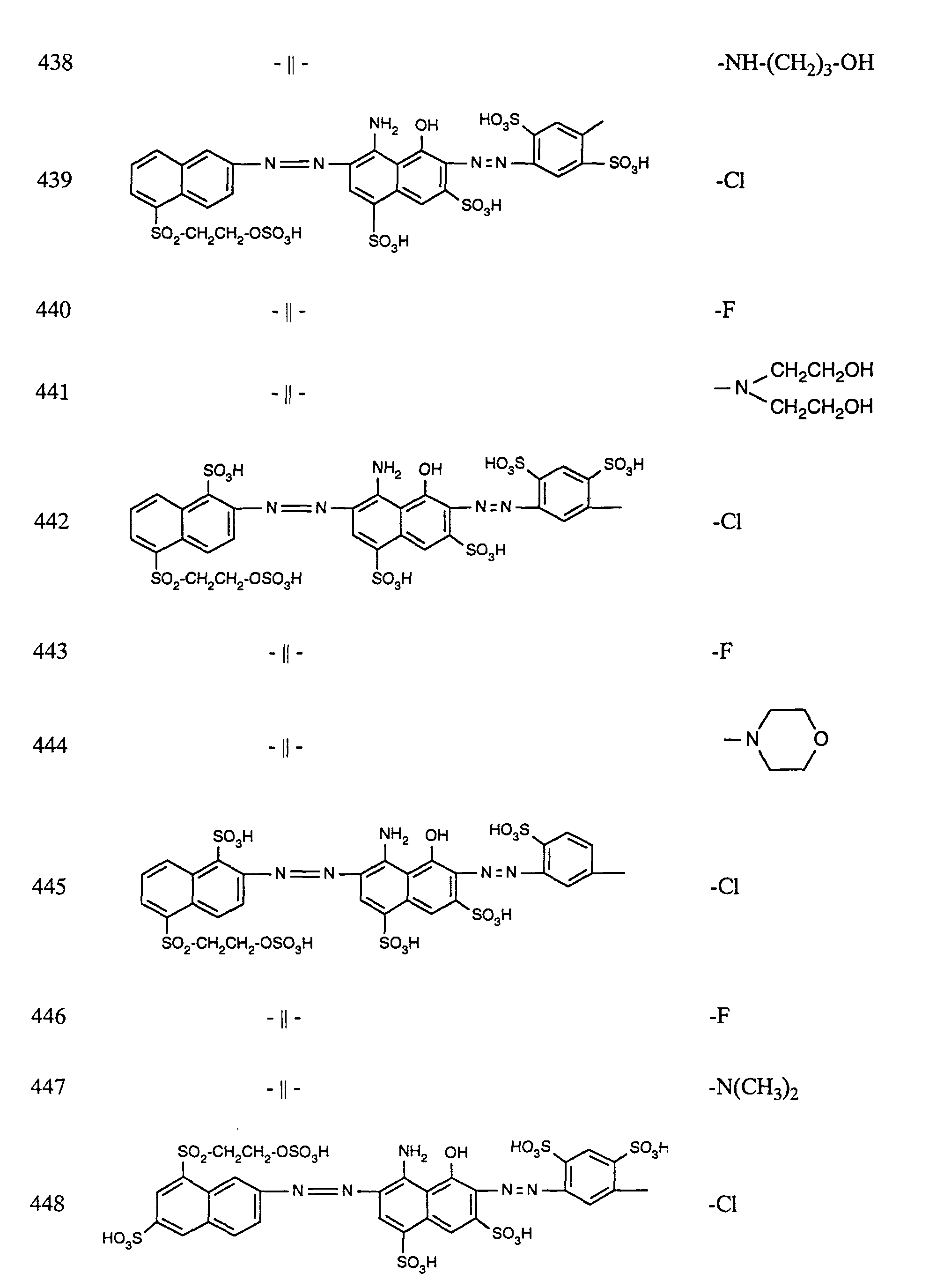

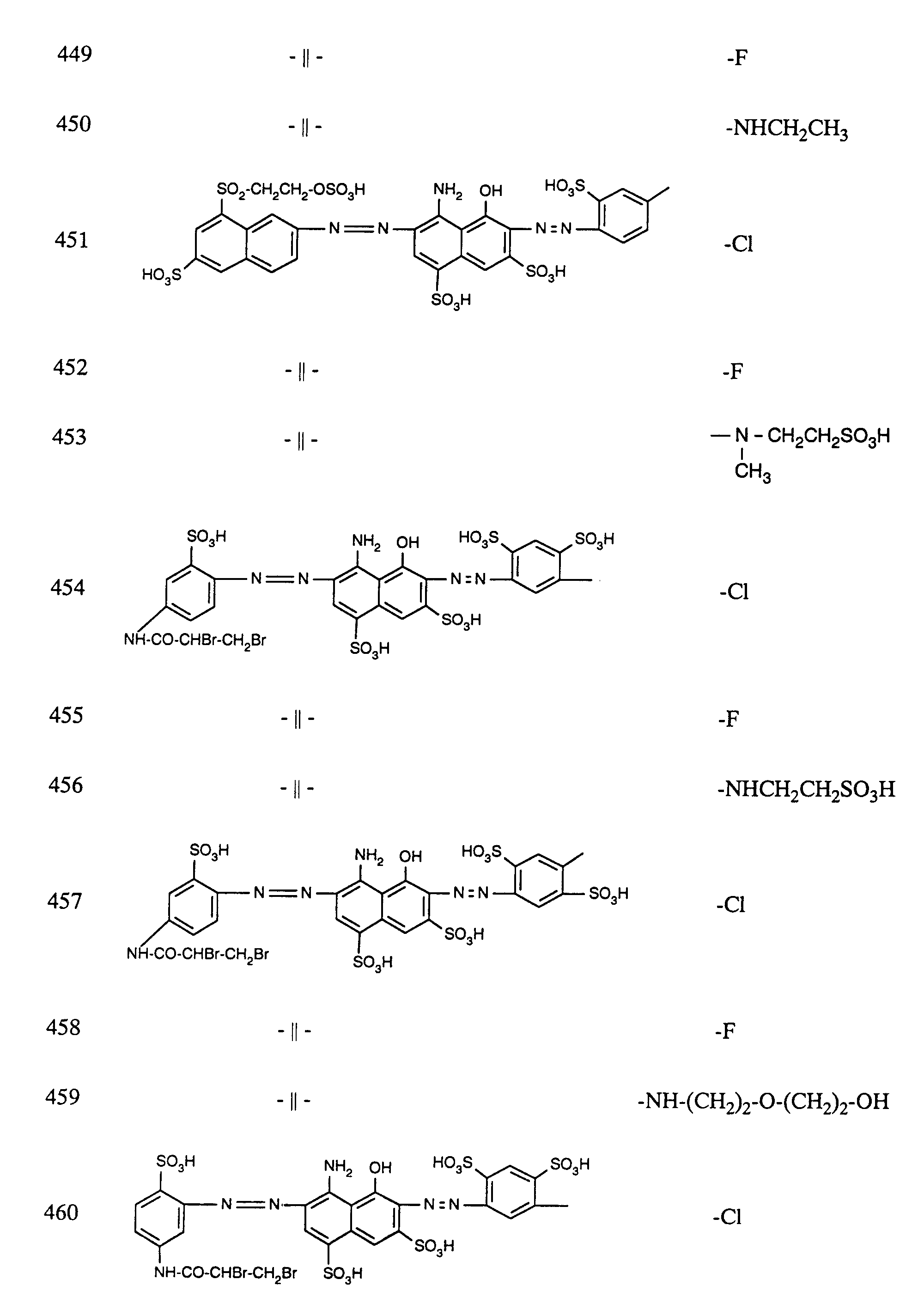

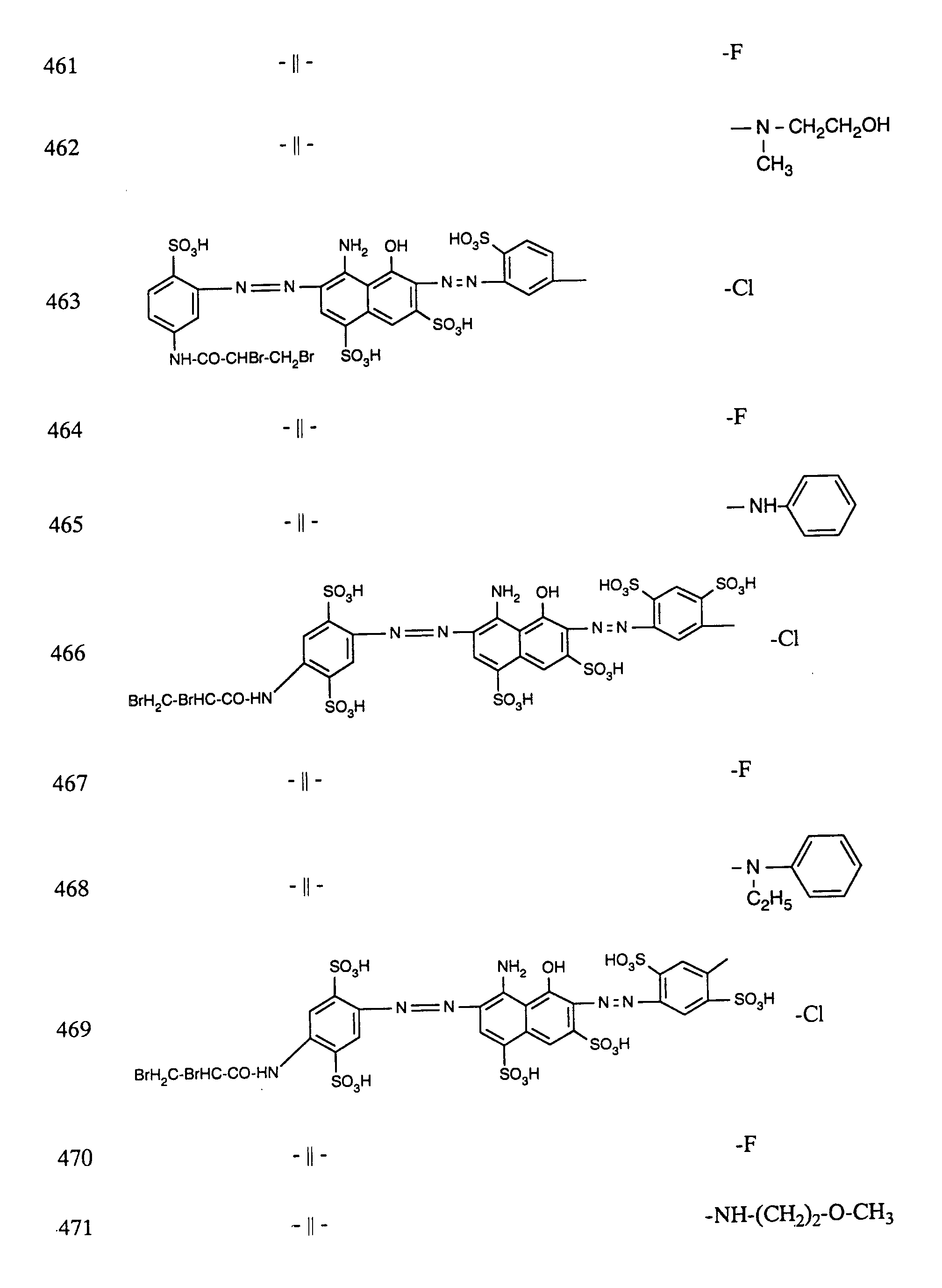

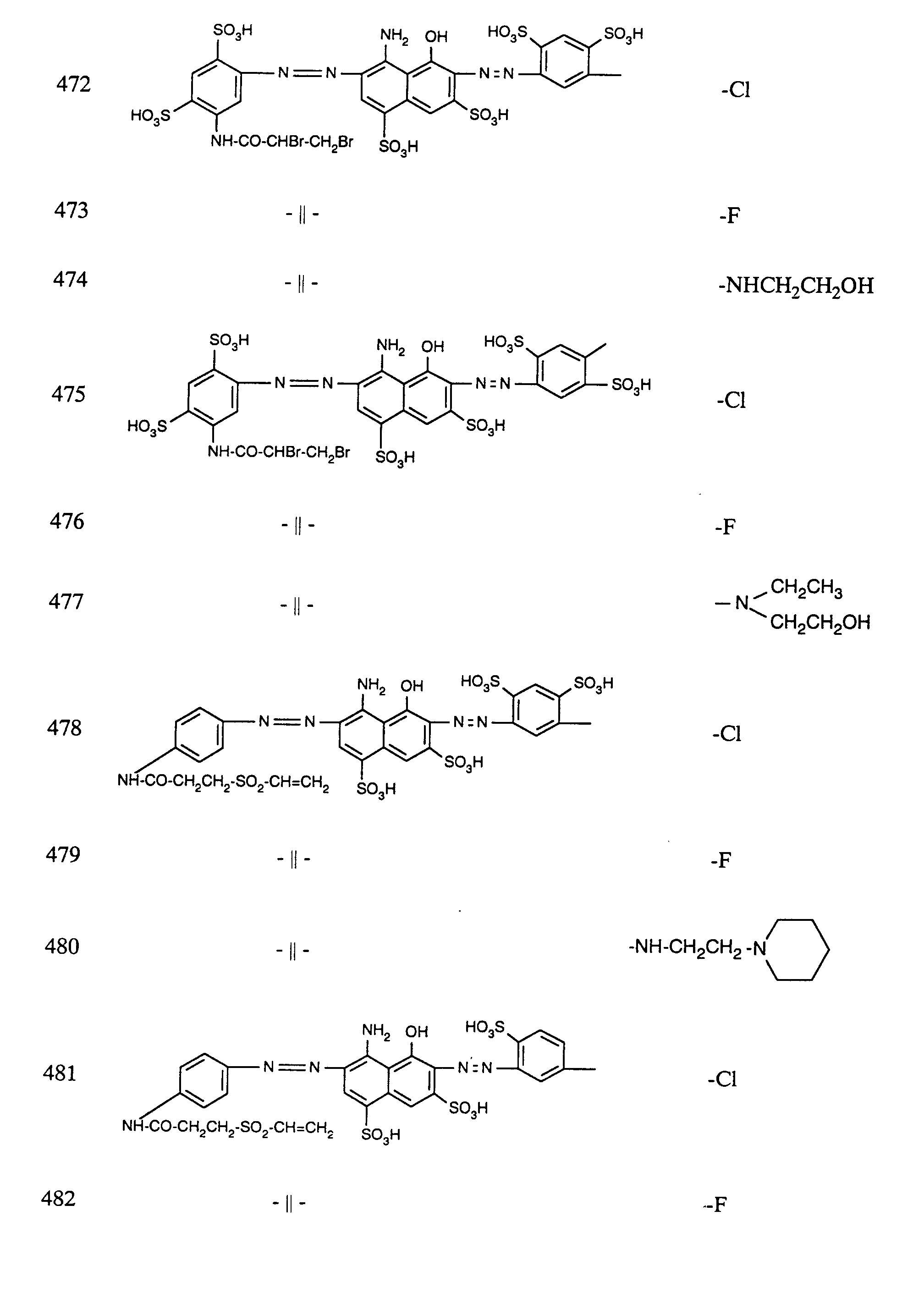

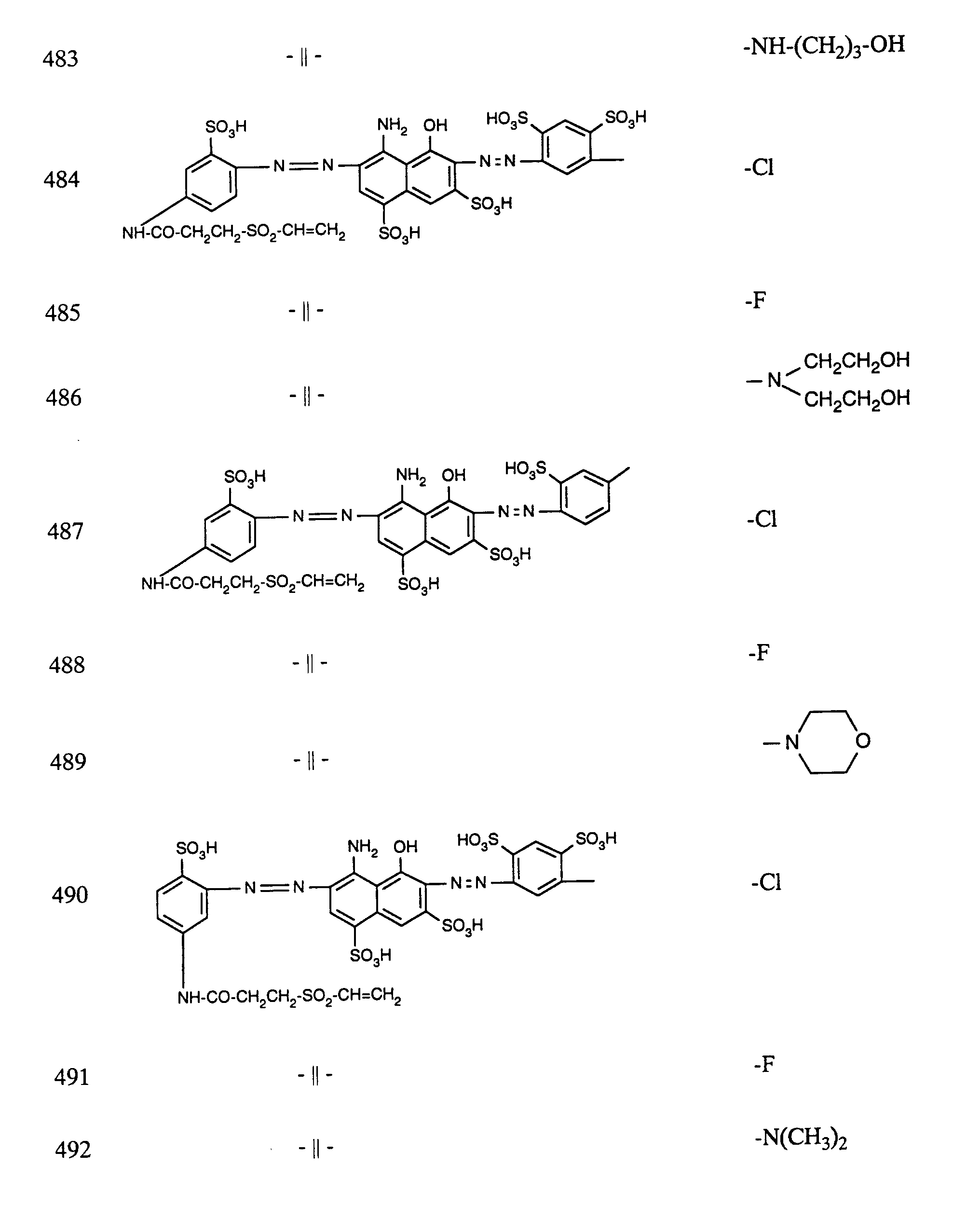

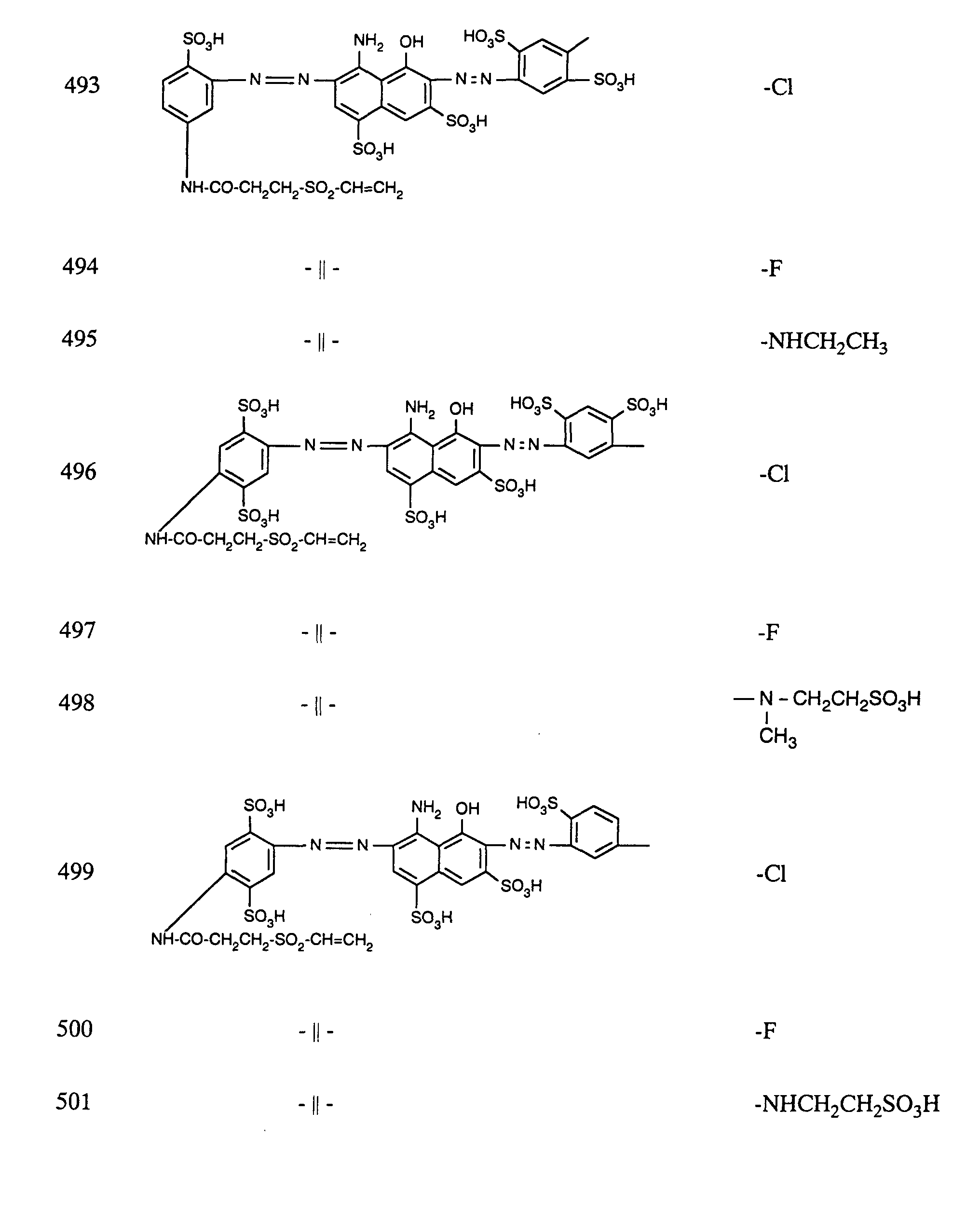

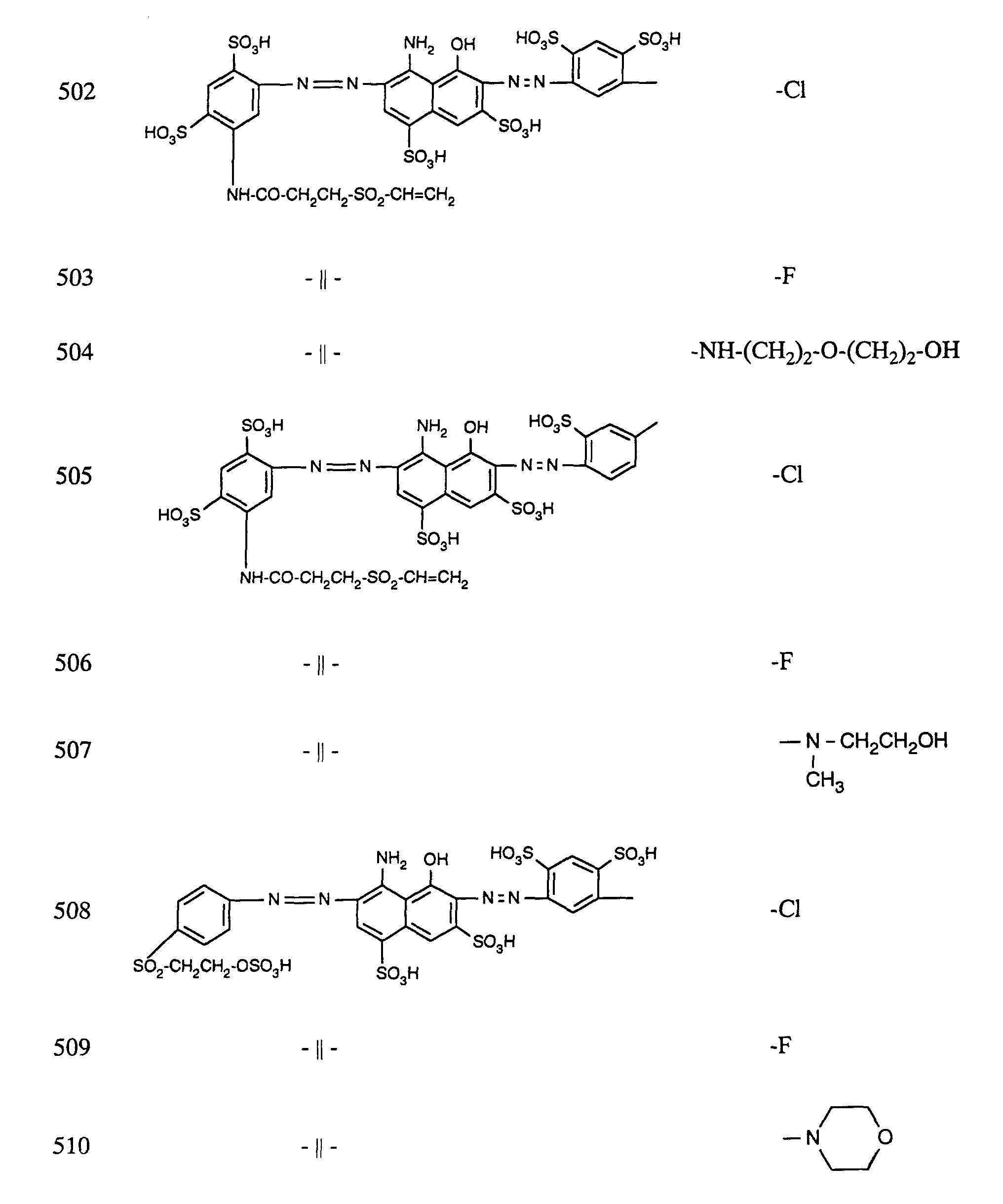

### Färbevorschrift

2 Teile der gemäss Beispiel 108 erhaltenen Farbstoffmischung werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Druckvorschrift

3 Teile der gemäss Beispiel 108 erhaltenen Farbstoffmischung werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Farbstoffe der Formel 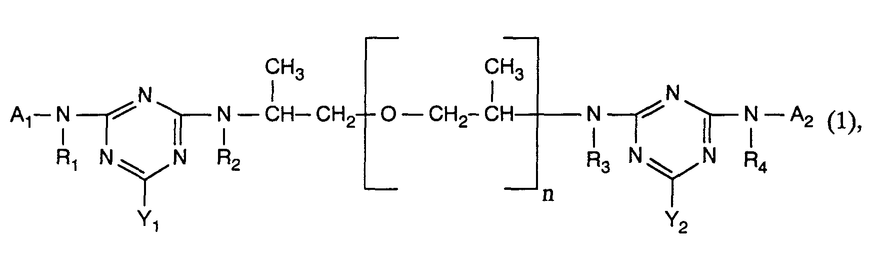
worin A₁ und A₂ unabhängig voneinander der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes sind,
R₁, R₂, R₃ und R₄ unabhängig voneinander Wasserstoff oder gegebenenfalls substituiertes C₁-C₄-Alkyl sind,
Y₁ und Y₂ unabhängig voneinander Halogen, Carboxypyridinium, gegebenenfalls substituiertes Amino oder einen über ein Stickstoffatom gebundenen heterocyclischen Rest bedeuten, und
n eine Zahl von 1 bis 7 ist.

2. Farbstoffe gemäss Anspruch 1, dadurch gekennzeichnet, dass Y₁ und Y₂ unabhängig voneinander Fluor, Chlor, Carboxypyridinium, Amino, unsubstituiertes oder im Alkylteil durch Hydroxy, Sulfo, Sulfato, Carboxy, C₁-C₄-Alkoxy, C₁-C₄-Hydroxyalkoxy oder Piperidin-1-yl substituiertes N-Mono- oder N,N-Di-C₁-C₄-Alkylamino, unsubstituiertes oder im Cycloalkylring durch C₁-C₄-Alkyl substituiertes C₅-C₇-Cycloalkylamino, unsubstituiertes oder im Phenylring durch C₁-C₄-Alkyl, C₁-C₄-Alkoxy, Carboxy, Sulfo oder Halogen substituiertes Phenylamino oder N-C₁-C₄-Alkyl-N-phenylamino, Morpholino oder Piperidin-1-yl sind.

3. Farbstoffe gemäss einem der Ansprüche 1 und 2, dadurch gekennzeichnet, dass Y₁ und Y₂ unabhängig voneinander Fluor oder Chlor bedeuten.

4. Farbstoffe gemäss einem der Ansprüche 1 bis 3, dadurch gekennzeichnet, dass R₁, R₂, R₃ und R₄ unabhängig voneinander Wasserstoff, Methyl oder Aethyl, insbesondere Wasserstoff, sind.

5. Farbstoffe gemäss einem der Ansprüche 1 bis 4, dadurch gekennzeichnet, dass n eine Zahl von 2 bis 6 ist.

6. Farbstoffe gemäss einem der Ansprüche 1 bis 5, dadurch gekennzeichnet, dass n die Zahl 2, 3, 4 oder 5 ist.

7. Farbstoffe gemäss einem der Ansprüche 1 bis 6, dadurch gekennzeichnet, dass n die Zahl 2 oder 3 ist.

8. Farbstoffe gemäss einem der Ansprüche 1 bis 7, dadurch gekennzeichnet, dass A₁ und A₂ unabhängig voneinander der Rest eines Monoazo-, Disazo-, Anthrachinon-, Dioxazin-, Phthalocyanin- oder Formazanfarbstoffes sind.

9. Farbstoffe gemäss einem der Ansprüche 1 bis 8, dadurch gekennzeichnet, dass A₁ und A₂ unabhängig voneinander Reste der Formeln 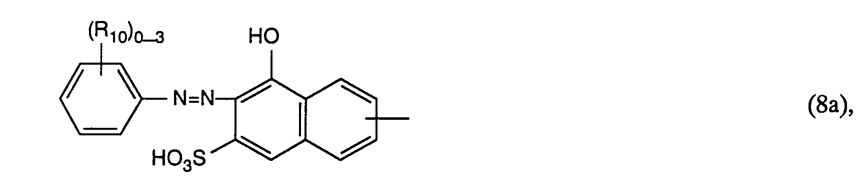 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 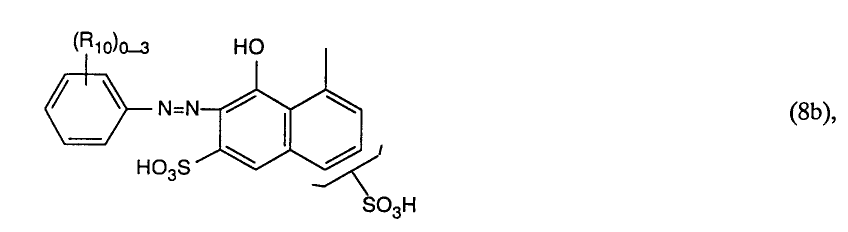 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 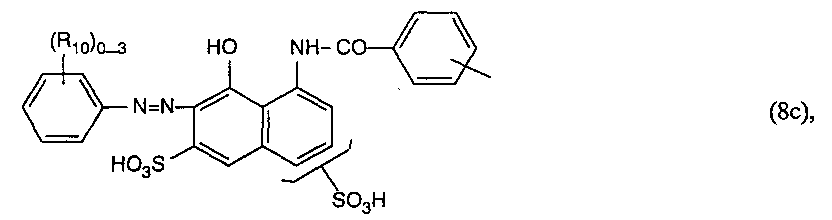 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 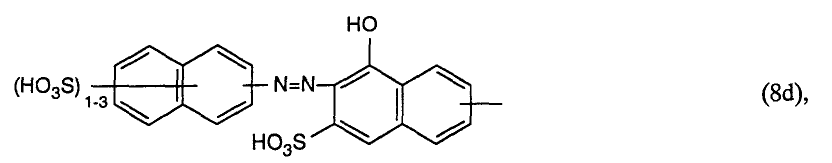 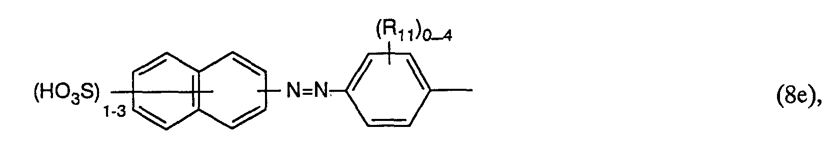 worin R₁₁ für 0 bis 4 gleiche oder verschiedene Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo steht, 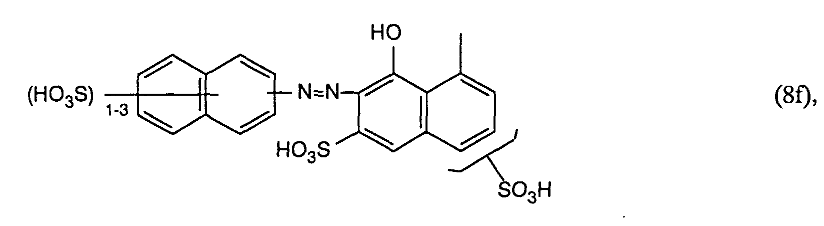 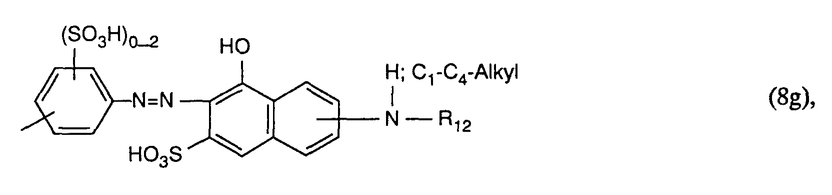 worin R₁₂ C₁-C₄-Alkanoyl, Benzoyl oder ein gegebenenfalls weitersubstituierter Halogentriazinylrest ist, 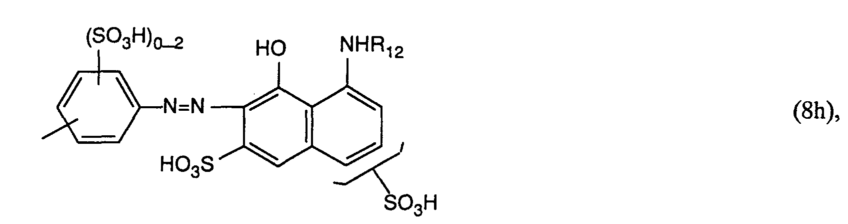 worin R₁₂ C₁-C₄-Alkanoyl, Benzoyl oder ein gegebenenfalls weitersubstituierter Halogentriazinylrest ist, 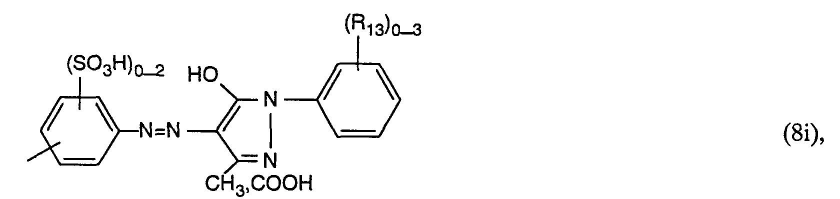 worin R₁₃ für 0 bis 3 gleiche oder verschiedene Substituenten aus der Gruppe C₁-C₄-Alkyl, C₁-C₄-Alkoxy, Halogen, Carboxy und Sulfo steht, 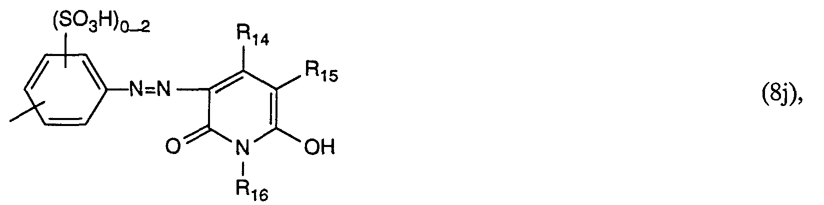 worin R₁₄ und R₁₆ unabhängig voneinander Wasserstoff, C₁-C₄-Alkyl oder Phenyl, und R₁₅ Wasserstoff, Cyano, Carbamoyl oder Sulfomethyl ist, 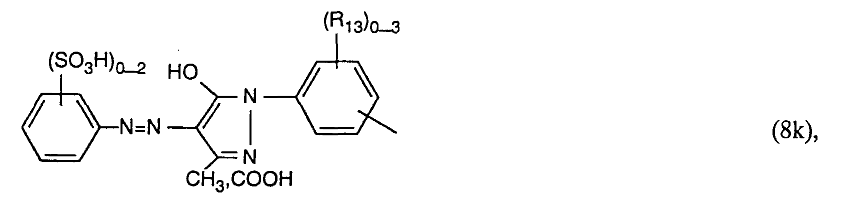 worin R₁₃ für 0 bis 3 gleiche oder verschiedene Substituenten aus der Gruppe C₁-C₄-Alkyl, C₁-C₄-Alkoxy, Halogen, Carboxy und Sulfo steht, 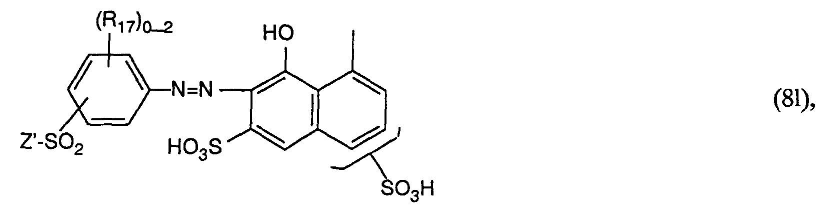 worin R₁₇ für 0 bis 2 gleiche oder verschiedene Substituenten aus der Gruppe C₁-C₄-Alkyl, C₁-C₄-Alkoxy, Halogen, Carboxy und Sulfo steht; und Z' β-Sulfatoäthyl, β-Thiosulfatoäthyl, β-Phosphatoäthyl, β-Acyloxyäthyl, β-Halogenäthyl oder Vinyl ist, 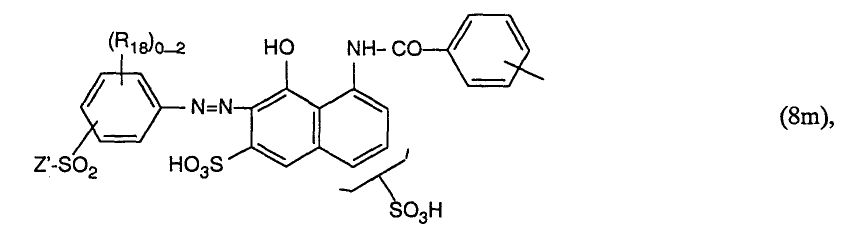 worin R₁₈ für 0 bis 2 gleiche oder verschiedene Substituenten aus der Gruppe C₁-C₄-Alkyl, C₁-C₄-Alkoxy, Halogen, Carboxy und Sulfo steht; und Z' β-Sulfatoäthyl, β-Thiosulfatoäthyl, β-Phosphatoäthyl, β-Acyloxyäthyl, β-Halogenäthyl oder Vinyl ist, 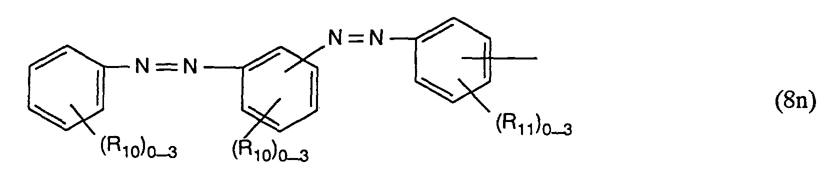 oder 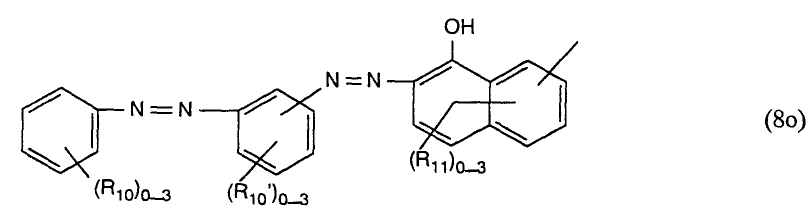 oder 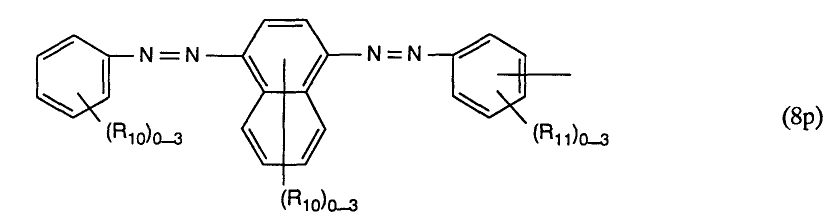 oder 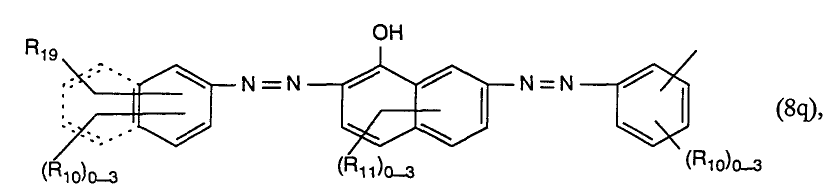 worin R₁₀ für 0 bis 3 gleiche oder verschiedene Substituenten aus der Gruppe C₁-C₄-Alkyl, C₁-C₄-Alkoxy, Halogen, Carboxy und Sulfo, R₁₀' die für R₁₀ angegebenen Bedeutungen hat und zusätzlich C₁-C₄-Hydroxyalkoxy oder C₁-C₄-Sulfatoalkoxy bedeuten kann, R₁₁ für 0 bis 3 gleiche oder verschiedene Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo steht und R₁₉ Wasserstoff oder einen Rest der Formel -SO₂Z', -NH-CO-(CH₂)₂₋₃-SO₂Z', -NH-CO-C(Hal)=CH₂ oder -NH-CO-CH(Hal)-CH₂-Hal bedeutet, wobei Z' β-Sulfatoäthyl, β-Thiosulfatoäthyl, β-Phosphatoäthyl, β-Acyloxyäthyl, β-Halogenäthyl oder Vinyl und Hal Halogen ist, 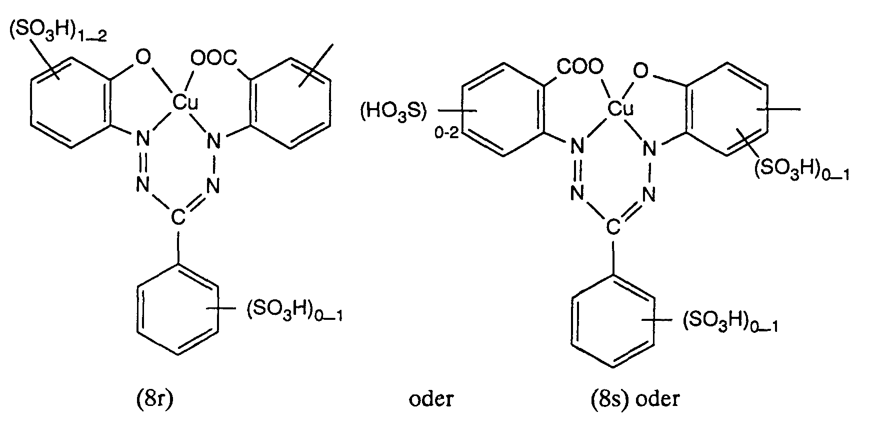 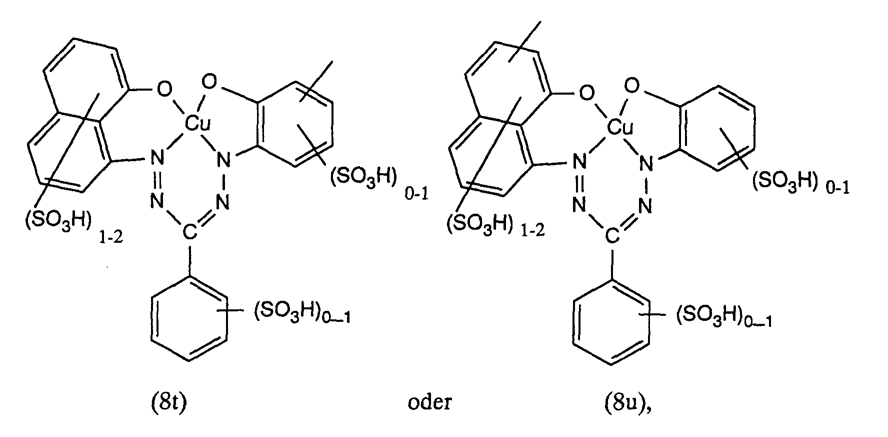 worin die Benzolkerne keine weiteren Substituenten enthalten oder durch C₁-C₄-Alkyl, C₁-C₄-Alkoxy, C₁-C₄-Alkylsulfonyl, Halogen oder Carboxy weitersubstituiert sind, 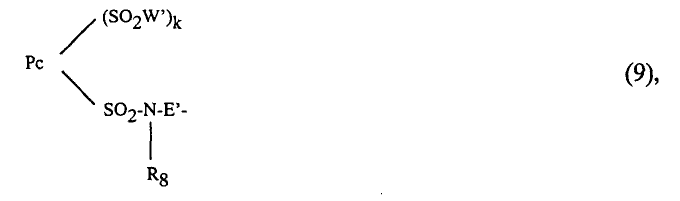 worin Pc der Rest eines Metallphthalocyanins, insbesondere der Rest eines Kupfer- oder Nickelphthalocyanins, ist; W' -OH und/oder -NR₉R₉'; R₉ und R₉' unabhängig voneinander Wasserstoff oder gegebenenfalls durch Hydroxy oder Sulfo substituiertes C₁-C₄-Alkyl; R₈ Wasserstoff oder C₁-C₄-Alkyl; E' ein gegebenenfalls durch C₁-C₄-Alkyl, Halogen, Carboxy oder Sulfo substituierter Phenylenrest oder ein C₂-C₆-Alkylenrest; und k 1 bis 3 ist, 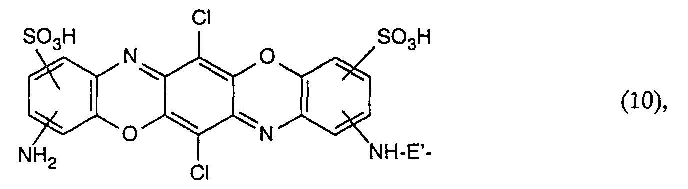 worin E' ein gegebenenfalls durch C₁-C₄-Alkyl, Halogen, Carboxy oder Sulfo substituierter Phenylenrest oder ein C₂-C₆-Alkylenrest ist und die äusseren Benzolringe in der Formel (10) keine weiteren Substituenten enthalten oder durch C₁-C₄-Alkyl, C₁-C₄-Alkoxy, Acetylamino, Nitro, Halogen, Carboxy, Sulfo oder -SO₂-Z' weitersubstituiert sind, wobei Z' β-Sulfatoethyl, β-Thiosulfatoethyl, β-Phosphatoethyl, β-Acyloxyethyl, β-Halogenethyl oder Vinyl ist, oder 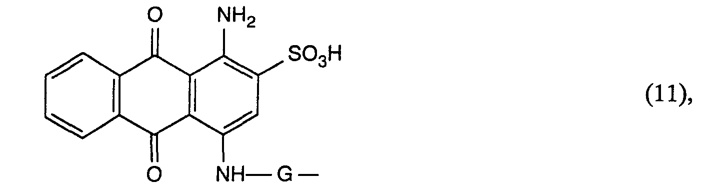 worin G ein Phenylen-, Cyclohexylen-, Phenylenmethylen- oder C₂-C₆-Alkylenrest ist, wobei der Anthrachinonkern keine weiteren Substituenten enthält oder durch eine weitere Sulfogruppe substituiert ist, und G als Phenylrest unsubstituiert oder durch C₁-C₄-Alkyl, C₁-C₄-Alkoxy, Halogen, Carboxy oder Sulfo substituiert ist, sind.

10. Farbstoffe gemäss einem der Ansprüche 1 bis 9, dadurch gekennzeichnet, dass die Reste A₁ und A₂ jeweils mindestens eine Sulfogruppe enthalten.

11. Farbstoffe gemäss einem der Ansprüche 1 bis 10, dadurch gekennzeichnet, dass A₁ und A₂ identische Bedeutungen haben.

12. Farbstoffmischungen, dadurch gekennzeichnet, dass sie mindestens zwei Farbstoffe gemäss einem der Ansprüche 1 bis 11 enthalten.

13. Farbstoffmischungen gemäss Anspruch 12, dadurch gekennzeichnet, dass sich die genannten Farbstoffe nur hinsichtlich der Zahl n unterscheiden.

14. Verfahren zur Herstellung von Farbstoffen gemäss Anspruch 1, dadurch gekennzeichnet, dass man mindestens einen Rest der Formeln
A₁-N(R₁)H (12a) und A₂-N(R₄)H (12b)
oder entsprechende Farbstoffvorprodukte, mindestens eine Halogentriazinverbindung und mindestens ein Diamin der Formel 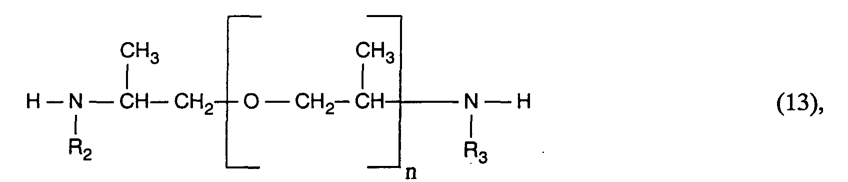 sowie gegebenenfalls mindestens eine Verbindung der Formeln
Y₁-H (14a) und Y₂-H (14b)
in beliebiger Reihenfolge miteinander umsetzt, wobei A₁, A₂, R₁, R₂, R₃, R₄ und n die in Anspruch 1 angegebenen Bedeutungen haben und Y₁ und Y₂ unabhängig voneinander Carboxypyridinium, gegebenenfalls substituiertes Amino oder einen über ein Stickstoffatom gebundenen heterocyclischen Rest bedeuten, wobei man gegebenenfalls eine weitere Umwandlungsreaktion anschliesst und, im Falle der Verwendung von Farbstoffvorprodukten, die erhaltenen Zwischenprodukte in die gewünschten Farbstoffe überführt.

15. Verwendung der Farbstoffe gemäss einem der Ansprüche 1 bis 11 bzw. der Farbstoffmischungen gemäss Anspruch 12 oder 13 zum Färben oder Bedrucken von hydroxylgruppenhaltigen oder stickstoffhaltigen Fasermaterialien.

16. Verwendung gemäss Anspruch 15 zum Färben oder Bedrucken von cellulosehaltigen Fasermaterialien oder natürlichen oder synthetischen Polyamidfasermaterialien.

## Claims

1. A dye of the formula 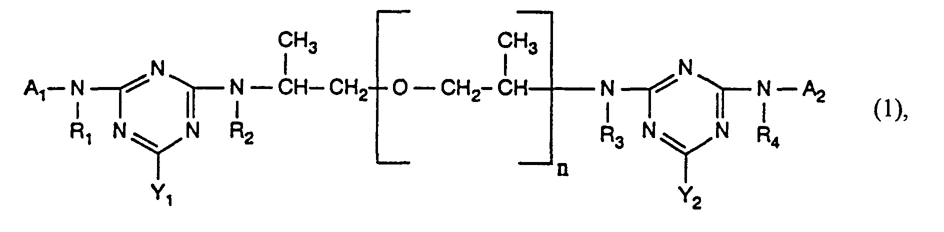 in which
A₁ and A₂ independently of one another are the radical of a monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylene-tetracarbimide dye,
R₁, R₂, R₃ and R₄ independently of one another are hydrogen or substituted or unsubstituted C₁-C₄alkyl,
Y₁ and Y₂ independently of one another are halogen, carboxypyridinium, substituted or unsubstituted amino or a heterocyclic radical bonded *via* a nitrogen atom, and
n is a number from 1 to 7.

2. A dye according to claim 1, in which Y₁ and Y₂ independently of one another are fluorine, chlorine, carboxypyridinium, amino, N-mono- or N,N-di-C₁-C₄alkylamino which is unsubstituted or substituted in the alkyl part by hydroxyl, sulfo, sulfato, carboxyl, C₁-C₄alkoxy, C₁-C₄hydroxyalkoxy or by piperidin-1-yl, C₅-C₇cycloalkylamino which is unsubstituted or substituted in the cycloalkyl ring by C₁-C₄alkyl, phenylamino or N-C₁-C₄alkyl-N-phenylamino which is unsubstituted or substituted in the phenyl ring by C₁-C₄alkyl, C₁-C₄alkoxy, carboxyl, sulfo or by halogen, morpholino or piperidin-1-yl.

3. A dye according to claim 1 or 2, in which Y₁ and Y₂ independently of one another are fluorine or chlorine.

4. A dye according to any one of claims 1 to 3, in which R₁, R₂, R₃ and R₄ independently of one another are hydrogen, methyl or ethyl, in particular hydrogen.

5. A dye according to any one of claims 1 to 4, in which n is a number from 2 to 6.

6. A dye according to any one of claims 1 to 5, in which n is the number 2, 3, 4 or 5.

7. A dye according to any one of claims 1 to 6, in which n is the number 2 or 3.

8. A dye according to any one of claims 1 to 7, in which A₁ and A₂ independently of one another are the radical of a monoazo, disazo, anthraquinone, dioxazine, phthalocyanine or formazan dye.

9. A dye according to any one of claims 1 to 8, in which A₁ and A₂ independently of one another are radicals of the formulae 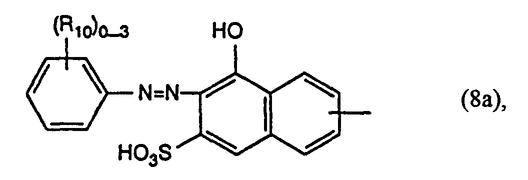 in which R₁₀ is from 0 to 3 identical or different substituents from the group consisting of C₁-C₄alkyl, C₁-C₄alkoxy, halogen, carboxyl and sulfo, 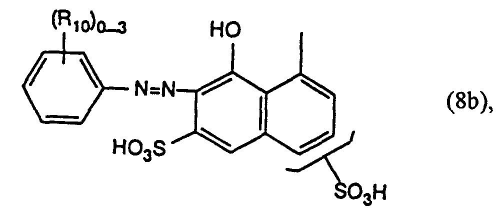 in which R₁₀ is from 0 to 3 identical or different substituents from the group consisting of C₁-C₄alkyl, C₁-C₄alkoxy, halogen, carboxyl and sulfo, 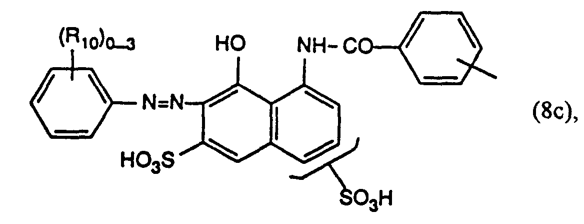 in which R₁₀ is from 0 to 3 identical or different substituents from the group consisting of C₁-C₄alkyl, C₁-C₄alkoxy, halogen, carboxyl and sulfo, 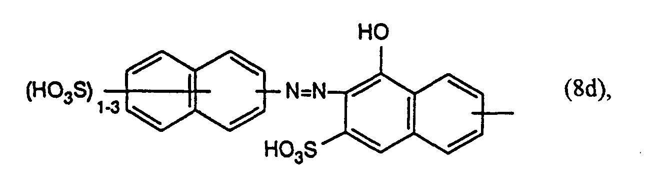 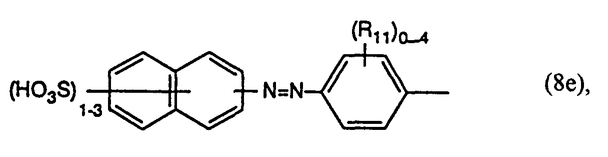 in which R₁₁ is from 0 to 4 identical or different substituents from the group consisting of halogen, nitro, cyano, trifluoromethyl, sulfamoyl, carbamoyl, C₁-C₄alkyl, C₁-C₄alkoxy, amino, acetylamino, ureido, hydroxyl, carboxyl, sulfomethyl and sulfo, 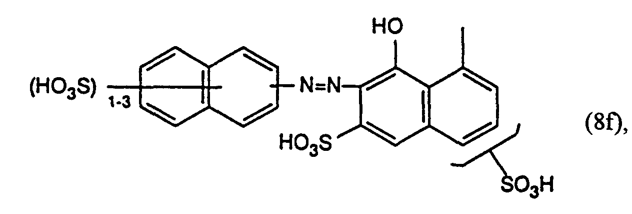 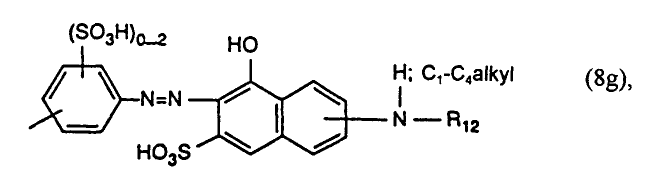 in which R₁₂ is C₁-C₄alkanoyl, benzoyl or a halotriazinyl radical which is unsubstituted or further substituted, 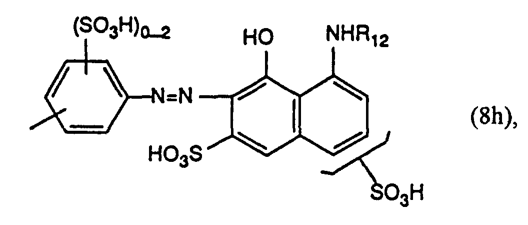 in which R₁₂ is C₁-C₄alkanoyl, benzoyl or a halotriazinyl radical which is unsubstituted or further substituted, 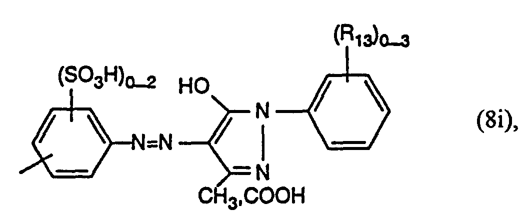 in which R₁₃ is from 0 to 3 identical or different substituents from the group consisting of C₁-C₄alkyl, C₁-C₄alkoxy, halogen, carboxyl and sulfo, 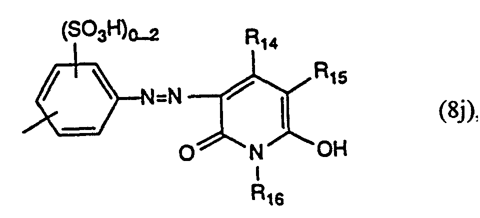 in which R₁₄ and R₁₆ independently of one another are hydrogen, C₁-C₄alkyl or phenyl, and R₁₅ is hydrogen, cyano, carbamoyl or sulfomethyl, 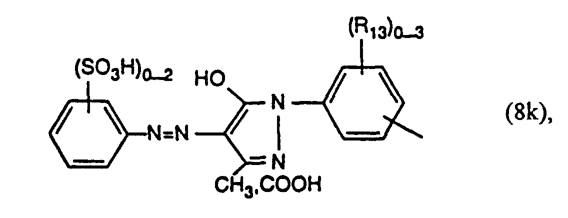 in which R₁₃ is from 0 to 3 identical or different substituents from the group consisting of C₁-C₄alkyl, C₁-C₄alkoxy, halogen, carboxyl and sulfo, 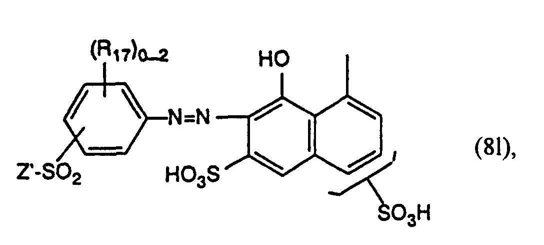 in which R₁₇ is from 0 to 2 identical or different substituents from the group consisting of C₁-C₄alkyl, C₁-C₄alkoxy, halogen, carboxyl and sulfo; and Z' is β-sulfatoethyl, β-thiosulfatoethyl, β-phosphatoethyl, β-acyloxyethyl, β-haloethyl or vinyl, 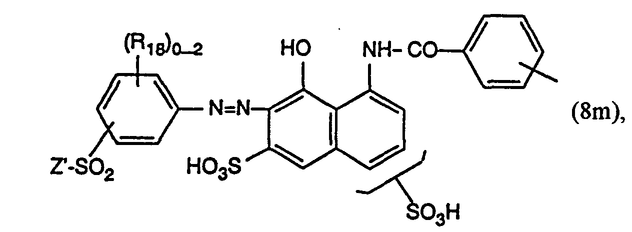 in which R₁₈ is from 0 to 2 identical or different substituents from the group consisting of C₁-C₄alkyl, C₁-C₄alkoxy, halogen, carboxyl and sulfo; and Z' is β-sulfatoethyl, β-thiosulfatoethyl, β-phosphatoethyl, β-acyloxyethyl, β-haloethyl or vinyl, 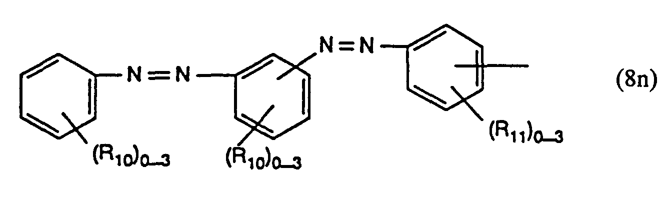 or 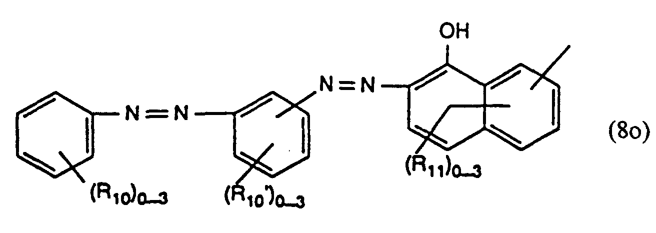 or 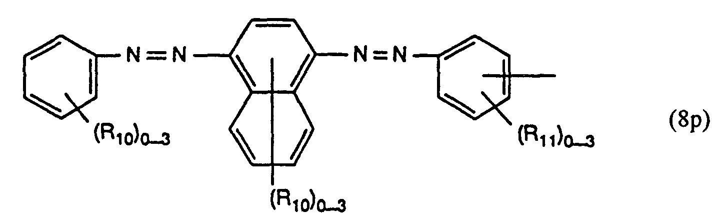 or 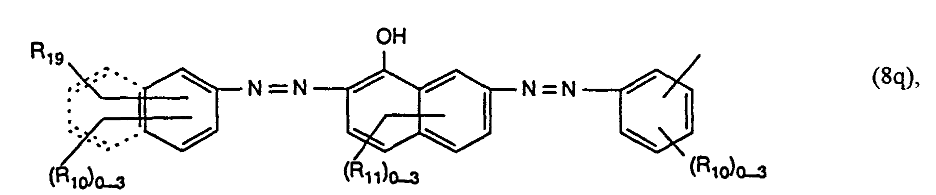 in which R₁₀ is from 0 to 3 identical or different substituents from the group consisting of C₁-C₄alkyl, C₁-C₄alkoxy, halogen, carboxyl and sulfo, R₁₀' is as defined for R₁₀ and can additionally be C₁-C₄hydroxyalkoxy or C₁-C₄sulfatoalkoxy, R₁₁ is from 0 to 3 identical or different substituents from the group consisting of halogen, nitro, cyano, trifluoromethyl, sulfamoyl, carbamoyl, C₁-C₄alkyl, C₁-C₄alkoxy, amino, acetylamino, ureido, hydroxyl, carboxyl, sulfomethyl and sulfo, and R₁₉ is hydrogen or a radical of the formula -SO₂Z', -NH-CO-(CH₂)₂₋₃-SO₂Z', -NH-CO-C(Hal)=CH₂ or -NH-CO-CH(Hal)-CH₂-Hal, in which Z' is β-sulfatoethyl, β-thiosulfatoethyl, β-phosphatoethyl, β-acyloxyethyl, β-haloethyl or vinyl and Hal is halogen, 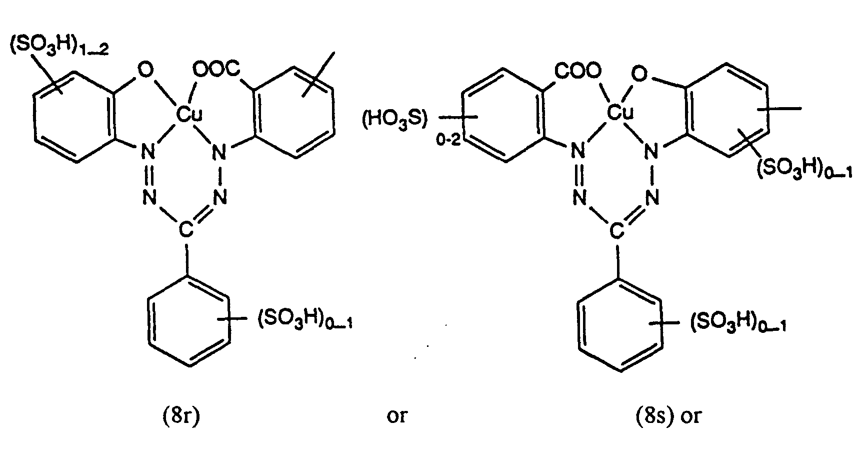 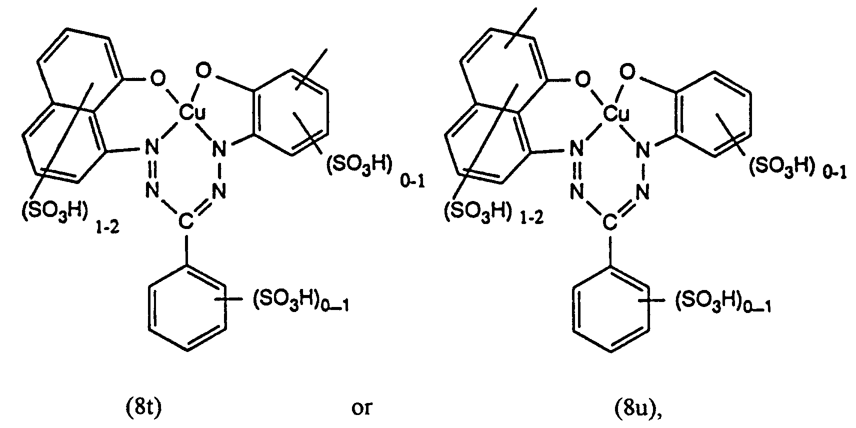 in which the benzene nuclei contain no further substituents or are further substituted by C₁-C₄alkyl, C₁-C₄alkoxy, C₁-C₄alkylsulfonyl, halogen or by carboxyl, 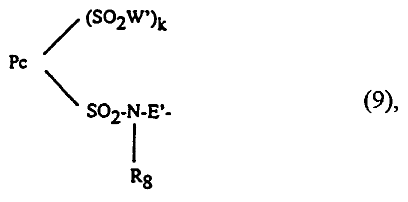 in which Pc is the radical of a metal phthalocyanine, in particular the radical of a copper or nickel phthalocyanine; W' is -OH and/or -NR₉R₉'; R₉ and R₉' independently of one another are hydrogen or C₁-C₄alkyl which is unsubstituted or substituted by hydroxyl or by sulfo; R₈ is hydrogen or C₁-C₄alkyl; E' is a phenylene radical which is unsubstituted or substituted by C₁-C₄alkyl, halogen, carboxyl or by sulfo, or is a C₂-C₆alkylene radical; and k is from 1 to 3, 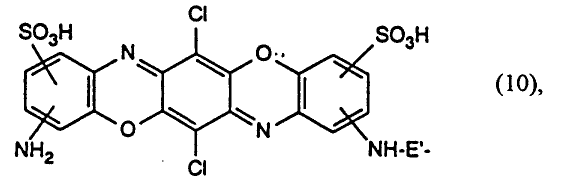 in which E' is a phenylene radical which is unsubstituted or substituted by C₁-C₄alkyl, halogen, carboxyl or by sulfo, or is a C₂-C₆alkylene radical, and the outer benzene rings in the formula (10) contain no further substituents or are further substituted by C₁-C₄alkyl, C₁-C₄-alkoxy, acetylamino, nitro, halogen, carboxyl, sulfo or by -SO₂-Z', in which Z' is β-sulfatoethyl, β-thiosulfatoethyl, β-phosphatoethyl, β-acyloxyethyl, β-haloethyl or vinyl, or 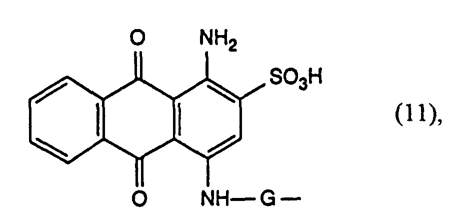 in which G is a phenylene, cyclohexylene, phenylenemethylene or C₂-C₆alkylene radical, where the anthraquinone nucleus contains no further substituents or is substituted by a further sulfo group, and a phenyl radical G is unsubstituted or substituted by C₁-C₄alkyl, C₁-C₄-alkoxy, halogen, carboxyl or by sulfo.

10. A dye according to any one of claims 1 to 9, in which the radicals A₁ and A₂ each contain at least one sulfo group.

11. A dye according to any one of claims 1 to 10, in which A₁ and A₂ have identical meanings.

12. A dye mixture which comprises at least two dyes according to any one of claims 1 to 11.

13. A dye mixture according to claim 12, wherein the dyes mentioned differ only in respect of the number n.

14. A process for the preparation of a dye according to claim 1, which comprises reacting with one another in any sequence at least one compound of the formulae
A₁-N(R₁)H (12a) and A₂-N(R₄)H (12b)
or a corresponding dye precursor, at least one halotriazine compound and at least one diamine of the formula 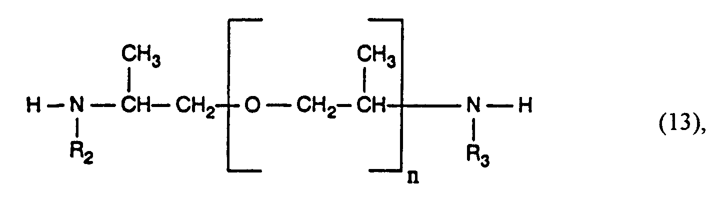 and, if appropriate, at least one compound of the formulae
Y₁-H (14a) and Y₂-H (14b)
in which A₁, A₂, R₁, R₂, R₃, R₄ and n are as defined in claim 1 and Y₁ and Y₂ independently of one another are carboxypyridinium, substituted or unsubstituted amino or a heterocyclic radical bonded *via* a nitrogen atom, if appropriate a further conversion reaction subsequently being carried out and, if a dye precursor is used, the resulting intermediate being converted into the desired dye.

15. The use of a dye according to any one of claims 1 to 11 or of a dye mixture according to claim 12 or 13 for dyeing or printing fibre materials containing hydroxyl groups or nitrogen.

16. The use according to claim 15 for dyeing or printing cellulosic fibre materials or natural or synthetic polyamide fibre materials.

## Revendications

1. Colorants de formule 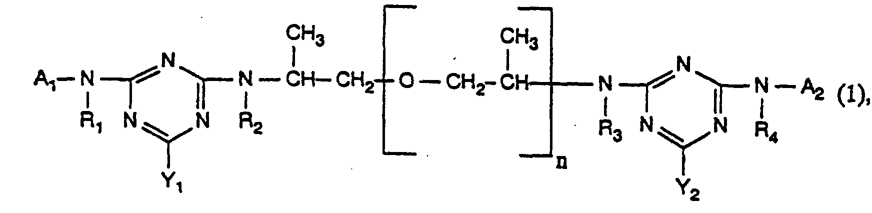 dans laquelle
A₁ et A₂ représentent indépendamment l'un de l'autre le résidu d'un colorant monoazoïque, polyazoïque, complexe azoïque d'un métal, anthraquinone, phtalocyanine, formazan, azométhine, dioxazine, phénazine, stilbène, triphénylméthane, xanthène, thioxanthone, nitroaryle, naphtoquinone, pyrènequinone ou pérylènetétracarbimide,
R₁, R₂, R₃ et R₄ représentent indépendamment les uns des autres un atome d'hydrogène ou un groupe alkyle en C₁-C₄ éventuellement substitué,
Y₁ et Y₂ représentent indépendamment l'un de l'autre un atome d'halogène, un groupe carboxypyridinium, amino éventuellement substitué ou un résidu hétérocyclique lié sur un atome d'azote, et
n est un nombre de 1 à 7.

2. Colorants selon la revendication 1, caractérisés en ce que Y₁ et Y₂ représentent indépendamment l'un de l'autre un atome de fluor, de chlore, un groupe carboxypyridinium, amino, N-mono- ou N,N-dialkyle en C₁ à C₄-amino non substitué ou substitué dans la partie alkyle par un groupe hydroxy, sulfo, sulfato, alcoxy en C₁ à C₄, hydroxyalcoxy en C₁ à C₄ ou pipéridin-1-yle, cycloalkylamino en C₅ à C₇ non substitué ou substitué dans le noyau cycloalkyle par un groupe alkyle en C₁ à C₄, phénylamino ou N-alkyle en C₁ à C₄-N-phénylamino non substitué ou substitué dans le noyau phényle par un groupe alkyle en C₁ à C₄, alcoxy en C₁ à C₄, carboxy, sulfo ou un atome d'halogène, morpholino ou pipéridin-1-yle.

3. Colorants selon l'une des revendications 1 et 2, caractérisées en ce que Y₁ et Y₂ représentent indépendamment l'un de l'autre le fluor ou le brome.

4. Colorants selon l'une des revendications 1 à 3, caractérisés en ce que R₁, R₂, R₃ et R₄ représentent indépendamment les uns des autres un atome d'hydrogène, un groupe méthyle ou éthyle, en particulier un atome d'hydrogène.

5. Colorants selon l'une des revendications 1 à 4, caractérisés en ce que n est un nombre de 2 à 6.

6. Colorants selon l'une des revendications 1 à 5, caractérisés en ce que n est le nombre 2, 3, 4 ou 5.

7. Colorants selon l'une des revendications 1 à 6, caractérisés en ce que n est le nombre 2 ou 3.

8. Colorants selon l'une des revendications 1 à 7, caractérisés en ce que A₁ et A₂ représentent indépendamment l'un de l'autre le résidu d'un colorant monoazoïque, diazoique, anthraquinone, dioxazine, phtalocyanine ou formazan.

9. Colorants selon l'une des revendications 1 à 8, caractérisées en ce que A₁ et A₂ sont indépendamment l'un de l'autre des résidus des formules 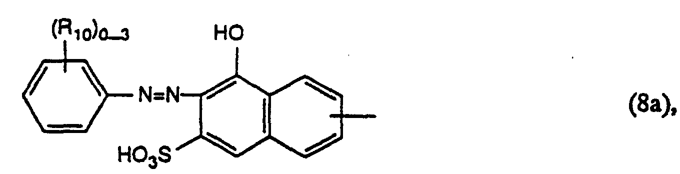 dans laquelle R₁₀ représente de 0 à 3 substituants identiques ou différents choisis parmi un groupe alkyle en C₁-C₄, alcoxy en C₁-C₄, un atome d'halogène, un groupe carboxy ou sulfo, 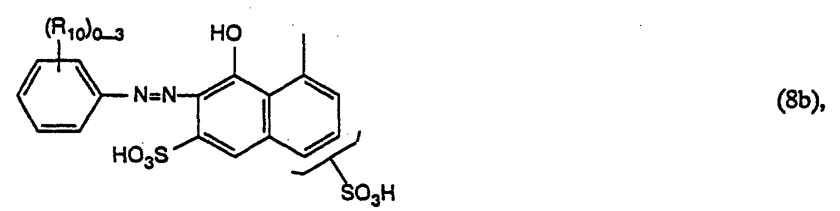 dans laquelle R₁₀ représente de 0 à 3 substituants identiques ou différents choisis parmi un groupe alkyle en C₁-C₄, alcoxy en C₁-C₄, un atome d'halogène, un groupe carboxy ou sulfo, 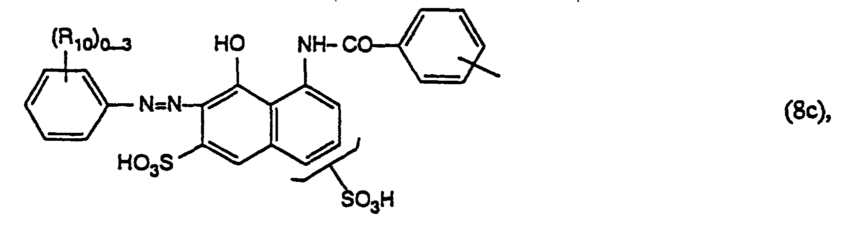 dans laquelle R₁₀ représente de 0 à 3 substituants identiques ou différents choisis parmi un groupe alkyle en C₁-C₄, alcoxy en C₁-C₄, un atome d'halogène, un groupe carboxy ou sulfo, 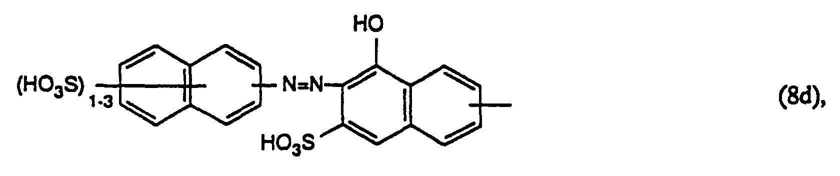 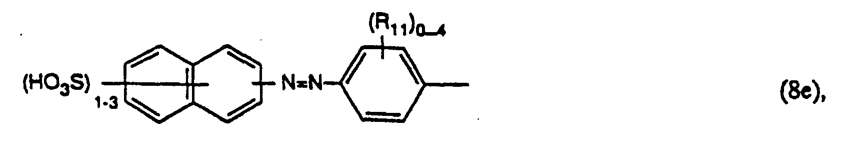 dans lesquelles R₁₁ représente de 0 à 4 substituants identiques ou différents choisis parmi un atome d'halogène, un groupe nitro, cyano, trifluorométhyle, sulfamoyle, carbamoyle, alkyle en C₁-C₄, alcoxy en C₁-C₄, amino, acétylamino, uréido, hydroxy, carboxy, sulfométhyle et sulfo, 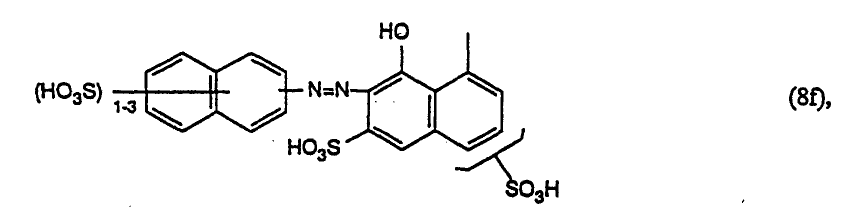 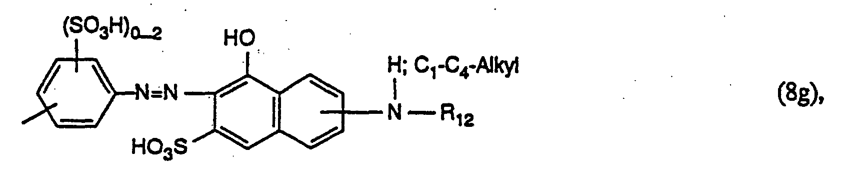 dans lesquelles R₁₂ représente un groupe alcanoyle en C₁-C₄, benzoyle ou un groupe halogénotriazinyle éventuellement encore substitué, 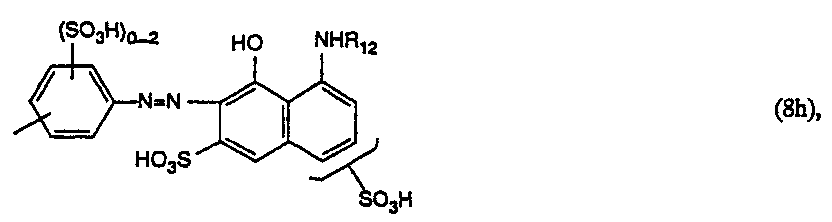 dans laquelle R₁₂ représente un groupe alcanoyle en C₁-C₄, benzoyle ou un groupe halogénotriazinyle éventuellement encore substitué, 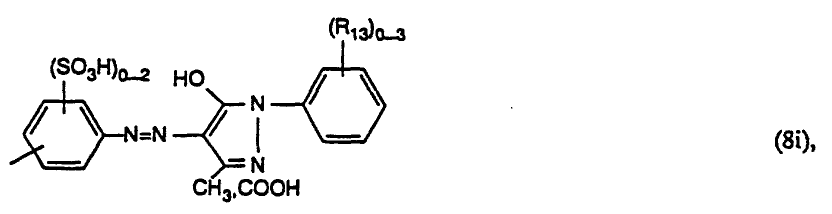 dans laquelle R₁₃ représente de 0 à 3 substituants identiques ou différents choisis parmi un groupe alkyle en C₁-C₄, alcoxy en C₁-C₄, un atome d'halogène, un groupe carboxy ou sulfo, 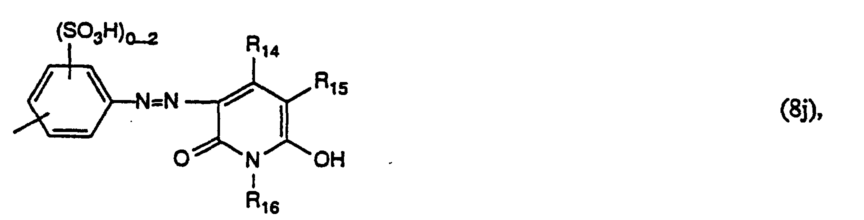 dans laquelle R₁₄ et R₁₆ représentent indépendamment l'un de l'autre un atome d'hydrogène, un groupe alkyle en C₁-C₄ ou phényle, et R₁₅ représente un atome d'hydrogène, un groupe cyano, carbamoyle ou sulfométhyle, 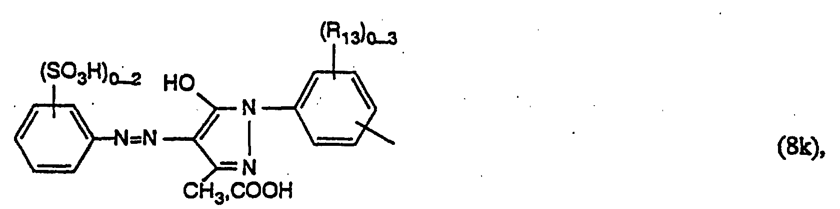 dans laquelle R₁₃ représente de 0 à 3 substituants identiques ou différents choisis parmi un groupe alkyle en C₁-C₄, alcoxy en C₁-C₄, un atome d'halogène, un groupe carboxv ou sulfo, 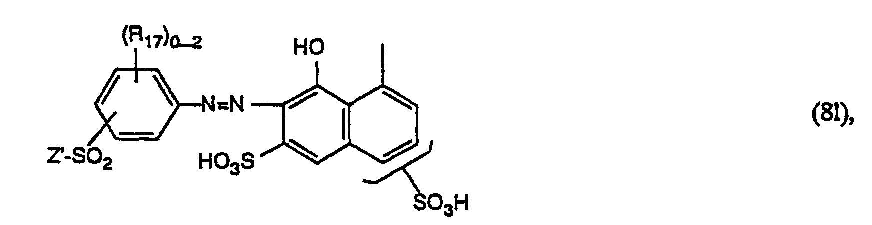 dans laquelle R₁₇ représente de 0 à 2 substituants identiques ou différents choisis parmi un groupe alkyle en C₁-C₄, alcoxy en C₁-C₄, un atome d'halogène, un groupe carboxy ou sulfo; et Z' est un groupe β-sulfatoéthyle, β-thiosulfatoéthyle, β-phosphatoéthyle, β-acyloxyéthyle, β-halogénoéthyle ou vinyle, 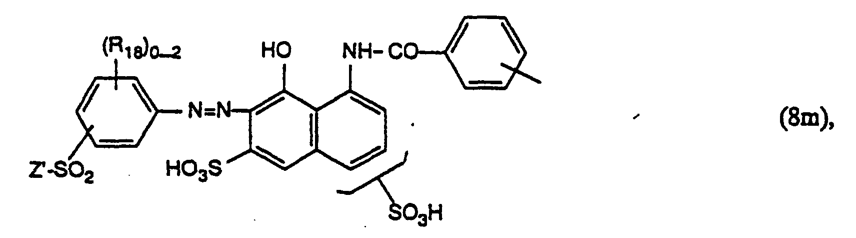 dans laquelle R₁₈ représente de 0 à 2 substituants identiques ou différents choisis parmi un groupe alkyle en C₁-C₄, alcoxy en C₁-C₄, un atome d'halogène, un groupe carboxy ou sulfo ; et Z' est un groupe β-sulfatoéthyle, β-thiosulfatoéthyle, β-phosphatoéthyle, β-acyloxyéthyle, β-halogénoéthyle ou vinyle, 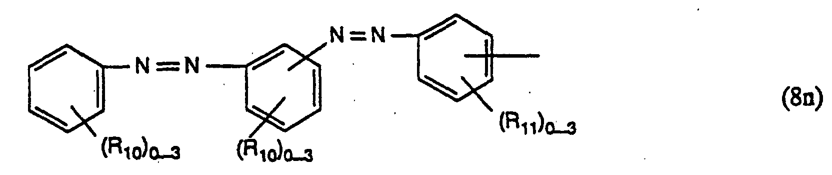 ou 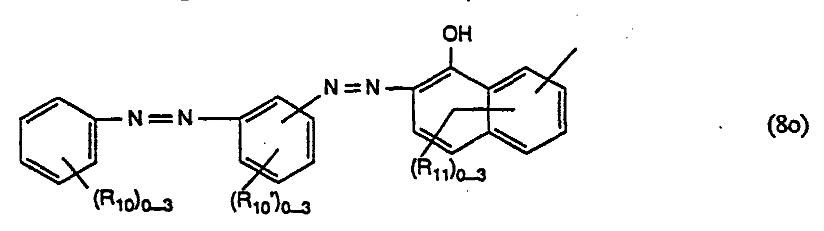 ou 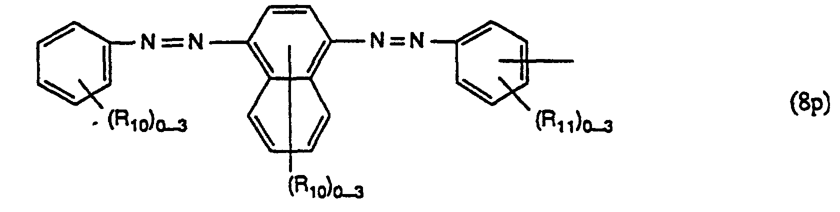 ou 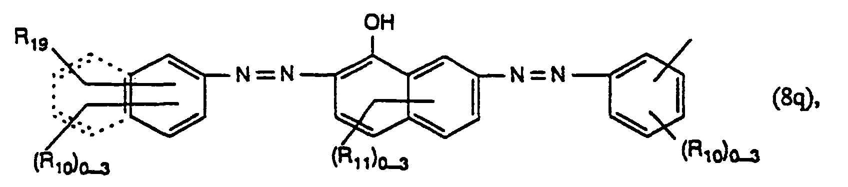 dans lesquelles R₁₀ représente de 0 à 3 substituants identiques ou différents choisis parmi un groupe alkyle en C₁-C₄, alcoxy en C₁-C₄, un atome d'halogène, un groupe carboxy ou sulfo, R₁₀' a les significations indiquées pour R₁₀ et peut représenter en plus un groupe hydroxyalcoxy en C₁-C₄ ou sulfatoalcoxy en C₁-C₄, R₁₁ représente de 1 à 3 substituants identiques ou différents choisis parmi un atome d'halogène, un groupe nitro, cyano, trifluorométhyle, sulfamoyle, carbamoyle, alkyle en C₁-C₄, alcoxy en C₁-C₄, amino, acétylamino, uréido, hydroxy, carboxy, sulfométhyle et sulfo et R₁₉ représente un atome d'hydrogène ou un groupe de formule -SO₂Z', -NH-CO-(CH₂)₂₋₃-SO₂Z', -NH-CO-C(Hal)=CH₂ ou -NH-CO-CH(Hal)-CH₂-Hal, Z' étant un groupe β-sulfatoéthyle, β-thiosulfato-éthyle, β-phosphatoéthyle, β-acyloxyéthyle, β-halogéno-éthyle ou vinyle et Hal étant un atome d'halogène, 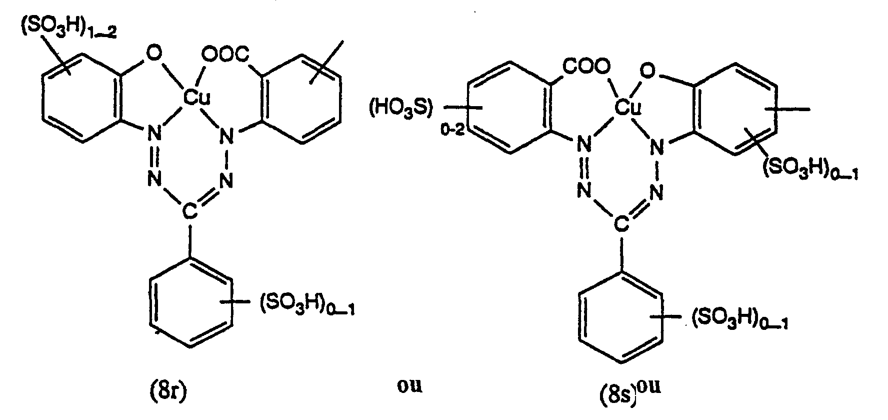 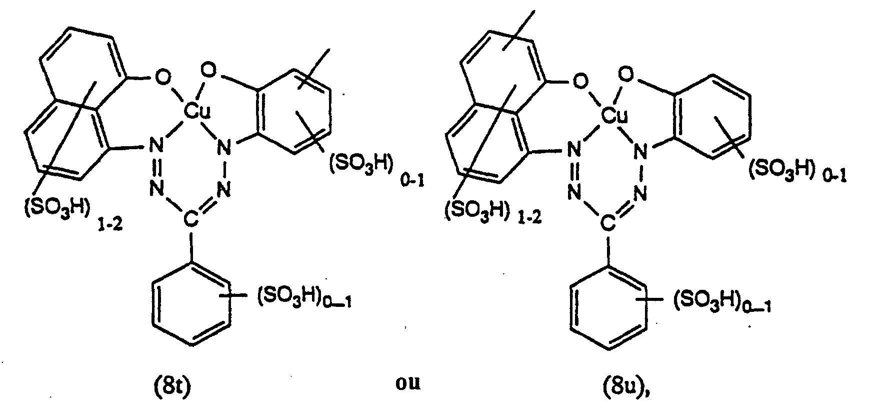 dans lesquelles les noyaux benzéniques ne contiennent pas d'autres substituants ou sont encore substitués par un groupe alkyle en C₁-C₄, alcoxy en C₁-C₄, alkylsulfonyle en C₁-C₄, un atome d'halogène ou un groupe carboxy, 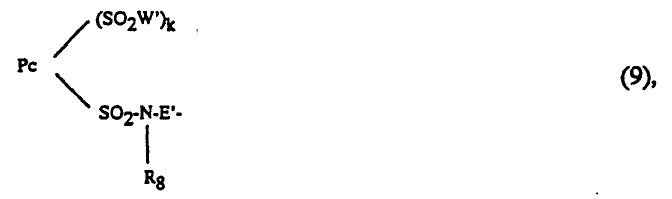 dans laquelle Pc est le résidu d'une phtalocyanine de métal, en particulier le résidu d'une phtalocyanine de cuivre ou de nickel ; W' est -OH et/ou -NR₉R₉'; R₉ et R₉' représentent indépendamment l'un de l'autre un atome d'hydrogène ou un groupe alkyle en C₁-C₄ éventuellement substitué par un groupe hydroxy ou sulfo ; R₈ est un atome d'hydrogène ou un groupe alkyle en C₁-C₄, E' un groupe phénylène éventuellement substitué par un groupe alkyle en C₁-C₄, un atome d'halogène, un groupe carboxy ou sulfo ou représente un groupe alkylène en C₂-C₆ ; et k est 1 à 3, 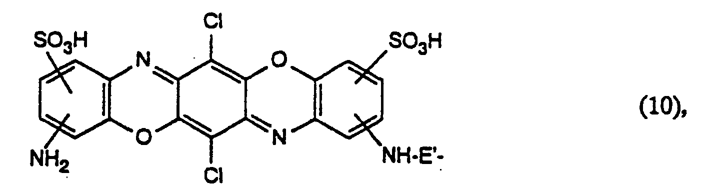 dans laquelle E' est un groupe phénylène éventuellement substitué par un groupe alkyle en C₁-C₄, un atome d'halogène, un groupe carboxy ou sulfo ou un groupe alkylène en C₁-C₄ et les noyaux benzéniques extérieurs dans la formule (10) ne contiennent pas d'autres substituants ou sont encore substitués par un groupe alkyle en C₁-C₄, alcoxy en C₁-C₄, acétylamino, nitro, un atome halogène, un groupe carboxy, sulfo ou -SO₂-Z', dans lequel Z' est un groupe β-sulfatoéthyle, β-thiosulfatoéthyle, β-phosphatoéthyle, β-acyloxyéthyle, β-halogénoéthyle ou vinyle, ou 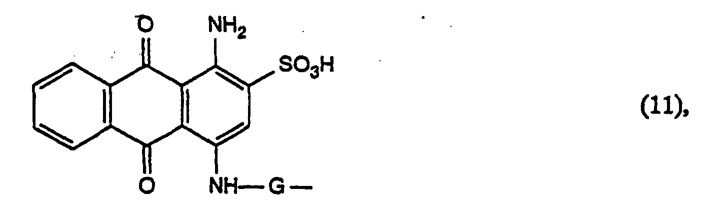 dans laquelle G est un groupe phénylène, cyclohexylène, phénylèneméthylène ou alkylène en C₂-C₆, dans laquelle le noyau anthraquinone ne contient pas d'autres substituants ou peut être substitué par un autre groupe sulfo, et G en tant que résidu de phényle peut être non substitué ou substitué par un groupe alkyle en C₁-C₄, alcoxy en C₁-C₄, un atome d'halogène, un groupe carboxy ou sulfo.

10. Colorants selon l'une des revendications 1 à 9, caractérisés en ce que les groupes A₁ et A₂ contiennent respectivement au moins un groupe sulfo.

11. Colorants selon l'une des revendications 1 à 10, caractérisés en ce que les groupes A₁ et A₂ ont des significations identiques.

12. Mélanges de colorants, caractérisés en ce qu'ils contiennent au moins deux colorants selon l'une des revendications 1 à 11.

13. Mélanges de colorants selon la revendication 12, caractérisés en ce que les colorants mentionnés se distinguent seulement par le nombre n.

14. Procédé de préparation de colorants selon la revendication 1, caractérisé en ce qu'on met à réagir un groupe des formules
**A**_{**1**}**-N(R**_{**1**}**)H (12a) et A**_{**2**}**-N(R**_{**4**}**)H (12b)**
ou des précurseurs de colorants correspondants, au moins un composé halogénotriazine et au moins une diamine de formule 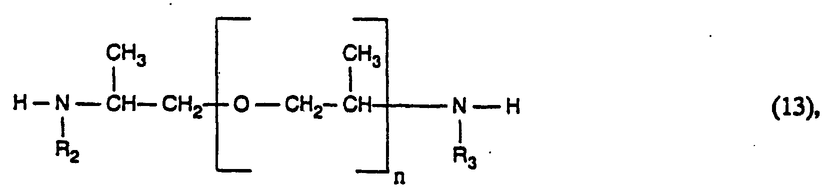 ainsi qu'éventuellement au moins un composé des formules
**Y**^{**1**}**-H (14a) et Y**^{**2**}**-H (14b)**
ensemble dans l'ordre préféré, formules dans lesquelles A₁, A₂, R₁, R₂, R₃, R₄ et n ont les significations indiquées à la revendication 1 et Y₁ et Y₂ représentent indépendamment l'un de l'autre un groupe carboxypyridinium, amino éventuellement substitué ou un résidu hétérocyclique lié par un atome d'azote, on ajoute éventuellement une autre réaction de transformation et, dans le cas de l'utilisation de précurseurs de colorants, on transforme les produits intermédiaires obtenus en colorants souhaités.

15. Utilisation des colorants selon l'une des revendications 1 à 11 ou des mélanges de colorants obtenus selon la revendication 12 ou 13 pour la teinture ou l'impression de matériaux fibreux contenant des groupes hydroxyle ou contenant de l'azote.

16. Utilisation selon la revendication 15 pour la teinture ou l'impression de matériaux fibreux contenant de la cellulose ou de matériaux de fibres de polyamide naturels ou synthétiques.
